Europäisches Patentamt

European Patent Office

Office européen des brevets

(19)

(11) **EP 0 988 538 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(21) Anmeldenummer: **98936189.4**

(22) Anmeldetag: **12.06.1998**

(51) Int Cl.⁷: **G01N 29/02**, G01N 11/16

(86) Internationale Anmeldenummer:
**PCT/DE98/01645**

(87) Internationale Veröffentlichungsnummer:
**WO 98/57163 (17.12.1998 Gazette 1998/50)**

(54) **MESSEN PHYSIKALISCHER ODER TECHNISCHER GRÖSSEN VISKOSER MEDIEN MITTELS RAYLEIGH-WELLEN**

MEASUREMENT OF PHYSICAL OR TECHNICAL VALUES OF VISCOUS MEDIA BY MEANS OF RAYLEIGH WAVES

MESURE DE GRANDEURS PHYSIQUES OU TECHNIQUES RELATIVES A DES MILIEUX VISQUEUX AU MOYEN D'ONDES DE RAYLEIGH

(84) Benannte Vertragsstaaten:
**AT CH DE GB LI NL**

(30) Priorität: **13.06.1997 DE 19725012**
**14.06.1997 DE 19725290**

(43) Veröffentlichungstag der Anmeldung:
**29.03.2000 Patentblatt 2000/13**

(73) Patentinhaber: **Brose Fahrzeugteile GmbH & Co. KG Coburg**
**96450 Coburg (DE)**

(72) Erfinder:
• **BRÜTTING, Christian**
**D-95615 Marktredwitz (DE)**
• **LINDNER, Gerhard**
**D-96450 Coburg (DE)**
• **KESSLER, Michael**
**D-63069 Offenbach am Main (DE)**
• **KLIPPERT, Uwe**
**D-36280 Oberaula (DE)**
• **GALLIEN, Arnold**
**D-96450 Coburg (DE)**

(74) Vertreter: **Baumgärtel, Gunnar, Dr. et al**
**Patentanwälte Maikowski & Ninnemann,**
**Postfach 15 09 20**
**10671 Berlin (DE)**

(56) Entgegenhaltungen:
**EP-A- 0 542 469      EP-A- 0 621 462**
**WO-A-92/01931      DD-A- 126 118**
**SU-A- 1 155 915      US-A- 3 743 973**
**US-A- 4 691 714      US-A- 4 767 719**
**US-A- 5 214 966**

• **PATENT ABSTRACTS OF JAPAN vol. 018, no. 384 (P-1772), 19. Juli 1994 & JP 06 109710 A (MARUYASU KOGYO KK), 22. April 1994**
• **PATENT ABSTRACTS OF JAPAN vol. 097, no. 010, 31. Oktober 1997 & JP 09 145692 A (YAZAKI CORP), 6. Juni 1997 in der Anmeldung erwähnt**
• **HUMPHRYS R.F. ET AL: 'Acoustic Bulk-Surface-Wave Transducer' ELECTRONICS LETTERS Bd. 5, Nr. 9, 01 Mai 1969, UK, Seiten 175 - 176**
• **JAKOBY B. ET AL: 'Properties of Love waves: applications in sensors' SMART MATER. STRUCT. Bd. 6, Nr. 6, 01 Dezember 1997, UK, Seiten 668 - 679**
• **GRATE J.W. ET AL.: 'Acoustic Wave Microsensors' ANALYTICAL CHEMISTRY Bd. 65, Nr. 21, 01 November 1993, GERMANY, Seiten 940 - 948**
• **MARTIN S.J. ET AL: 'Characterization of SH Acoustic Plate Mode Liquid Sensors' SENSORS AND ACTUATORS Bd. 20, 01 Dezember 1989, SWITZERLAND, Seiten 253 - 268**

- WHITE R.M.: 'Surface Elastic-Wave Propagation and Amplification' IEEE TRANSACTIONS ON ELECTRON DEVICES Bd. 14, Nr. 4, 04 April 1967, USA, Seiten 181 - 189
- CHANG C.-P. ET AL: 'On the Surface-to-Bulk Mode Conversion of Rayleigh Waves' IEEE TRANSACTIONS ON MICROWAVE THEORY AND TECHNIQUES Bd. MTT-21, Nr. 8, 01 August 1973, USA, Seiten 558 - 560
- TRUCKENBRODT E.: "Lehrbuch der angewandten Fluidmechanik", 1988, SPRINGER-VERLAG, BERLIN, HEIDELBERG, NEW YORK, LONDON, PARIS, TOKYO
- KUTTRUFF H. : "Physik und Technik des Ultraschalls", 1988, S. HIRZEL VERLAG STUTTGART , STUTTGART
- RAPP M. ET AL: 'Acoustoelectric Immunosensor Based On Surface Transverse Waves For In Situ Measurements In Water' 7TH INTERNATIONAL CONFERENCE ON SOLID-STATE SENSORS AND ACTUATORS 1993, Seiten 538 - 540

**Beschreibung**

Die Erfindung betrifft ein Verfahren zum Messen physikalischer oder technischer Größen von Flüssigkeiten, einschließlich hochviskoser, teigiger oder pastöser Medien, unter Verwendung eines akustischen Übertragungssystems (Sender-Meßstrecke-Empfänger) mit wenigstens einer von einer Festkörperoberfläche gebildeten Meßstrecke, die mit dem zu vermessenden Medium zumindest teilweise in Kontakt bringbar ist. Darüber hinaus wird eine Vorrichtung zur Durchführung des Verfahrens beschrieben.

Konventionelle Methoden zur Viskositätsmessung erfordern in der Regel die Entnahme einer Probenmenge, die in einer separaten Meßvorrichtung getestet wird. Gebräuchlich sind insbesondere Rotationsviskosimeter und Kugelfallviskosimeter sowie Kapilarviskosimeter, die das Schergefälle in der Flüssigkeit aufgrund der Relativbewegung von wenigstens einer Festkörperoberfläche zur Flüssigkeit ausnutzen. Von Nachteil bei diesen Methoden ist jedoch, daß sie sich nicht in einen technischen Verfahrensprozeß integrieren lassen, so daß große Aufwendungen für eine korrekte Messung betrieben werden müssen. Messungen an Produkten, deren Eigenschaften einer schnellen zeitlichen Veränderung unterliegen oder deren Eigenschaften leicht durch die Probenentnahme oder den Probentransport gestört werden können, sind besonders schwierig und oft mit Fehlern behaftet.

Ein Viskositätssensor, der sich für Online-Messungen eignet, wird in EP 0 527 176 B1 beschrieben. Er besteht aus einem zylindrischen Grundkörper piezoelektrischen Materials, der mit einer Wechselspannungsquelle in Verbindung steht und zu Torsionsschwingungen im Ultraschallbereich (20 ... 100 kHz) angeregt wird. Die Schwingungseigenschaften (z.B. Frequenz) des Grundkörpers werden von der angrenzenden Flüssigkeit verändert und in entsprechend veränderte elektrische Signale gewandelt. Durch Auswertung dieser Signale kann auf die Viskosität geschlossen werden. Diese technische Lösung stellt jedoch hohe Anforderungen an das Material des Grundkörpers und erfordert große Aufwendungen bei der Herstellung geeigneter Materialien und der geometrischen Gestaltung des Grundkörpers.

Darüber hinaus sind aus der wissenschaftlichen und Patentliteratur verschiedene akustische Verfahren und Vorrichtungen bekannt, die sich unter Verwendung von Oberflächenwellen zur Messung physikalischer undloder technischer Größen von Flüssigkeiten eignen. Ihnen ist gemeinsam, daß sie im allgemeinen auf spezielle Materialien (zumeist piezoelektrisches Material, bei dem Sender, Meßstrecke und Empfänger ein einheitliches körperliches Gebilde darstellen) für das Substrat der Meßstrecke eingeschränkt und/oder auf definierte geometrische Bedingungen (dünne Platten) für die Sensorfläche angewiesen sind. Daraus ergeben sich Nachteile für die Anpassungsfähigkeit der vorgeschlagenen Lösungen hinsichtlich ihrer Anpaßbarkeit an gegebene technische Bedingung (z.B. Temperatur, Aggressivität des zu messenden Mediums, konstruktive Parameter, Material der Übertragungsstrecke u.a.)

Durch J. Kondoh, K. Saito, S. Shiokawa, H. Suzuki; Multichannel Shear-Horizontal Surface Acustic Wave Microsensor for Liquid Characterization; 1995 IEEE Ultrasonics Symposium, pp 445-449; ist die Verwendung von Scher-Oberflächenwellen (SH-SAW ⇒ SHEAR HORIZONTAL SURFACE ACOUSTIC WAVE) zur Ermittlung von Stoffeigenschaften in Flüssigkeiten bekannt. Es handelt sich hierbei um eine spezielle Art von Oberflächenwellen, die sich durch Teilchenauslenkungen allein parallel zur wellenführenden Festkörperoberfläche und senkrecht zur Ausbreitungsrichtung auszeichnet. D.h., es treten keine Auslenkungskomponenten der Teilchen senkrecht zur Oberfläche auf. Auch dieser Wellentyp erfordet den Einsatz eines piezoelektrischen Materials (z.B. $LiTaO_3$), wobei die wellenführende Festkörperoberfläche von einem speziellen Kristallschnitt gebildet werden muß.

R.M. White; Silicon Based Ultrasonic Microsensors and Mikropumps; Integrated Ferroelectrics, 1995, vol. 7, pp. 353-358; beschreibt eine Methode zur Messung der Viskosität unter Verwendung von Plattenschwingungen einer nur wenige Mikrometer dünnen Membran auf Siliziumbasis. Derartige Membranstrukturen sind jedoch insbesondere gegenüber mechanischen Belastungen sehr empfindlich. Plattenschwingungen zeichen sich zum einen durch Teilchenbewegungen parallel zur Oberfläche in Ausbreitungsrichtung und zum anderen durch Teilchenbewegungen senkrecht zur Oberfläche aus. Für die Viskositätmessung ist jedoch nur die erste der genannten Teilchenbewegungen nutzbar.

Aus JP 09145692 A ist ein Wassertropfensensor für Windschutzscheiben und Seitenspiegel von Kraftfahrzeugen oder dergleichen bekannt. Er besteht im wesentlichen aus einem Oberflächenwellen erzeugenden Element (Sender) und einem dazu beabstandeten, auf der Oberfläche des zu überwachenden Körpers angeordneten Oberflächenwellen empfangenden Element (Empfänger). Sobald Wassertropfen in den Ausbreitungsbereich der Oberflächenwellen zwischen Sender und Empfänger gelangen kommt es zur Streuung der Oberflächenwellen und zur Absorption eines Teils der Wellenenergie. Mittels eines elektronischen Schaltkreises kann eine Auswertung der Dämpfung des Signals vorgenommen werden. Dadurch soll es möglich sein, einen Scheibenwischer in Abhängigkeit der auf einer Windschutzscheibe befindlichen Wassermenge zu steuern.

Der beschriebene Tropfensensor kann im wesentlichen nur als Schalter eingesetzt werden, der aufgrund der Erkennung der Anwesenheit oder Abwesenheit von Wasser vorgesehene Reaktionen auslöst bzw. nicht auslöst. Wegen der Eigenschaft von Oberflächenwellen, in angrenzende Flüssigkeiten auszukoppeln, muß das Meßergebnis - also der Grad der Dämpfung des Signals - im hohen Maße von der Verteilung des Wasser auf der sensierten Oberfläche abhängen. Deshalb ist bei einer ruhenden Oberfläche, bei der die Tropfen unter Belassung von Ausbreitungspfaden für die Oberflächenwellen lokale Wasseransammlungen bilden, mit einer geringeren Dämpfung zu rechnen, als bei einer bewegten Oberfläche mit der gleichen Wassermenge, bei der die Tropfen zu einer mehr oder weniger gleichmäßigen Schicht verteilt werden. Sollten die auf die Wassertropfen wirkenden dynamischen Kräfte so groß sein, daß sich auf der Oberfläche nur eine Flüssigkeitsschichtdicke aufbauen kann, die kleiner als ein Viertel der Wellenlänge der Kompressionswelle in der Flüssigkeit ist, dann würde der gewünschte Dämpfungseffekt ausbleiben.

Wie gezeigt werden konnte, ist das Meßsignal des Tropfensensors als ein Summenwert aufzufassen, der eine Differenzierung zwischen den verschiedenen Wechselwirkungen bei seinem Zustandekommen nicht erlaubt. Erst recht sind quantitative Rückschlüsse auf konkrete physikalische oder technische Größen, wie z. B. die Viskosität von Flüssigkeiten, unmöglich. Andererseits muß bei einer vergleichsweise starken, volumenreichen Beaufschlagung der Meßstrecke mit Wasser damit gerechnet werden, daß die eingesetzte Wellenenergie permanent nahezu vollständig ausgekoppelt wird, so daß ein quantitativ auswertbares Meßsignal nicht zur Verfügung steht.

Aus der EP 0 542 469 A1 ist ein Sensor zur Bestimmung der Viskosität einer Flüssigkeit bekannt, der ein eine Sensoroberfläche (Meßstrecke) bildendes Substrat umfaßt, das über seine Sensoroberfläche mit der zu untersuchenden Flüssigkeit in Kontakt bringbar ist und auf dessen Sensoroberfläche akustische Energie in Form von Oberflächenwellen (STW) zur Verfügung gestellt wird, deren Wellenkomponenten sich überwiegend innerhalb der Oberfläche selbst erstrecken und lediglich eine vernachlässigbar kleine, sich in die Flüssigkeit erstreckende Vertikalkomponente aufweisen. Durch die Verwendung derartiger Wellen, insbesondere horizontaler Scherwellen, soll vermieden werden, daß die Oberflächenwellen während ihrer Wechselwirkung mit der zu untersuchenden Flüssigkeit zu stark gedämpft werden und daher kein auswertbares Signal erzeugen können.

Aus der US-A- 4,691,714 ist eine Einrichtung zur gleichzeitigen Bestimmung der Viskosität und Temperatur einer Flüssigkeit bekannt. Diese Einrichtung umfaßt eine Platte, in der sich einerseits Volumenwellen ausbreiten, die zur Bestimmung der Viskosität der zu untersuchenden Flüssigkeit auf einer ersten, mit der Flüssigkeit in Kontakt bringbaren Oberfläche mit der Flüssigkeit wechselwirken, und auf deren der ersten Oberfläche abgewandter, zweiter Oberfläche sich. akustische Oberflächenwellen erstrecken deren Ausbreitungsgeschwindigkeit von der Temperatur des Stabes abhängt. Da die Temperatur des Stabes wiederum durch die Temperatur der zu untersuchenden Flüssigkeit beeinflußt wird, kann hierdurch indirekt die Temperatur der zu untersuchenden Flüssigkeit ermittelt werden.

Der Erfindung liegt die Aufgabe zugrunde, ein Verfahren und eine Vorrichtung zum Messen physikalischer oder technischer Größen von Flüssigkeiten, einschließlich hochviskoser, teigiger oder pastöser Medien, zu entwickeln, das unter Verwendung eines akustischen Übertragungssystems mit wenigstens einer von einer Festkörperoberfläche gebildeten Meßstrecke in einfacher Weise an unterschiedlichste Bedingungen konkreter technischer Anwendungsfälle anpaßbar ist. Dies soll insbesondere durch eine Vielfalt von einsetzbaren Substratmaterialien für die Meßstrecke, eine im wesentlichen freie Gestaltbarkeit der geometrischen Parameter des Übertragungssystems und die Möglichkeit unterschiedlicher Anregungsmechanismen zur Erzeugung akustischer Wellen erreicht werden.

Erfindungsgemäß wird die Aufgabe durch die Merkmale der Patentansprüche 1, 10, 19, 31, 38, 41, 42 und 57 oder durch eine Kombination dieser Ansprüche gelöst. Die abhängigen Patentansprüche geben Varianten der Erfindung an.

Demnach wird zumindest ein Teil der in der Meßstrecke übertragenen akustischen Energie in Form von Rayleighwellen zur Verfügung gestellt, wobei sich die Rayleighwelle auf einer Meßstrecke aus nichtpiezoelektrischem Material über wenigstens $\lambda/8$, vorzugsweise jedoch mehr als $2\lambda$ ausbreitet. Zumindest ein zur Messung ausreichender Teil der nach dem Durchgang der Rayleighwelle durch eine oder mehrere Meßstrecken in der Meßvorrichtung verbliebene Wellenenergie wird nach dem Prinzip eines Wellenleiters zum Empfänger geleitet, wobei der wellenleitende Charakter zumindest am Anfang der ersten Meßstrecke (falls die Vorrichtung mehrere Meßstrecken aufweist) beginnt und bis zum Empfänger erhalten bleibt. D.h., die Meßstrecke und der Übertragungsweg zwischen Meßstrecke und Empfänger muß wellenleitenden Charakter aufweisen. Dieses schließt sowohl die möglichst verlustarme Weiterleitung des in der Meßstrecke gewonnenen Nutzsignals als auch die Abschirmung vor unerwünschten Störeinflüssen ein. Die Beeinflussung des Nutzsignals durch die wellenleitenden Eigenschaften des akustischen Übertragungssystems sollten vorzugsweise bekannt, idealerweise optimiert sein.

Erfindungsgemäß wird der wellenleitende Charakter zumindest zwischen dem Beginn der Meßstrecke und dem Empfänger vorgesehen, da sonst durch die Auskopplung von Energie durch die Vertikalkomponente in die angrenzende Flüssigkeit auch die durch die Wechselwirkung der Rayleihgwelle mit der Flüssigkeit gewonnene Information über die zu messenden Größen der Flüssigkeit verlorengeht und deshalb nicht mehr einer Auswertung zugeführt werden kann. Zur Ermittlung der zu messenden Größe werden ausschließlich Veränderungen wenigstens einer Kenngröße der Rayleighwelle herangezogen, wobei vorzugsweise der dissipative Energieverlust der Rayleighwelle in der Meßstrecke zugrunde gelegt wird. Wesentliche Ausführungsarten akustischer Übertragungssysteme mit wellenleitendem Charakter werden unten näher erläutert.

Die zur Durchführung des Verfahrens entwickelte Vorrichtung weist wenigstens eine solche, mit dem zu vermessenden Medium zumindest teilweise in Kontakt bringbare Meßstrecke auf, die wenigstens auf einer Länge, die λ/8 der erzeugten Rayleighwelle entspricht, zur Ausbildung und Fortleitung von Rayleighwellen geeignet ist. Darüber hinaus ist das akustische Übertragungssystem wenigstens zwischen dem Beginn der Meßstrecke und dem Empfänger der Wellenenergie nach dem Prinzip eines Wellenleiters ausgebildet.

Durch die ausschließliche Verwendung von Rayleighwellen für den Meßeffekt ist die Wellenführung von der Formstabilität des Trägermaterials weitgehend unabhängig; der größte Teil der Festkörper ist in der Lage, Rayleighwellen an seiner Oberfläche fortzuleiten und somit grundsätzlich als Meßstrecke bzw. als akustisches Übertragungsmedium zwischen Sender und Empfänger zu dienen. Da der größte Teil der Wellenenergie in der Grenzschicht (Eindringtiefe: ca. λ) zwischen der Festkörperoberfläche und der angrenzenden Flüssigkeit transportiert wird und die Rayleighwelle eine Scherkomponente der Bewegung der Oberfläche besitzt, eignet sich eine entsprechend gestaltete Meßstrecke besonders gut zur Viskositätsmessung mit einem günstigen Signal-/Rausch-Verhältnis.

Im strengen physikalischen Sinne können Rayleighwellen nur auf unbegrenzten, ebenen Oberflächen eines Festkörpers auftreten, was jedoch für technische Anwendungen ohne Bedeutung sein muß. Ihre spezifischen Merkmale treten dennoch unter diesen eingeschränkten Bedingungen auf, so daß sie durchaus für meßtechnische Zwecke nutzbar sind. Rayleighwellen im Sinne der Erfindung sollen auch solche "gestörten" Rayleighwellen umfassen, die aufgrund der Begrenzungen der Wellenauffläche durch geometrische Strukturen oder Grenzflächen von Materialien unterschiedlicher akustischer Eigenschaften, oder der Nähe zum Sender, in dessen Nahfeld eine noch nicht vollständig ausgebildete Rayleighwelle vorliegt, oder dergleichen von der "ideal" ausgebildeten Rayleighwelle abweichen.

Außerdem läßt sich die Periodendauer der Rayleighwelle durch die konstruktive Gestaltung des Übertragungssystems und die Wahl eines geeigneten Materials für die Meßstrecke so festlegen, daß die Periodendauer größer als die Relaxationszeit der zu messenden Flüssigkeit ist. Zur Viskositätsmessung sollte die Periodendauer möglichst nahe der Relaxationszeit liegen, was sich positiv auf die Meßgenauigkeit auswirkt.

Bei der Auswahl dieser Materialien kann zur Anpassung an den konkreten Anwendungsfall sogar an die Herstellung in ihrer Zusammensetzung diesbezüglich optimierter Legierungen oder die Veränderung der elastischen Eigenschaften der zur Fortleitung der Rayleighwelle vorgesehenen Schicht durch Bestrahlung mit strukturelle Veränderungen erzeugender Strahlung, insbesondere Kern- oder Teilchenstrahlung (z.B. Neutronen), Laserbehandlung, Ionenimplantation oder Gasimplantation (z.B. Hydrierung) gedacht werden. Bei derart maßgenauer Anpassung der wellenleitenden Körper können geringste Veränderungen des zu messenden Mediums, z.B. dessen Zusammensetzung, zum Umkippen des Ein- bzw. Auskoppelverhaltens der Wellenenergie führen und für entsprechende Schlußfolgerungen ausgenutzt werden.

An dieser Stelle sei darauf hingewiesen, daß man unter Anwendung des sogenannten Schmelz-Spinnverfahrens beinahe jede beliebige Legierung herstellen kann. Der Grundgedanke des Verfahrens besteht darin, den Zustand einer Schmelze durch Schockabkühlung quasi einzufrieren. Dies geschieht im allgemeinen dadurch, daß man einen dünnen Strahl flüssiger Schmelze auf eine rotierende, gekühlte Trommel laufen läßt, so daß bei Abkühlungsgeschwindigkeiten von etwa 1 Mio Kelvin pro Sekunde amorphe Bänder bis zu einer Dicke von ca. 0,1 Millimeter entstehen. Jedoch können die so erzeugten Materialien nur unterhalb ihrer Rekristallisationstemperatur eingesetzt werden.

Grundsätzlich ist die Erfindung zur Ermittlung all jener physikalischen und/oder technischen Größen eines flüssigen Mediums anwendbar, die die Eigenschaften der Ausbreitung von Rayleighwellen beeinflussen. Die auswertbaren Parameter sind also die Frequenz, die Phasengeschwindigkeit und die Amplitude der Rayleighwellen sowie die damit direkt zusammenhängenden Größen des Mediums, wie z.B. die Viskosität oder die Dichte. Es können aber auch Phasenübergänge, wie sie bei der Betauung, Vereisung, bei Siedeprozessen, Kavitation oder Auskristallisation auftreten, detektiert werden. Weitere Anwendungsmöglichkeiten werden bei der Bewertung von inhomogenen Flüssigkeiten oder als Benetzungssensor oder als Kavitationssensor gesehen. Beispielsweise können Informationen über den Zustand innerer Strukturen von inhomogenen Flüssigkeiten gewonnen werden. Dabei wird vorteilhalt die Eigenschaft der Rayleighwelle genutzt, sowohl Scherkomponenten als auch Vertikalkomponenten der Bewegung in der Grenzschicht zu besitzen.

Obwohl es unmöglich ist, sämtliche in Frage kommenden Anwendungsgebiete der Erfindung erschöpfend zu benennen, sei noch darauf hingewiesen, daß sich die Erfindung auch in Systeme zur Prozeßsteuerung und -überwachung einbinden läßt. Dies gilt auch für die Überwachung des Zustandes und des Alterungsprozesses von elektrochemischen Aggregaten, wie z.B. Brennstoffzellen, Elektrolyseuren und Batterien. In der Chemie und Biotechnologie könnten Entnahmevorrichtungen für Stoffproben umgehend Informationen über die Stoffeigenschaften liefern.

Die Vielfalt des einsetzbaren Substratmaterials schafft nicht nur eine gute Anpaßbarkeit an gegebene thermische, chemische, elektrische, optische und/oder mechanische Bedingungen; die guten Ausbreitungsbedingungen von Rayleighwellen ermöglichen in vielen Fällen, daß die Grenzflächen einer vorhandenen Vorrichtung, z.B. einer Arbeitsvorrichtung oder einer massiven Wandung, als Träger für die Rayleighwelle genutzt werden. Vorteilhaft kommt in diesem Zusammenhang zum Tragen, daß Sender und Empfänger bei Bedarf von der Meßstrecke bzw. von dem die Meßstrecke tragenden Körper entfernt oder wieder daran angeschlossen werden können.

Ein weiterer Vorteil der Erfindung besteht in der einfachen Möglichkeit der räumlichen Trennung von Sender und Empfänger einerseits und der Meßstrecke (Meßort) des Systems andererseits, so daß beispielsweise Sender und Empfänger nicht in den aggressiven Bereich des zu messenden Mediums gebracht werden müssen. Zwischen dem Sender/Empfänger und dem Meßort kann eine vergleichsweise große Entfernung überbrückt werden. Auch die gute Übertragbarkeit der Rayleighwellen von einem Träger auf einen anderen Träger durch Vermittlung über ein inkompressibles Koppelmedium (z.B. eine Flüssigkeit) kann vorteilhaft zur Überbrückung von Distanzen ausgenutzt werden.

Zur Erzeugung und zum Nachweis von Rayleighwellen können sehr unterschiedliche Mechanismen eingesetzt werden, was die Anpassungsfähigkeit der Erfindung weiter erhöht. Folgende Effekte sind nutzbar:

* mechanisch/akustische Anregung
* Modenkonversion
* piezoelektrischer Effekt
* magnetischer, insbesondere magnetostriktiver Effekt
  (Da es sich bei den voranstehenden Effekten um reversible Prozeße handelt, können diese zum Senden und Empfangen genutzt werden.)
* thermische Anregung durch gepulstes Heizen, z.B. mit einem LASER
  (Effekt kann nur zum Anregen einer Welle genutzt werden.)
* optische Effekte, einschließlich magneto- und elektrooptische Effekte
* piezoresistiver Effekt
  (Die beiden zuletztgenannten Effekte können nur zum Nachweis einer Welle genutzt werden.)

Mittel zur Modenkonversion können sowohl zwischen Sender und Meßort (Meßstrecke) als auch zwischen Meßort und Empfänger eingesetzt werden. Dies ist regelmäßig dann von Vorteil, wenn zwischen dem Meßort und Sender bzw. Empfänger eine akustische Übertragungsstrecke vorgesehen werden muß, die nicht oder nur unter Schwierigkeiten zur Fortleitung von Rayleighwellen hergerichtet werden kann. D.h.,

daß beispielsweise eine von einem Sender ausgehende Kompressionswelle zu Beginn der Meßstrecke durch Konversionsmittel (das sind geeignete Veränderungen der Oberflächenstruktur, z.B. Kerben) in eine Rayleighwelle konvertiert wird. Diese Methode ist besonders vorteilhaft für eine Hindurchleitung von Wellenenergie durch massive Wände (Rohrleitungen, Behälterwandungen) einsetzbar.

Um den wellenleitenden Charakter der erfindungsgemäßen Vorrichtung sicherzustellen, stehen wenigstens drei prinzipielle Gestaltungsvarianten und deren Untervarianten zur Verfügung. Sie gewährleisten, daß die Auskopplung von akustischer Energie aus der Rayleighwelle in die angrenzende Flüssigkeit unterdrückt bzw. die ausgekoppelte Energie wieder weitestgehend vollständig "eingefangen" und dem Empfänger zugeführt wird:

Variante 1:    *Dünne Flüssigkeitsschicht (d $<\lambda_{KW}/4$)*
*\* angrenzendes Medium mit verschiedenartiger akustischer Impedanz*
*\* angrenzendes Medium mit gleicher akustischer Impedanz und*

$$v^{(1)}_{RW} < v^{(2)}_{RW}$$

Falls das an die Flüssigkeitsschicht angrenzende Medium (das der Meßstrecke gegenüberliegt) eine sehr schlechte akustische Ankoppelbarkeit aufweist (wie z.B. Vakuum, Gase oder Schäume), woraus ein geringer Transmissionsgrad und ein hoher Reflexionsgrad an dieser zweiten Grenzfläche resultieren, wird die Auskopplung von Energie in Form von Kompressionswellen vermieden, wenn die Dicke d der Flüssigkeitsschicht dünner ist als die Flüssigkeitsschicht, die zur Ausbildung der Grundschwingung einer stehenden Welle darin notwendig ist. Bei einer Schichtdicke unterhalb $\lambda_{KW}/4$ der Kompressionswelle ist diese Bedingung regelmäßig erfüllt.

Wenn die Schichtdicke der Flüssigkeit durch einen angrenzenden Festkörper begrenzt wird, muß zusätzlich die Bedingung der Totalreflexion für die (Flüssigkeits-)Kompressionswelle erfüllt sein und das die Flüssigkeitsschicht begrenzende Gegenmaterial (angrenzendes Medium[(2)]) muß eine höhere Geschwindigkeit $v_{RW}^{(2)}$ für die Rayleighwelle als das Material der Meßstrecke[1] aufweisen (wie z.B. Glas gegenüber Stahl, Aluminium).

Variante 2: *Gegenüberliegende Festkörpergrenzflächen mit akustischer Ankopplung, vorzugsweise wenn d > $\lambda_{KW}$/4 sein soll*

***$v^{(1)}_{RW}$ = $v^{(2)}_{RW}$, wenn gegenseitige Anregung von Rayleighwellen auf parallelen Festkörpergrenzflächen vorgesehen ist***
***$v^{(1)}_{RW}$ ≠ $v^{(2)}_{RW}$, wenn die gegenüberliegenden Festkörper nicht parallel verlaufen, aber deren Neigung den unterschiedlichen Rayleighwellengeschwindigkeiten angepaßt ist***
***$v^{(1)}_{RW}$ > $v^{(2)}_{RW}$, wenn der gegenüberliegende Festkörper eine Volumenschallwelle weiterleiten soll***

Die Auskopplung der Energie der Rayleighwelle aus der mit dem Sender verbundenen ersten Festkörpergrenzfläche[1] in eine Flüssigkeitsschicht mit einer Dicke d, die größer als $\lambda_{KW}$/4 der Kompressionswelle sein darf, wird genutzt, um an einer parallel gegenüberliegenden zweiten Festkörpergrenzfläche[2], die eine Wellenlaufstrecke mit gleicher Rayleighwellengeschwindigkeit bildet, die Wellenenergie wieder zu Rayleighwellen einzukoppeln. Dazu müssen die Schallgeschwindigkeiten $v^{(1)}_{RW}$ und $v^{(2)}_{RW}$ der ersten Festkörpergrenzfläche[1] und der parallel gegenüberliegenden zweiten Festkörpergrenzfläche[2] gleich groß sein. Von den auf der zweiten Festkörpergrenzfläche[2] induzierten Rayleighwelle wird wiederum eine Kompressionswelle ausgekoppelt, die ihrerseits auf der gegenüberliegenden ersten Festkörpergrenzfläche[1] erneut eine Rayleighwelle erzeugt. In Abhängigkeit der Dimensionierung der Meßstrecke kann der Prozeß der gegenseitigen Wellenanregung unterschiedlich intensiv ausgeprägt sein. Zur Messung der Wellenenergie kann an der ersten und/oder der zweiten Festkörpergrenzfläche ein Empfänger vorgesehen werden. Der gleiche Effekt kann bei unterschiedlichen Rayleighwellengeschwindigkeiten mit angepaßter Neigung der Grenzflächen erzielt werden.

Wenn die Schallgeschwindigkeit $v^{(1)}_{RW}$ der ersten Festkörpergrenzfläche[1] jedoch größer als die Schallgeschwindigkeit $v^{(2)}_{RW}$ der parallel gegenüberliegenden Festkörpergrenzfläche[2] ist, wird in den gegenüberliegenden Festkörper eine Volumenschallwelle eingekoppelt, die in einen mit diesem Festkörper verbundenen Empfänger geleitet wird.

Es ist jedoch auch möglich, die von der Rayleighwelle der ersten Festkörpergrenzfläche unter bestimmtem Winkel ausgekoppelte Kompressionswelle direkt von einem Empfänger zu detektieren und für die Bewertung der Flüssigkeit heranzuziehen. Der Winkel ist bestimmt durch die Geschwindigkeit $v_{RW}^{(1)}$. der Rayleighwelle in der Meßstrecke und der Schallgeschwindigkeit $v_{KW}$ der Kompressionswelle in der Flüssigkeit.

Variante 3: ***Substratmaterial mit langsamer Rayleighwellengeschwindigkeit ($v^{(1)}_{RW}$ < $v_{KW}$)***
Besitzt das Substratmaterial der Meßstrecke[1] eine Geschwindigkeit $v^{(1)}_{RW}$ für die Rayleighwelle, die unter der Schallgeschwindigkeit $v_{KW}$ der angrenzenden Flüssigkeit[fl] liegt, so kann keine Auskopplung von Energie stattfinden, die nicht dem meßtechnischen Zweck dient. In Bezug auf die meisten Flüssigkeiten (Wasser, viele Öle) sind als mögliche Substratmaterialien beispielsweise Kunststoffe, weiche Metalle (z.B. Gold, Blei, Wismut), sowie Graphit zu nennen.

Es ist auch denkbar, Elemente mit akusto-optischen Eigenschaften einzusetzen, um den wellenleitenden Charakter des akustischen Übertragungssystems günstig zu beeinflussen.
Sofern nicht nur Informationen über die zu messende Flüssigkeit benötigt werden, sondern auch eine Beeinflussung der Eigenschaften der Flüssigkeit erwünscht ist - z.B. zum Zwecke der Regelung komplexer verfahrenstechnischer Anlagen oder der direkten Einflußnahme auf stoffwandelnde Prozesse - kann es von Vorteil sein, daß über die Festkörpergrenzfläche der Meßstrecke zusätzlich zur akustischen Energie Energie anderer Art in die angrenzende Flüssigkeitsschicht eingekoppelt wird. Dies geschieht über eine die Grenzfläche der Meßstrecke bildende Schicht oder über den die Meßstrecke tragenden Festkörper. Die Schicht bzw. der Festkörper können beispielsweise elektrisch leitfähig ausgebildet und mit einer Gleich- oder Wechselspannungsquelle verbunden sein. Wenn die an die Meßstrecke angrenzende Flüssigkeit eine polare oder eine elektrorheologische und/oder eine Flüssigkeit mit in Ionen dissoziierten Bestandteilen ist, kommt es in einem elektrischen Spannungsfeld zu den jeweils typischen Wechselwirkungen. D.h., die Moleküle polarer Flüssigkeiten richten sich im Spannungsfeld entsprechend aus, Ionen migrieren zur entgegengesetzt geladenen Elektrode und werden bei ausreichend hoher Spannung dort entladen, elektrorheologische Flüssigkeiten verändern ihre Viskosität.

Es ist aber auch möglich, eine die Grenzfläche der Meßstrecke bildende Schicht oder den die Meßstrecke tragenden Festkörper mit einer Wärmequelle zu verbinden, um die angrenzende Flüssigkeitsschicht zu beheizen. Falls diese Schicht oder eine in der Nähe der Grenzfläche angeordnete Schicht elektrisch leitend ist, kann durch einen Anschluß an eine elektrische Spannungsquelle die Schicht nach dem Prinzip einer Widerstandsheizung betrieben werden.

Sofem Bestandteile der Flüssigkeit photooptische Reaktionen zeigen, ist eine Einflußnahme durch Einkopplung von Lichtquanten geeignet. Dazu empfielt es sich, die Grenzfläche der Meßstrecke bildende Schicht oder der die Meßstrecke tragende Festkörper optisch durchlässig auszubilden und mit einer Lichtquanten erzeugenden Energiequelle, z.B. einer LASER-Quelle, zu verbinden.

Gemäß einer weiteren Erfindungsvariante durchläuft wenigstens ein Teil der vom Sender ausgehenden akustischen Welle auf ihrem Weg zum Empfänger mindestens einmal einen Modenwandler, um ihren Mode von einer Rayleighwelle in eine Volumenschallwelle oder umgekehrt zu wandeln. Durch den Einsatz von Modenwandlern gelingt es, auf an sich nicht zugänglichen Oberflächen Rayleighwellen für Meßzwekke anzuregen, indem akustische Energie beispielsweise durch massive Bauteile, Wandungen oder dergleichen geleitet und am Modenwandler zu Rayleighwellen konvertiert wird. Die mit der Meßinformation behafteten Rayleighwellen können wiederum in einen anderen Wellenmode gewandelt und an einen vom Meßort entfernten Empfänger geleitet werden.

Durch die Erfindung wird eine Gestaltung der Meßvorrichtung ermöglicht, die sicherstellt, daß Sender und Empfänger stets außerhalb des Raums angeordnet werden können, in dem sich die zu messende Flüssigkeit befindet. Durch die räumliche Entkopplung der Meßstrecke einerseits und von Sender und Empfänger andererseits entstehen beste Voraussetzungen zur Anpassung der Meßvorrichtung an den jeweiligen Einsatzfall. Außerdem werden dadurch die Belastungen von Sender und Empfänger durch thermische, chemische, mechanische oder andere Einflüsse erheblich herabgesetzt bzw. ganz vermieden. In vielen Fällen wird es möglich sein, die von Gefäßwänden gebildeten Grenzflächen als Meßstrecke für akustische Wellen (Volumenschallwellen) zu nutzen.

Dementsprechend befindet sich ein Modenwandler in Wirkverbindung mit der Meßstrecke oder zu einem mit den akustischen Rayleighwellen leitend verbundenen Bereich, wobei der Modenwandler eine zur Meßstrecke hinlaufende Volumenschallwelle in eine Rayleighwelle umwandelt undloder eine zum Empfänger zurücklaufende Rayleighwelle in eine Volumenschallwelle umwandelt. Als Modenwandler kommen periodisch angeordnete geometrische Strukturen zur Anwendung, deren Teilung der Wellenlänge $\lambda$ der zu erzeugenden Rayleighwelle entspricht. Solche geometrischen Strukturen können beispielweise Lochreihen oder keilartige Ausformungen sein.

Es besteht aber auch die Möglichkeit, separate, das heißt zusätzliche Elemente an der Meßstrecke oder dem mit dieser wellenleitend verbundenen Bereich anzubringen, um eine Modenkonversion von einer Volumenschallwelle in eine Rayleighwelle oder umgekehrt zu bewirken. Beispielsweise können periodisch mit einer Teilung von etwa $\lambda$ der Wellenlänge der Rayleighwelle auf der Meßstrecke aufgeklebte, aufgedruckte, aufgesinterte oder aufgedampfte Strukturen verwendet werden.

Durch gestalterische Maßnahmen am Modenwandler kann auf die bevorzugte Ausbreitungsrichtung der Rayleighwelle, die ihren Ursprung im Auftreffen einer Volumenschallwelle auf den Modenwandler hat, Einfluß genommen werden. Eine gerichtete oder symmetrische Modenwandlung ist bei Bedarf erzielbar. Gelangt eine Rayleighwelle in den Wirkungsbereich eines der oben beschriebenen Modenwandler, so wird diese unter anderem in eine Volumenschallwelle konvertiert. Wegen der Dämpfungseigenschaften der betreffenden schwingungsleitenden Körper und wegen der Konversionsverluste sollten möglichst wenige Modenwandler innerhalb eines Weges der akustischen Wellen zwischen Sender und Empfänger liegen.

Für den Fall, daß eine einteilige Sender-/Empfänger-Einheit zur Generierung und zum Empfang von Volumenschallwellen mittels eines einfachen Dicken- oder Scherschwingers vorgesehen sein sollte, ist die Anwendung nur eines Modenwandlers vorteilhaft. Er konvertiert die zur Meßstrecke hinlaufende Volumenschallwelle in eine Rayleighwelle und die von einem Reflektor zurücklaufende Rayleighwelle in eine vom Empfänger detektierbare Volumenschallwelle. Als Reflektoren eignen sich besonders schlitzartige Kerben mit annähernd senkrechten Flanken bezüglich der Ausbreitungsrichtung der Rayleighwelle, aber auch andere Unstetigkeitsstellen mit hinreichend gutem akustischen Reflektionsverhalten.

Sollten jedoch Sender und Empfänger (zur Generierung beziehungsweise zum Empfang von Volumenschallwellen) weit auseinanderliegen, so wird regelmäßig die Anwendung von zwei Modenwandlern erforderlich sein, die die Meßstrecke an ihren Enden flankieren.

Es besteht auch die Möglichkeit, Sender und Empfänger für unterschiedliche Moden der akustischen Wellen miteinander zu kombinieren, also einen Sender für Volumenschallwellen und einen Empfänger für Rayleighwellen (oder umgekehrt) einzusetzen. Entsprechend wäre ein Modenwandler zwischen der Meßstrecke und dem Empfänger beziehungsweise zwischen dem Sender und der Meßstrecke vorzusehen.

Zur Ermittlung der zu messenden Größe werden ausschließlich Veränderungen wenigstens einer Kenngröße der Rayleighwelle herangezogen, wobei vorzugsweise der dissipative Energieverlust der Rayleighwelle in der Meßstrecke zugrunde gelegt wird.

Die zur Durchführung des Verfahrens vorgesehene Vorrichtung verwendet ein akustisches Übertragungssystem mit wenigstens einer von einer Festkörperoberfläche gebildeten Meßstrecke, die mit dem zu vermessenden Medium zumindest teilweise in Kontakt bringbar ist. Die Meßstrecke ist wenigstens auf einer solchen Länge zur Fortleitung von Rayleighwellen (RW) geeignet, die $\lambda/8$, vorzugsweise mehr als $2\lambda$ der erzeugten Rayleighwelle (RW) entspricht. Erfindungsgemäß steht wenigstens ein Modenwandler in Wirkverbindung mit der Meßstrecke oder mit einem mit der Meßstrecke verbundenen Bereich, der

a) eine vom Sender zur Meßstrecke hinlaufende Volumenschallwelle in eine Rayleighwelle konvertiert und/oder

b) eine von der Meßstrecke zum Empfänger rücklaufende Rayleighwelle in eine Volumenschallwelle konvertiert.

Bemerkenswert ist auch, daß zwischen dem Sender/Empfänger und dem Meßort eine vergleichsweise große Entfernung überbrückt werden kann, da Rayleighwellen bei vergleichsweise niedrigem Energieverlust aufgrund ihrer geringen Richtungsstreuung lange Strecken zurücklegen können. Auch die gute Übertragbarkeit der Rayleighwellen von einem Träger auf einen anderen Träger mittels eines inkompressiblen Koppelmediums (z.B. eine Flüssigkeit) kann vorteilhaft zur Überbrückung von Distanzen ausgenutzt werden.

Nachfolgend werden Ausführungsbeispiele der Erfindung anhand der dargestellten Figuren näher erläutert. Es zeigen:

Figur 1a    Schematische Darstellung eines akustischen Übertragungssystems mit ausgeprägten Systemgrenzen und einer für Rayleighwellen durchgängigen Wellenleiterstecke zwischen Sender und Empfänger;

Figur 1b    Schematische Darstellung eines akustischen Übertragungssystems mit einem Sender für Volumenschallwellen und einem am Beginn der Meßstrekke angeordneten Modenwandler zur Konvertierung von Volumenschallwellen in Rayleighwellen;

Figur 1c    Schematische Darstellung eines akustischen Übertragungssystems mit Sender und Empfänger für Volumenschallwellen und mit jeweils am Beginn und am Ende der Meßstrecke angeordneten Modenwandlern zur Konvertierung von Volumenschallwellen in Rayleighwellen und umgekehrt;

Figur 1d    Schematische Darstellung des akustischen Übertragungssystems für eine Meßvorrichtung mit einer dünnen Flüssigkeitsschicht, deren Dicke von einem der Meßstrecke gegenüberliegenden Festkörper begrenzt wird;

Figur 1e    Schematische Darstellung des akustischen Übertragungssystems für eine Meßvorrichtung mit einer dünnen Flüssigkeitsschicht, deren Dicke durch die Schwerkraft (schiefe Ebene) oder die Zentrifugalkraft begrenzt wird;

Figur 1f    Schematische Darstellung des akustischen Übertragungssystems für eine Meßvorrichtung mit einer dünnen Flüssigkeitsschicht, deren Dicke durch einen Abstreifer begrenzt wird;

Figur 1g    Prinzipdarstellung einer Mischvorrichtung mit Rührbalken, die gleichzeitig als Abstreifer fungieren, um die Schichtdicke der Flüssigkeit für den periodischen Meßvorgang auf den maximal zulässigen Betrag zu begrenzen (gemäß dem Abstreiferprinzip von Figur 1f);

Figur 1h    Schnittdarstellung der Mischvorrichtung von Figur 1g;

Figur 1i    Prinzipdarstellung einer Walzeinrichtung mit einem mit der Walze rotierenden akustischen Übertragungssystem;

Figur 1j    Prinzipdarstellung einer Walzeinrichtung mit .einem akustischen Übertragungssystem, dessen Meßstrecke von der Oberfläche der Walze gebildet wird, die sich jedoch quasistationär verhält;

Figur 1k    Schematische Darstellung eines akustischen Übertragungssystems mit keilförmigen Koppelelementen zur Erzeugung von Rayleighwellen mittels einfacher Dickenschwinger, die auf einer ablaufenden Flüssigkeitsschicht aufliegen bzw. aufschwimmen;

Figur 1l     Prinzipdarstellung eines Strömungskanals während des Sendemodus mit einer gepulst arbeitenden Meßvorrichtung, deren Meßstrecke von einem Modenwandler und einem Reflektor begrenzt ist, und mit einem der Meßstrecke gegenüberliegenden, die Schichtdicke der Flüssigkeit begrenzenden Festkörper;

Figur 1m     wie Figur 1l, jedoch im Empfangsmodus.

Figur 2a     Schematische Darstellung des akustischen Übertragungssystems für eine Meßvorrichtung mit parallel gegenüberliegenden Festkörpergrenzflächen mit gleichen Rayleighwellengeschwindigkeiten;

Figur 2b     Prinzipdarstellung einer sich relativ zu ihrem Gehäuse bewegenden Schnecke, die die Flüssigkeit transportiert. Das Vorbeigleiten der Schneckenschulter gegenüber der Meßstrecke ermöglicht kurzzeitig eine akustische Kopplung;

Figur 2c     Schematische Darstellung des akustischen Übertragungssystems für eine Meßvorrichtung mit gegenüberliegenden, nicht-parallelen Festkörpergrenzflächen deren Neigung den unterschiedlichen Rayleighwellengeschwindig-keiten angepaßt ist;

Figur 2d     Prinzipdarstellung eines Gleitlagers mit einem akustischen Übertragungasystem, dessen Meßstrecke vom Lagersitz und der parallel gegenüberliegenden Grenzfläche der gelagerten Welle gebildet wird. Die Meßstrecke ist längs zur Wellenachse angeordnet;

Figur 2e     Prinzipdarstellung eines in einem Zylinder gleitenden Kolbens mit einem akustischen Übertragungssystem, dessen Meßstrecke von einem Teil der Zylinderwand und der gegenüberliegenden parallelen Grenzfläche des vorbeigleitenden Kolbens gebildet wird;

Figur 2f     Schematische Darstellung des akustischen Übertragungsystems für eine Meßvorrichtung mit einer der ersten Festkörpergrenzfläche gegenüber-liegenden Festkörpergrenzfläche mit geringerer Rayleighwellengeschwindig-keit, die das Einkoppeln von Volumenschallwellen ermöglicht und mit Empfängern für Volumenschallwellen in Verbindung steht;

Figur 2g     Prinzipdarstellung eines Rohrstücks mit einem akustischen Übertragungssystem, das Rayleighwellen auf der die Meßstrecke tragenden Innenseite einer Rohrwandung erzeugt und die in der das Rohr ausfüllenden Flüssigkeit entstehenden Kompressionswellen auf der gegenüberliegenden Rohrwand in einen angrenzenden Festkörper zu Volumenschallwellen konvertiert werden;

Figur 2h     Schematische Darstellung des akustischen Übertragungsystems für eine Meßvorrichtung mit einer der ersten Festkörpergrenzfläche gegenüberliegenden Festkörpergrenzfläche, die von einem Empfänger für die sich in der Flüssigkeit ausbreitenden Kompressionswellen gebildet wird;

Figur 2i     Prinzipdarstellung eines Rohrstücks mit einem akustischen Übertragungssystem, das Rayleighwellen auf der die Meßstrecke darstellenden Innenseite einer Rohrwandung erzeugt und die in der das Rohr ausfüllenden Flüssigkeit entstehenden Kompressionswellen direkt in einen Empfänger für Kompressionswellen führt;

Figur 3a     Schematische Darstellung des akustischen Übertragungssystems für eine Meßvorrichtung mit einem Substratmaterial, dessen Schallgeschwindigkeit für Rayleighwellen geringer ist als die Schallgeschwindigkeit dar angrenzenden Flüssigkeit;

Figur 3b     Prinzipdarstellung einer Meßvorrichtung mit großer räumlicher Trennung des Ortes von Sender und Empfänger und des Ortes der Meßstrecke;

Figur 3c     Prinzipdarstellung einer Meßvorrichtung, die das Messen in einem abgeschlossenen, die Flüssigkeit enthaltenden Behälter erlaubt, wobei alle zur Erzeugung und Empfang der Rayleighwells notwendigen Teile außerhalb des Behälters liegen;

Figur 3d     Prinzipdarstellung einer Meßvorrichtung aus zwei Meßstrecken unter Verwendung eines einstükigen, die Rayleighwellen führenden Festkörpers zum Vergleich der Eigenschaften einer einen Reaktor durchströmenden Flüssigkeit. Dabei wird das Prinzip von Figur 3-3 benutzt;

Figur 3e    Prinzipdarstellung eines Rohrstücks mit einer den Rohrquerschnitt nicht verringernden Meßvorrichtung;

Figur 3f    Prinzipdarstellung eines Querschnitts durch einen Behälter mit einer Meßvorrichtung, die die Behälterwandung als die Rayleighwellen führenden Festkörper benutzt;

Figur 4a    Prinzipdarstellung einer Meßstrecke im elektrischen Feld;

Figur 4b    Prinzipdarstellung einer Meßstrecke im elektrischen Feld mit mehreren zugeordneten, separat ansteuerbaren Elektroden;

Figur 4c    Prinzipdarstellung einer Meßstrecke mit elektrischer Widerstandsheizung;

Figur 4d    Prinzipdarstellung einer Meßstrecke mit einem Dickenschwinger zur Einleitung mechanischer Energie;

Figur 4e    Prinzipdarstellung einer membranartigen Meßstrecke mit angeschlossenem mechanischen Element;

Figur 4f    Prinzipdarstellung einer Meßvorrichtung mit Temperaturregelung über Viskositätsmessung;

Figur 4g    Kombination einer Meßstrecke mit einem Peltier-Element;

Figur 4h    Schematische Darstellung des akustischen Übertragungssystems für eine Meßvorrichtung auf einem transparenten Trägermaterial, wobei zusätzlich optische Energie in die Meßstrecke eingebracht wird;

Figur 4i    Prinzipdarstellung einer Kombination von akustischer Meß- und optischer Beobachtungsvorrichtung zur gleichzeitigen Messung und Beobachtung der Veränderung von Flüssigkeitseigenschaften;

Figur 5a    Schematische Darstellung von Vorrichtungen mit mehreren hintereinander angeordnete Meßstrecken;

Figur 5b    Schematische Darstellung von Vorrichtungen mit mehreren parallel angeordneten Meßstrecken mit mehreren Empfängern;

Figur 5c    Schematische Darstellung von Vorrichtungen mit mehreren parallel angeordneten Meßstrecken mit einem einzigen Empfänger;

Figur 5d    Ausführungsbeispiel einer Anordnung von Meßstrecken aus Fig. 5b;

Figur 5e    Ausführungsbeispiel einer erfindungsgemäßen Anordnung zur Bestimmung einer physikalischen Kenngröße eines Schmierfilms in einem Gleitlager

Figur 5f    Schematische Darstellung einer erfindungsgemäßen Anordnung mit parallel angeordneten Meßstrecken unter Ausnutzung der Modenkonversion im Wellenleiter

Figur 5g    Ausführungsbeispiel der Anordnung aus Fig. 5f

Figur 5h    Beispiele für Wellenleiter, auf denen Rayleighwellen zwischen Sender und Empfänger reflektiert werden mit einer Reflexion der Rayleighwellen an den Außenkanten des Wellenleiters;

Figur 5i    Beispiele für Wellenleiter, auf denen Rayleighwellen zwischen Sender und Empfänger reflektiert werden mit einer Reflexion von Rayleighwellen an in einen Festkörper eingebrachte Nuten;

Figur 5j    Schematische Darstellung eines Ausführungsbeispiels einer kompakten Sender- und Empfängeranordnung;

Figur 6    Ausschnitt aus einem Festkörper mit einer periodischen Lochstruktur als Modenwandler in der Nähe der Festkörperoberfläche;

Figur 7    Ausschnitt aus einem Festkörper mit einer periodischen Kerbenstruktur als Modenwandler in der Nähe der Festkörperoberfläche;

Figur 8    Ausschnitt aus einem Festkörper mit einer periodischen Oberflächenstruktur als Modenwandler, gebildet von auf die Festkörperoberfläche geklebten Elementen;

Figur 9    Ausschnitt aus einem Festkörper mit einer periodischen Struktur von Reflexionselementen in einem auf die Festkörperoberfläche aufgesetzten Keil als Modenwandler;

Figur 10     Prinzipdarstellung einer Meßanordnung mit einer Meßstrecke, die von zwei Modenwandlern begrenzt ist;

Figur 11     Prinzipdarstellung einer Meßanordnung mit zwei Meßstrecken, die sich rechts und links eines gemeinsamen Modenwandlers bis zu den zugeordneten Reflektoren erstrecken, und einer dünnen Flüssigkeitsschicht mit einer Dicke kleiner $\lambda_{KW}/4$ der Kompressionswelle;

Figur 12a     Prinzipdarstellung einer Meßanordnung mit einem der Meßstrecke gegenüberliegenden Festkörper, dessen Rayleighwellengeschwindigkeit mit der Meßstrecke übereinstimmt, mit einem Rayleighwellensender und einem Volumenschallwellenempfänger im Festkörper der Meßstrecke;

Figur 12b     wie Figur 12a, jedoch mit einem Volumenschallwellensender und einem Rayleighwellenempfänger im Festkörper der Meßstrecke;

Figur 12c     wie Figur 12a, jedoch mit einem Rayleighwellensender im gegenüberliegenden Festkörper und einem Volumenschallwellenempfänger im Festkörper der Meßstrecke;

Figur 13     Meßanordnung mit einem zur Ebene der Meßstrecke gewölbt ausgebildeten oder geneigt angeordneten Festkörper, der einen Rayleighwellenempfänger trägt.

Figur 14a     Blockschaltbild der Ausbreitung und Wandlung einer Volumenschallwelle zwischen Sender und Empfänger unter Verwendung jeweils eines Modenwandlers an den Rändern der Meßstrecke;

Figur 14b     Blockschaltbild der Ausbreitung und Wandlung einer Volumenschallwelle zwischen Sender und Empfänger unter Verwendung eines Modenwandlers zwischen der Meßstrecke und dem Empfänger;

Figur 14c     Blockschaltbild der Ausbreitung und Wandlung einer Volumenschallwelle zwischen Sender und Empfänger unter Verwendung eines Modenwandlers zwischen dem Sender und der Meßstrecke;

Figur 14d     wie Figur 14c, jedoch zusätzlich mit einem Reflektor im Weg der Wellenausbreitung zwischen der Meßstrecke und dem Empfänger;

Figur 14e     Blockschaltbild der Ausbreitung und Wandlung einer Volumenschallwelle zwischen Sender und Empfänger mit einer einteilig ausgebildeten Sender/Empfänger-Einheit und einem in zwei Richtungen von der Welle durchlaufenen Modenwandler;

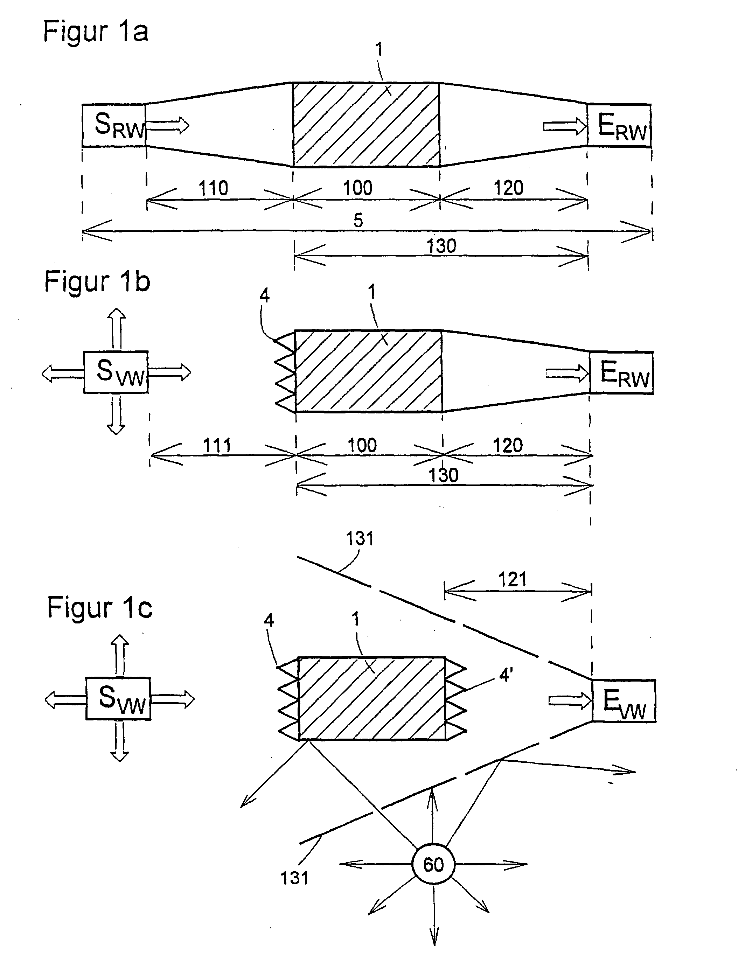

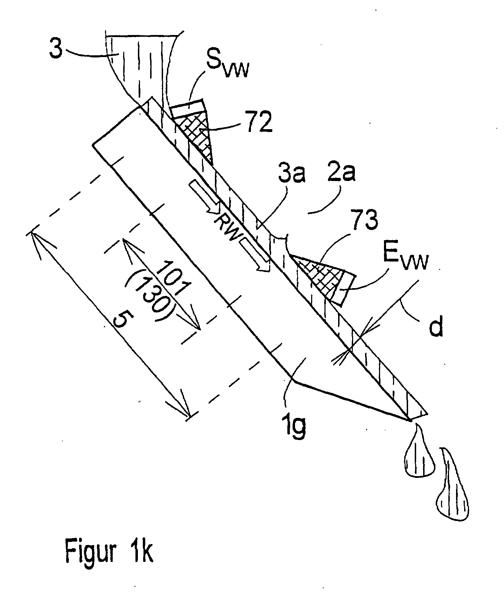

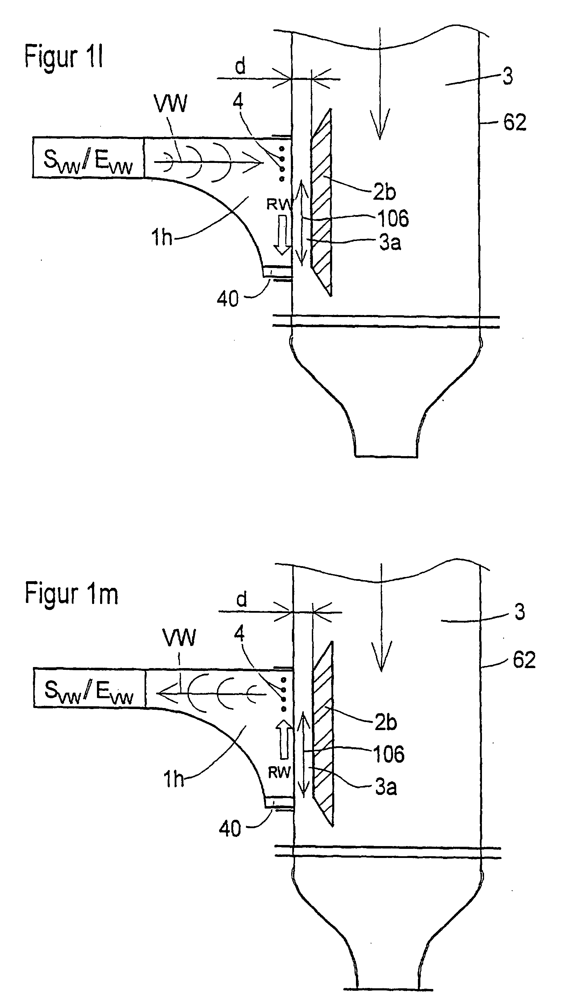

Durch die Figuren 1a bis 1c soll noch einmal verdeutlicht werden, was gemäß dieser Erfindung unter dem wellenleitenden Charakter des akustischen Übertragungssystems verstanden wird. Diese Beispiele können nur stellvertretend für die Vielzahl möglicher Kombinationen bzw. Anordnung der zur akustischen Übertragungsstrecke gehörenden Elemente (Sender, Empfänger, Meßstrecke und ggf. Zuleitungsstrecke, Ableitungsstrecke, Modenwandler, Abschirmung) stehen.

Die schematische Darstellung von Figur 1a zeigt eine Meßstrecke 100, die einerseits über einer Zuleitungsstrecke 110 mit einem Sender $S_{RW}$ für Rayleighwellen und andererseits über eine Ableitungsstrecke 120 mit einem Empfänger $E_{RW}$ in Verbindung steht. Die Meßstrecke 100 Ist damit von Sender $S_{RW}$ und Empfänger $E_{RW}$ räumlich entkoppelt. Sofern für die Zu- und Ableitungsstrecken 110, 120 ein anderes als das die Meßstrecke 100 tragendes Material gewählt wurde, besteht auch eine materialseitige Entkopplung. Dies hat den Vorteil, daß die Meßstrecke 100 optimal an die konkreten Bedingungen des jeweiligen Einsatzfalls angepaßt werden kann; ein Bindung an spezielle, zur Erzeugung von Rayleighwellen geeignete Materialien besteht nicht. Gemäß dem beschriebenen Ausführungsbeispiel werden vom Sender $S_{RW}$ möglichst ausschließlich Rayleighwellen auf der angrenzenden Zuleitungsstrecke 110 erzeugt und (dem Beginn) der Meßstrecke 100 zur Verfügung gestellt. Die Meßstrecke 100 steht mit einer zu messenden (nicht dargestellten) Flüssigkeit in Verbindung und nimmt - in Abhängigkeit ihrer stofflichen Eigenschaften - von den die Meßstrecke 100 durchquerenden Rayleighwellen einen gewissen Energiebetrag auf. Die so veränderte Rayleighwelle wird über die Ableitungsstrecke 120 zum Empfänger $E_{RW}$ geleitet und dort sensiert. In diesem Zusammenhang ist von Bedeutung, daß die Zu- und Ableitungsstrecke 110, 120 während des Meßvorgangs nicht mit Medien in Kontakt treten kann, die gute akustische Kopplungseigenschaften aufweisen und deshalb zur Auskopplung von Wellenenergie führen würden.

Der durchgängig einheitliche, Rayleighwellen leitende körperliche Aufbau dieses Ausführungsbeispiels schafft in sich relativ starke Systemgrenzen, die ausgeprägte wellenleitende Eigenschaften des gesamten akustischen Übertragungssystems 5 bewirken. D. h., die vom Sender $S_{RW}$ erzeugte Wellenenergie wird weitestgehend innerhalb der Systemgrenzen gehalten und von äußeren Störungen abgeschirmt. Ein zumindest zur Messung ausreichender Teil der nach dem Durchgang der Rayleighwelle durch die Meßstrecke 100 verbliebene Wellenenergie wird zum Empfänger $E_{RW}$ geleitet, wobei der wellenleitende Charakter zumindest am Anfang der Meßstrecke 100 beginnt und bis zum Empfänger $E_{RW}$ erhalten bleibt. Dieses schließt sowohl die möglichst verlustarme Weiterleitung des in der Meßstrecke 100 gewonnenen Nutzsignals als auch die Abschirmung vor unerwünschten Störeinflüssen ein. Zur Ermittlung der zu messenden Größe werden ausschließlich Veränderungen wenigstens einer Kenngröße der Rayleighwelle herangezogen, wobei vorzugsweise der dissipative Energieverlust der Rayleighwelle in der Meßstrecke als Basis für die Bewertung dienen sollte.

Ein weiteres wesentliches Merkmal des wellenleitenden Charakters im Bereich der Meßstrecke besteht darin, entweder eine Auskopplung von Energie durch die Vertikalkomponente der Rayleighwelle in die angrenzende Flüssigkeit (infolge der Erzeugung von Kompressionswellen) zu verhindern oder die ausgekoppelte Energie weitestgehend innerhalb des akustischen Übertragungssystems zu halten und an den $E_{RW}$ weiterzuleiten. Zumindest aber sollten die Bedingungen bekannt und konstant sein, denen die ausgekoppelte Energie unterworfen ist.

Die Auskopplung von Kompressionswellen in die Flüssigkeit kann durch die oben beschriebenen Varianten 1 und 3 erfolgen, nämlich durch die Begrenzung der Schichtdicke der zu messenden Flüssigkeit auf maximal $\lambda_{KW}/4$ der Kompressionswelle und - falls ein Festkörper an die Flüssigkeitsschicht grenzt - muß dessen Rayleighwellengeschwindigkeit zur Erfüllung der Bedingung der Totalreflexion größer als die Rayleighwellengeschwindigkeit der Meßstrecke 100 sein, oder durch die Verwendung eines Materials für die Meßstrecke, dessen Rayleighwellengeschwindigkeit kleiner als die Geschwindigkeit der Kompressionswelle in der Flüssigkeit ist. Falls jedoch die voranstehenden Bedingungen nicht erfüllt werden können und eine Flüssigkeitsschicht mit einer Dicke größer als $\lambda_{KW}/4$ der Kompressionswelle akzeptiert werden muß, so kann durch die oben beschriebene Variante 2 sichergestellt werden, daß die durch die Wechselwirkung der Rayleighwelle mit der Flüssigkeit gewonnene Information über die zu messenden Größen der Flüssigkeit nicht verlorengeht und im Nutzsignal des Empfängers enthalten ist. Zum einen kann dies erreicht werden durch die Verwendung eines geeigneten, im Abstand zur Meßstrecke angeordneten Festkörpers, der die von der Meßstrecke ausgehende, in der Flüssigkeit erzeugte Kompressionswelle wieder auffängt und an seiner Oberfläche zu einer Rayleighwelle wandelt. Wenn die Ausbreitungsstrecke für die Rayleighwelle auf dem gegenüberliegenden Festkörper ausreichend groß ist, wird auch von diesem eine Kompressionswelle erzeugt werden, die wiederum von der gegenüberliegenden Meßstrecke 100 aufgefangen werden wird. Die Rayleighwellen leitende Grenzschicht des zweiten Festkörpers wirkt also analog der Meßstrecke 100 auf die angrenzende Flüssigkeit ein und erbringt damit einen Anteil am Meßeffekt. Eine weitere Möglichkeit zur Gewährleistung der erfindungsgemäßen Wellenleiterprinzipien besteht darin, die von der Meßstrecke 100 ausgehende Kompressionswelle direkt von einem geeigneten Empfänger oder unter Zwischenschaltung eines Festkörpers, der mit einem Empfänger in Verbindung steht, zu erfassen. Die Beeinflussung des Nutzsignals durch die wellenleitenden Eigenschaften des akustischen Übertragungssystems sollten vorzugsweise bekannt, idealerweise optimiert sein.

Um einen hinreichenden Meßeffekt eizielen zu können, muß sich die Rayleighwelle auf der Meßstrecke 100 über wenigstens $\lambda/8$, vorzugsweise jedoch mehr als $2\lambda$ ausbreiten können.

Das akustische Übertragungssystem von Figur 1b unterscheidet sich von dem der Figur 1a durch einen Sender $S_{VW}$ für Volumenschallwellen, der in alle Richtungen gleichmäßig Schallwellen aussendet. Ein Teil dieser Volumenschallwellen trifft auf den am Beginn der Meßstrecke 100 angeordneten Modenwandler 4, wo die Volumenschallwellen in Rayleighwellen konvertiert werden. Die Energieübertragung zwischen dem Sender $S_{VW}$ und dem Modenwandler 4 kann über einen Festkörper oder über eine Flüssigkeit erfolgen. Für die Bewertbarkeit des Meßeffekts sind konstante Bedingungen im Bereich der Zuleitungsstrecke 111 erforderlich. Zwischen dem Modenwandler 4 und dem Empfänger $E_{RW}$ herrschen die schon im Zusammenhang mit Figur 1a beschriebenen Bedingungen mit Wellenleitcharakter 130.

Die schematische Darstellung von Figur 1c zeigt ein akustisches Übertragungssystem 5 mit Sender $S_{VW}$ und Empfänger $E_{VW}$ für Volumenschallwellen und jeweils am Beginn und am Ende der Meßstrecke 100 angeordneten Modenwandlern 4, 4' zur Konvertierung von Volumenschallwellen in Rayleighwellen und umgekehrt. Somit transportiert nur noch die Meßstrecke 100 Rayleighwellen. Zusätzlich wurden trichterförmig vom Empfänger ausgehende Grenzen 131 gesetzt, die den Wellenleitcharakter des Bereichs 130 hinreichend sicherstellen sollen. Sie gewährleisten, daß ein ausreichender Teil der vom Modenwandler 4' in Richtung des Empfängers $E_{VW}$ ausgehenden Energie der Volumenschallwelle detektierbar und daß der Einfluß von Störquellen 60 hinreichend gering gehalten wird.

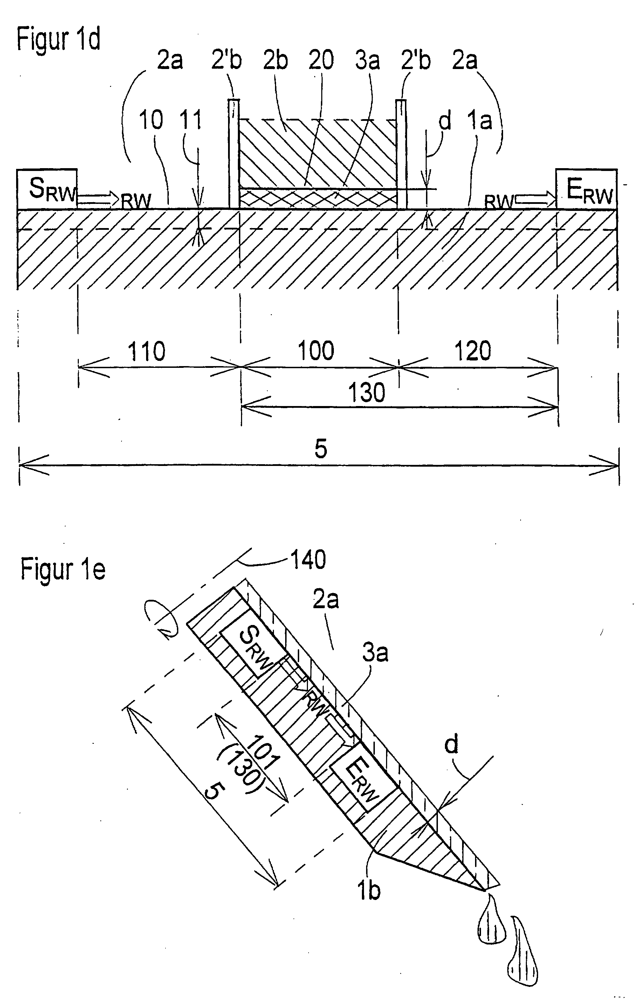

Die nachfolgenden Ausführungsbeispiele der Figuren 1d bis 1m beschreiben in stilisierter Form Möglichkeiten der Nutzung der Erfindungsvariante 1, wonach durch Begrenzung der Schichtdicke der zu messenden Flüssigkeit auf maximal $\lambda/4$ der Kompressionswelle ein Auskoppeln von Kompressionswellen verhindert werden soll.

So zeigt Figur 1d einen Festkörper 1e, dessen Enden einen $S_{RW}$ bzw. einen $E_{RW}$ für Rayleighwellen RW tragen, die sich in einer an der Oberfläche 10 liegenden Grenzfläche 11 ausbreiten. Seitliche Begrenzungselemente 2'b kanalisieren den Strom einer Flüssigkeilsschicht 3a und definieren dadurch die Ausdehnung der Meßstrecke 100, an die sich rechts und links die Zuführungsstrecke 110 bzw. die Abführungsstrecke 120 anschließen. Die Dicke d der Flüssigkeitsschicht 3a wird durch einen der Meßstrecke 100 gegenüberliegenden Festkörper 2b begrenzt. Er besitzt eine Rayleighwellengeschwindigkeit, die über der der Meßstrecke 100 liegt, so daß die Bedingung der Totalreflexion gegeben ist. An die Oberfläche 10 des Festkörpers 1a im Bereich von Zu- und Ableitungsstrecke 110, 120 grenzt ein Medium 2a mit einer schlechten akustischen Ankoppelbarkeit, z.B. Luft. Die Begrenzungselemente 2'b sind derart ausgebildet, daß sie den Durchgang der Rayleighwelle im wesentlichen nicht behindern, damit die durch die Wechselwirkung mit der Flüssigkeit der Rayleighwelle aufgeprägte Information möglichst nicht verfälscht bzw. abgeschwächt wird. Wenn die zu messende Flüssigkeit 3a nicht unter Druck steht, können die Begrenzungselemente 2'b auch weggelassen werden; die Kapillarwirkung würde die Flüssigkeit sicher im Spalt zwischen den beiden Festkörpern halten.

Für Flüssigkeiten mit hinreichend niedriger Viskosität kann auch eine schiefe Ebene die Dicke d der Flüssigkeitsschicht 3a begrenzen, wie dies in Figur 1e angedeutet ist. Die Meßstrecke 101 erstreckt sich an der Oberfläche des geneigten Festkörpers 1b zwischen dem Sender $S_{RW}$ und dem Empfänger $E_{RW}$, ohne daß eine Zuleitungs- oder Ableitungsstrecke für die Rayleighwellen RW zwischengeschaltet ist. Eine Abwandlung dieses Prinzips liegt in der Ausnutzung von Zentrifugalkäften, wobei der Festkörper 1b um die Rotationsachse 140 rotiert. Gegenüber der Nutzung schwerkraftorientierter Meßvorrichtungen können durch das Zentrifugalprinzip sehr viel höhere Kräfte erzielt werden.

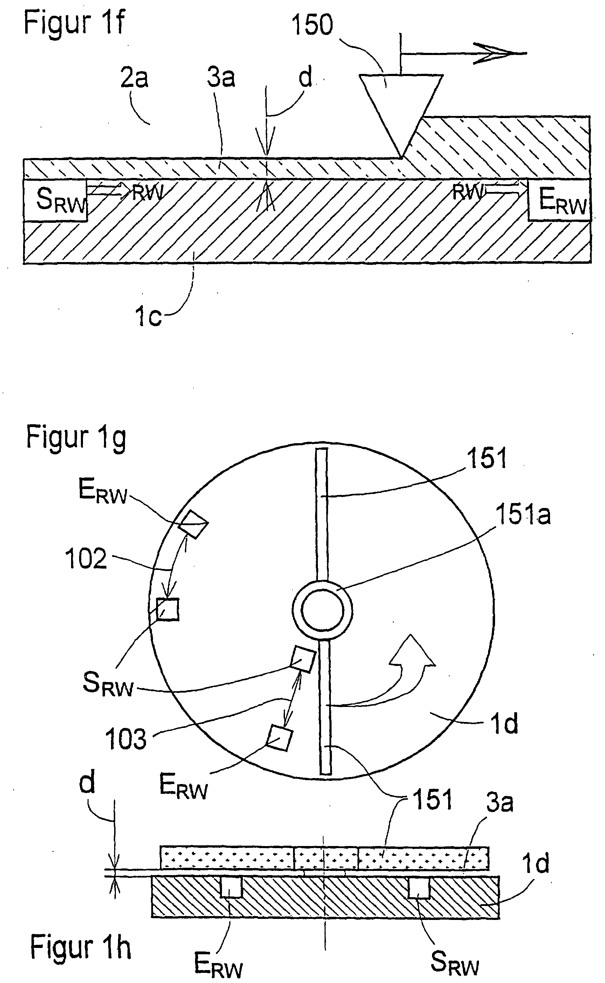

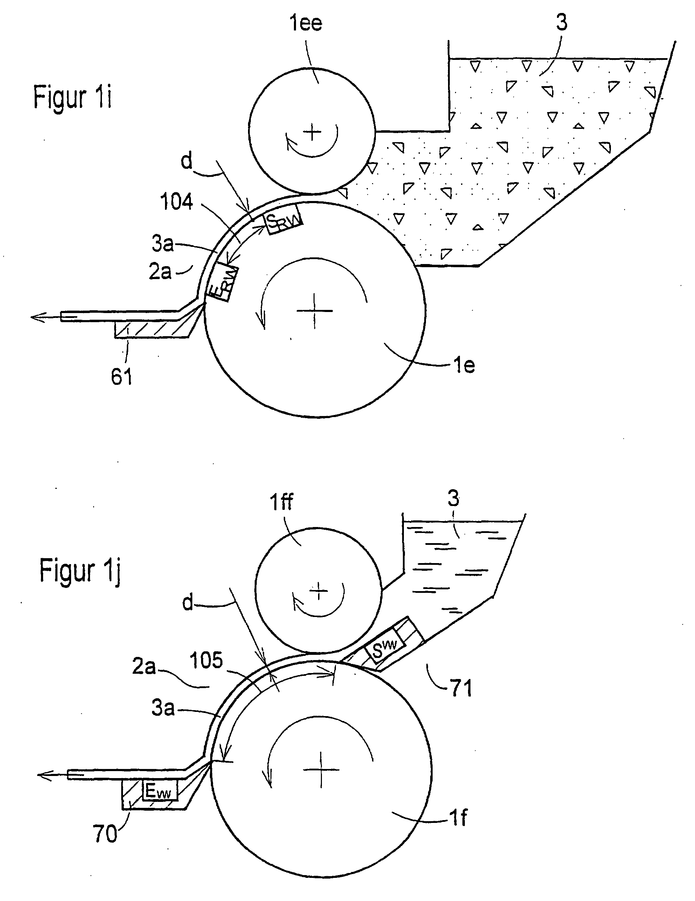

Eine weitere Möglichkeit zur Begrenzung der Schichtdicke d der Flüssigkeitsschicht 3a liegt in der Anwendung von Abstreifern 150 (siehe Figur 1f), die periodisch die Meßstrecke des akustischen Übertragungssystems überstreichen und dabei für die notwendige Reduzierung der Schichtdicke d auf kleiner $\lambda_{KW}/4$ sorgen. Ein technisches Anwendungsbeispiel hierfür kann unter anderem eine Mischvorrichtung (Figuren 1g und 1h) mit einer kreisscheibenförmigen Basis (Festkörper 1d) und dazu drehbar gelagerten Rührbalken (Abstreifer 151) sein, wobei die Abstreifer 151 zur Oberfläche des Festkörpers 1d, in dem Sender $S_{RW}$ und Empfänger $E_{RW}$ eingelassen sind, einen schmalen Spalt bildet. Die Zuführung des Mediums auf die Mischebene kann durch die Hohlachse 151a erfolgen. Je nach den Anforderungen und Bedingungen des Einzelfalls können Sender $S_{RW}$ und Empfänger $E_{RW}$ radial (mit Meßstrecke 103) ausgerichtet oder in Umfangsrichtung (mit Meßstrecke 102) angeordnet werden. Während im zuerstgenannten Fall Sender $S_{RW}$ und Empfänger $E_{RW}$ gleichzeitig vom Abstreifer überstrichen werden, geschieht dies im zweitgenannten Fall zeitlich nacheinander.

Figur 1i zeigt zwei zueinander beabstandete Walzen 1e, 1ee, die durch den gebildeten Spalt ein pastöses oder teigiges Medium 3 fördern und zu einem flächigen Gebilde formen, das durch einen Abstreifer 61 von der Oberfläche der Walze 1e abgehoben wird. In diese Oberfläche sind in Umfangsrichtung Sender $S_{RW}$ und Empfänger $E_{RW}$ eingelassen. Die zwischen ihnen liegende Grenzschicht bildet die Meßstrecke 104. Sie gelangt mit jeder Umdrehung einmal in Bereich des ausgeformten flächigen Gebildes 3a und kann so periodisch zur Ausführung eines Meßzyklus eingesetzt werden. Die Schichtdicke d des Gebildes 3a liegt wieder unter $\lambda_{KW}/4$ der Kompressionswelle im Medium 3.

Die Vorrichtung der Figur 1j unterscheidet sich von der vorangehend beschriebenen dadurch, daß sie nicht mobile, sondern stationäre Sender $S_{VW}$ und $E_{VW}$ verwendet. Sie sind in akustischen Koppelelementen eingebettet, die mit der Oberfläche der Trommel 1f in (schleifender) Verbindung stehen. Vom Sender $S_{VW}$ (z. B. einem Dickenschwinger) werden Volumenschalwellen im akustischen Koppelelement 71 angeregt, die wiederum in der Grenzschicht der Walze 1f gerichtet laufende Rayleighwelle erzeugen. Diese breiten sich bis zum akustischen Koppelelement 70 des Empfängers $E_{VW}$ aus, wo sie in Volumenschallwellen gewandelt und vom Empfänger $E_{VW}$ sensiert werden. Die Meßstrecke erstreckt sich vom Spalt zwischen den Walzen 1f, 1ff bis zur Auftagestelle des akustischen Koppelelements 70.

Eine der Figur 1e ähnliche Variante mit einer von einem Festkörper 1g gebildeten geneigten Ebene zeigt Figur 1k. Jedoch erfolgt hier die Einkopplung der akustischen Energie von der freien, an das akustisch schlecht ankoppelbare Medium 2a angrenzenden Flüssigkeitsoberfläche her. Dazu werden zwei Keilwandler 72, 73 verwendet, deren Keilwinkel genau an die zu erzeugende Rayleighwelle angepaßt sind. Sie tragen auf der der Wellenlaufrichtung entgegengesetzten Seite Dickenschwinger, die als Sender $S_{VW}$ bzw. Empfänger $E_{VW}$ dienen. Die im Keilwandler 72 vom Dickenschwinger erzeugten Volumenschallwellen führen zu Kompressionswellen in der Flüssigkeitsschicht 3a, die wiederum aufgrund ihres Auftreffwinkels auf der Festköroperoberfläche Rayleighwellen RW anregen. Wenn die Rayleighwellen den Bereich des anderen Keilwandlers 73 erreichen, konvertieren sie wieder zu Kompressionswellen. Die dadurch im Keilwandler 73 angeregten Volumenwellen werden vom Empfänger $E_{VW}$ sensiert.

Das Anwendungsbeispiel der Figuren 1l und 1m betrifft eine Meßanordnung zur Ermittlung der Viskosität eines im Kanal 62 strömenden Mediums 3, kurz vor seinem Austritt aus einer Düse. Zur Begrenzung der Schichtdicke der zu messenden Flüssigkeit 3a wird ein Festkörper 2b verwendet, dessen Rayleighwellengeschwindigkeit größer als die der gegenüberliegenden Meßstrecke 106 ist. Damit besteht eine enge Verwandtschaft zu der in Figur 1a schematisch dargestellten Meßanordnung. Der die Meßstrecke 106 tragende Festkörper 1h besitzt auf der einen Seite eine sich verjüngende äußere Kontur, die mit einer schmalen Stimfläche abschließt. Daran ist eine Sender-/Empfänger-Einheit $S_{VW}/E_{VW}$ zum Senden und Empfangen von Volumenschallwellen angeschlossen, die periodisch im Sendemodus (Figur 1l) und Empfangsmodus (Figur 1m) betrieben wird. Auf der gegenüberliegenden Seite ist ein Modenwandler 4 angeordnet, an dem die Volumenschallwellen zu Rayleighwellen konvertiert werden. Diese breiten sich entlang der Meßstrecke 106 aus und werden bei Erreichen des Reflektors 40 reflektiert, so daß sie die Meßstrecke ein zweites Mal durchlaufen. Am Modenwandler 4 wird dann die mit der zur Flüssigkeitsschicht gehörenden Meßinformation "beladene" Rayleighwelle wieder in eine Volumenschallwelle konvertiert, die In Richtung auf der Sender-/Empfänger-Einheit zurückläuft.

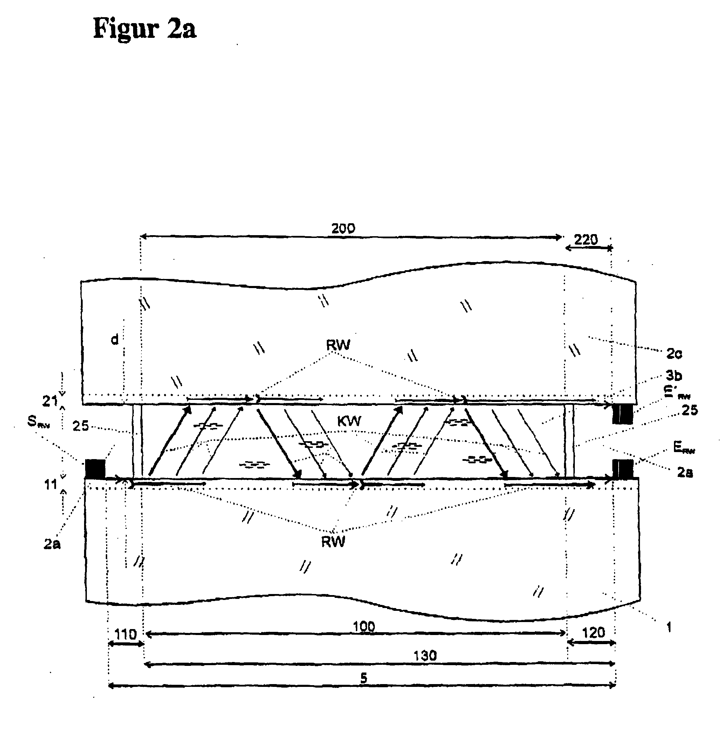

Die nachfolgenden Ausführungsbeispiele der Figuren 2a bis 2i beschreiben in stilisierter Form Möglichkeiten der Nutzung der Erfindungsvariante 2, wonach die von dem ersten wellenführenden Festkörper in die angrenzende Flüssigkeit ausgekoppelte Kompressionswelle in einen gegenüberliegenden Festkörper wieder eingekoppelt wird. Durch dieses "Einfangen" der Auskopplung unterliegt die Dicke der Flüssigkeitsschicht über der Meßstrecke keiner oberen Begrenzung und kann insbesondere dicker als ¼ der Wellenlänge der Kompressionswelle $\lambda_{KW}$ in der Flüssigkeit sein. Diese Erfindungsvariante 2 besitzt drei Untervarianten wobei die ersten beiden darin bestehen, die Kompressionswelle auf einer gegenüberliegenden Festkörperoberfläche, die bei gleichen Rayleighwellengeschwindigkeiten parallel zur ersten liegt, oder die eine den unterschiedlichen Geschwindigkeiten angepaßte gegenseitige Neigung aufweisen, wieder zu Rayleighwellen einzukoppeln. Die dritte Untervariante besteht darin, die Kompressionswelle in einen gegenüberliegenden Festkörper, der mit Empfängern in Verbindung steht oder selbst ein Empfänger für Kompressionswellen ist, einzukoppeln.

So zeigt Figur 2a ein akustisches Übertragungssystem 5 aus einem Festkörper 1 und einem gegenüber liegenden Festkörper 2c, wobei die beiden Festkörper 1 und 2c gleiche Rayleighwellengeschwindigkeiten $v^{(1)}_{RW} = v^{(2)}_{RW}$ besitzen und die Oberflächen der beiden Festkörper 1 und 2c parallel liegen. Festkörper 1 trägt an seinem einen Ende einen Sender für Rayleighwellen $S_{RW}$ und an seinem anderen Ende einen Empfänger für Rayleighwellen $E_{RW}$. In der Grenzschicht 11 breitet sich die Rayleighwelle RW aus. Durch seitliche Begrenzungselemente 25 wird die zu messende Flüssigkeit 3b begrenzt und so die Meßstrecke 100 definiert, an die sich links und rechts die Zuleitungstrecke 110 und die Ableitungsstrecke 120 anschließen, Die Dicke d der Flüssigkeitsschicht 3b muß dicker als die viskose Grenzschicht der Flüssigkeit sein und unterliegt keiner weiteren Bedingung. Die Festkörpergrenzflächen im Bereich der Zu- und Ableitungsstrecken 110, 120, 220 grenzen an ein Medium 2a mit schlechter akustischer Ankoppelbarkeit (z.B. Luft oder andere Gase). Die Begrenzungselemente 25 sind so ausgebildet, daß sie den Durchgang der Rayleighwelle im wesentlichen nicht behindern, damit die durch die Wechselwirkung mit der Flüssigkeit der Rayleighwelle aufgeprägte Information möglichst nicht verfälscht bzw. abgeschwächt wird. Auf der Oberfläche des dem Festkörper 1 gegenüberliegenden Festkörpers 2c werden durch die Kompressionswellen KW In der Flüssigkeit, die von der sich dadurch abschwächenden Rayleighwelle RW in 11 angeregt sind, Rayleighwellen RW angeregt, die sich in der Grenzschicht 21 ausbreiten. Die Rayleighwellen RW in 21 regen, sich dadurch abschwächend, ihrerseits Kompressionswellen KW in der Flüssigkeit an, die erneut Rayleighwellen RW in 11 anregen. Dadurch entsteht ein Mechanismus der wechselseitigen Anregung von Rayleighwellen RW in den gegenüberliegenden Festkörpergrenzflächen 11, 21, vermittelt durch die Kompressionswellen KW in der Flüssigkeit. Durch den die Flüssigkeit 3b berührenden Teil der Oberfläche von 2c und die seitlichen Begrenzungen 25 wird eine weitere Meßstrecke 200 definiert, an die sich rechts die Ableitungsstrecke 220 hin zu einem weiteren Empfänger $E'_{RW}$ anschließt. Die dargestellte Meßvorrichtung ist auch dann funktionstüchtig, falls nur einer der beiden, an den Ableitungsstrecken 120 bzw. 220 angeschlossenen Empfängern $E_{RW}$, $E'_{RW}$ zum Einsatz kommt.

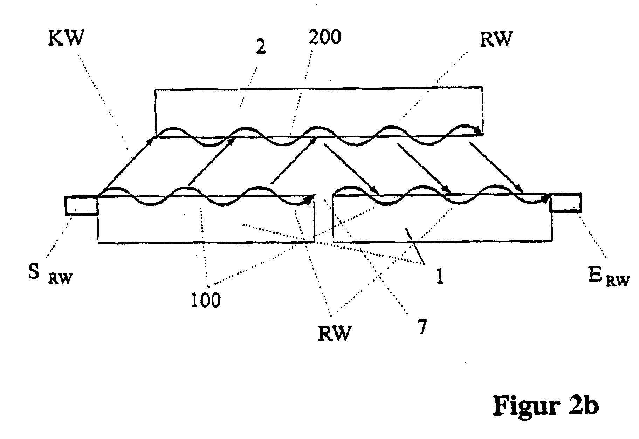

Figur 2b zeigt die schematische Darstellung des Spaltes zwischen einer sich in ihrem Gehäuse 1 bewegenden Schnecke mit der Schneckenschulter 2 und diesem Gehäuse 1. Gehäuse 1 und Schneckenschulter 2 besitzen die gleiche Rayleighwellengeschwindigkeit $v^{(1)}_{RW} = v^{(2)}_{RW}$. Durch einen Sender für Rayleighwellen $S_{RW}$ werden auf dem Gehäuse 1 Rayleighwellen RW erzeugt, die sich auf der Oberfläche des Gehäuses 1 ausbreiten und so die Meßstrecke 100 definieren. Dabei regen sie in der angrenzenden Flüssigkeit 3 Kompressionswellen KW an. Zu bei gleichförmiger Bewegung der Schnecke periodisch wiederkehrenden Zeitpunkten steht die Schneckenschulter 2 in der dargestellten Weise der Meßstrecke 100 zwischen Sender $S_{RW}$ und Empfänger $E_{RW}$ parallel gegenüber und ermöglicht so die Anregung von Rayleighwellen RW durch Kompressionswellen KW auf der Schneckenschulter 2. Diese auf der Oberfläche von 2 sich ausbreitenden Rayleighwellen RW definieren dadurch eine weitere Meßstrecke 200 und erzeugen wiederum Kompressionswellen KW in der Flüssigkeit, die ihrerseits Rayleighwellen auf dem Gehäuse 1 anregen. Letztere gelangen, bei geeigneter Dimensionierung, in den Empfänger für Rayleighwellen $E_{RW}$. Der Vorteil der skizzierten Vorrichtung besteht in der Nutzung vorhandener Bauteile als Träger der Rayleighwellen. Der Weg der akustischen Übertragung vom Sender $S_{RW}$ über Rayleighwellen RW auf dem Gehäuse 1, Kompressionswellen KW in der Flüssigkeit, Rayleighwellen RW auf der Schneckenschulter 2, wiederum Kompressionswellen KW in der Flüssigkeit und erneut Rayleighwellen RW auf dem Gehäuse 1, die schließlich in den Empfänger $E_{RW}$ gelangen, ermöglicht eine Signalübertragung von Sender zu Empfänger, die auf direktem Weg über Rayleighwellen RW auf dem Gehäuse 1 nicht möglich wäre, entweder weil deren Entfernung zu groß ist und die Abstrahlung von Kompressionswellen die Rayleighwellen zu stark schwächen würde, oder weil eine direkte Übertragung von Sender $S_{RW}$ zu Empfänger $E_{RW}$ durch eine Unterbrechung 7 der Laufstecke, z.B. durch einen Einlaß, unmöglich ist.

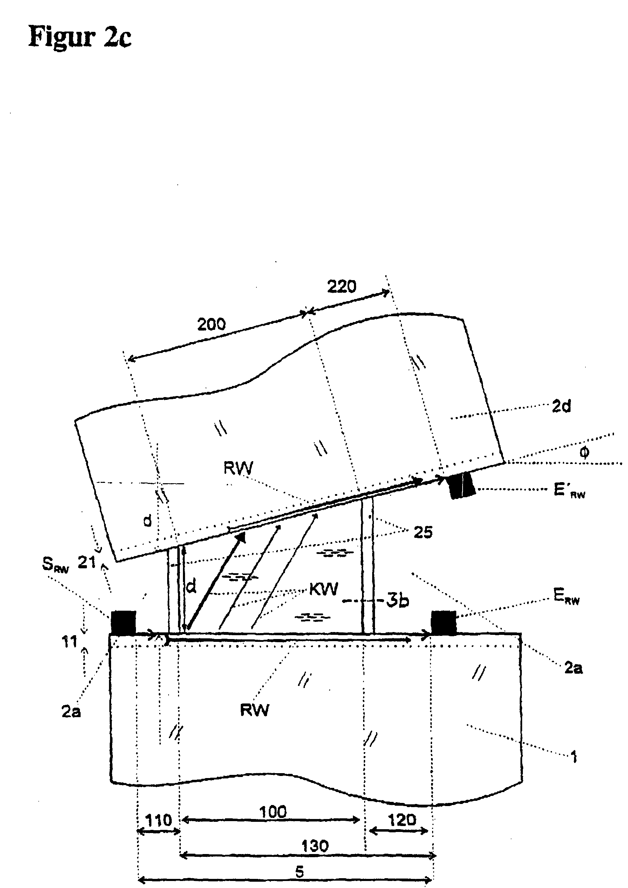

Figur 2c zeigt ein akustisches Übertragungssystem 5 aus einem Festkörper 1 und einem gegenüber liegenden Festkörper 2d, wobei die beiden Festkörper 1 und 2d unterschiedliche Rayleighwellengeschwindigkeiten $v^{(1)}_{RW} \neq v^{(2)}_{RW}$ besitzen, so daß ein Anregen von Rayleighwellen RW in der Grenzschicht 21 von 2d durch die Kompressionswellen KW, die ihrerseits durch Rayleighwellen RW, die sich in der Grenzschicht 11 auf dem Festkörper 1 ausbreiten, angeregt werden, durch die gegenseitige Neigung der Oberflächen der Festkörper 1 und 2d zueinander unter dem Neigungswinkel $\phi$ erreicht wird. Der Festkörper 1 trägt an seinem einen Ende einen Sender für Rayleighwellen $S_{RW}$ und an seinem anderen Ende einen Empfänger für Rayleighwellen $E_{RW}$. Durch seitliche Begrenzungselemente 25 wird die zu messende Flüssigkeit 3b begrenzt und so die Meßstrecke 100 definiert, an die sich links und rechts die Zuleitungstrecke 110 und die Ableitungsstrecke 120 anschließen. Durch den die Flüssigkeit 3b berührenden Teil der Oberfläche von 2d und die seitlichen Begrenzungen 25 wird eine weitere Meßstrecke 200 definiert, an die sich rechts die Ableitungsstrecke 220 hin zum Empfänger $E'_{RW}$ anschließt. Die Dicke d der Flüssigkeitsschicht 3b muß dicker als die viskose Grenzschicht der Flüssigkeit sein und unterliegt keiner weiteren Bedingung. Die Festkörpergrenzflächen im Bereich der Zu- und Ableitungsstrecken 110, 120, 220 grenzen an ein Medium 2a mit schlechter akustischer Ankoppelbarkeit (z.B. Luft oder andere Gase). Die Begrenzungselemente 25 sind so ausgebildet, daß sie den Durchgang der Rayleighwelle im wesentlichen nicht behindern, damit die durch die Wechselwirkung mit der Flüssigkeit der Rayleighwelle aufgeprägte Information möglichst nicht verfälscht bzw. abgeschwächt wird. Wie schon zu Figur 2a beschrieben, bleibt die Meßvorrichtung auch dann funktionstüchtig, falls nur einer der beiden Empfänger $E_{RW}$ oder $E'_{RW}$, die auf den Festkörpern 1 bzw. 2d sitzen, zum Einsatz kommt.

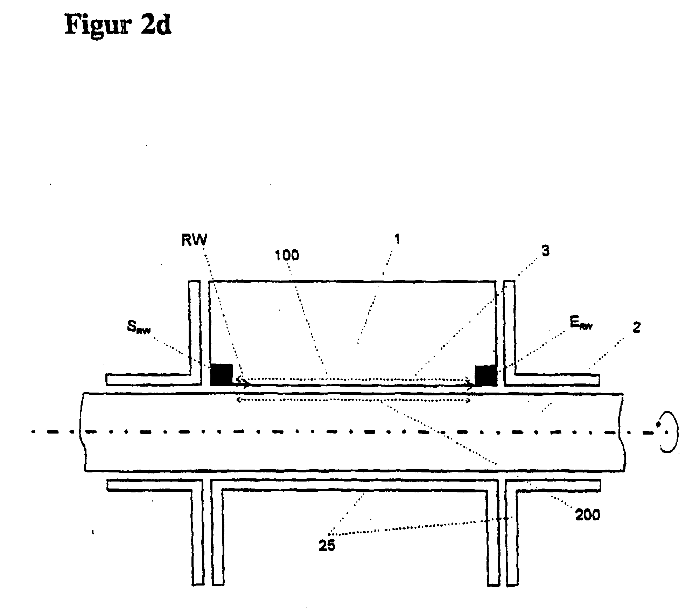

Figur 2d zeigt die schematische Darstellung eines Gleitlagers in dem sich eine Welle 2 befindet. Ein Teil des Lagersitzes 25 ist als die Meßstrecke tragender Festkörper 1 ausgebildet. Der Festkörper 1 trägt sowohl Sender $S_{RW}$ und Empfänger $E_{RW}$ für Rayleighwellen RW, die sich auf der Oberfläche des Festkörpers 1 entlang der Verbindungsstrecke zwischen Sender und Empfänger ausbreiten, wodurch die Meßstrecke 100 definiert wird. Die zu messende Flüssigkeit 3 befindet sich im Lagerspalt zwischen dem die Meßstrecke 100 tragenden Festkörper 1 und der Welle 2. Die sich entlang der Meßstrecke 100 ausbreitende Rayleighwelle bewirkt die Anregung einer (nicht dargestellten) Kompressionswelle in der Flüssigkeit 3, diese wiederum regt eine weitere Rayleighwelle an, die sich auf der Welle 2, die parallel zum Festkörper 1 liegt und die gleiche Rayleighwellengeschwindigkeit $v^{(1)}_{RW} = v^{(2)}_{RW}$ besitzt, ausbreitet, wodurch eine der Meßstrecke 100 gegenüberliegende weitere Meßstrecke 200 entsteht. Die Rayleighwelle auf der Welle 2 regt ihrerseits Kompressionswellen in der Flüssigkeit 3 an, die erneut Rayleighwellen RW auf dem Festkörper 1 anregen. Die Vorrichtung von Figur 2d ermöglicht die Messung von Flüssigkeitseigenschaften direkt im Lagerspalt eines Gleitlagers unter Verwendung der Oberflächen von vorhandenen Bauteilen als Träger von Rayleighwellen.

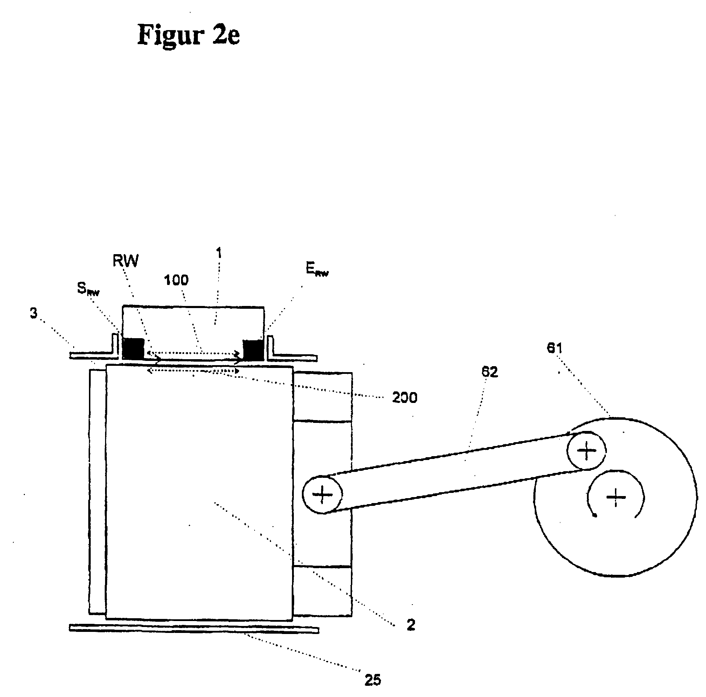

Anstelle eines Gleitlagers für eine rotierende Welle zeigt Figur 2e die schematische Darstellung eines Gleitlagers für einen vor und zurückgleitenden Kolben 2. Ein Teil des den Kolben 2 führenden Zylinders 25 ist als die Meßstrecke tragender Festkörper 1 ausgebildet. Der Festkörper 1 trägt sowohl Sender $S_{RW}$ und Empfänger $E_{RW}$ für Rayleighwellen RW, die sich auf der Oberfläche vom Festkörper 1 entlang der Verbindungsstrecke zwischen Sender und Empfänger ausbreiten, wodurch die Meßstrecke 100 definiert wird. Die zu messende Flüssigkeit 3 befindet sich im Lagerspalt zwischen dem Festkörper 1 und dem Kolben 2. Die sich auf dem Festkörper 1 ausbreitende Rayleighwelle bewirkt die Anregung einer (nicht dargestellten) Kompressionswelle in der Flüssigkeit 3, diese wiederum regt eine weitere Rayleighwelle an, die sich auf dem Kolben 2, der parallel zu Festkörper 1 liegt und die gleiche Rayleighwellengeschwindigkeit $v^{(1)}_{RW} = v^{(2)}_{RW}$ besitzt, ausbreitet, wodurch eine der Meßstrecke 100 gegenüberliegende weitere Meßstrecke 200 entsteht. Die Rayleighwelle auf dem Kolben 2 regt ihrerseits Kompressionswellen in 3 an, die erneut Rayleighwellen RW auf dem Festkörper 1 anregen. Ebenso wie die Vorrichtung von Figur 2d ermöglicht die Vorrichtung von Figur 2e die Messung von Flüssigkeitseigenschaften direkt im Gleitspalt unter Verwendung der Oberflächen von vorhandenen Bauteilen als Träger von Rayleighwellen.

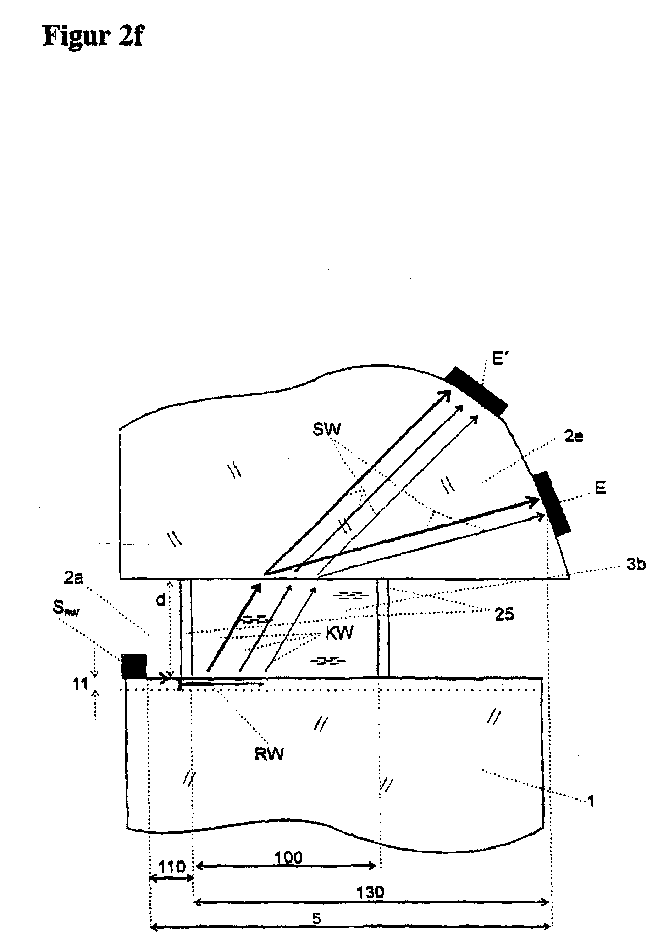

Figur 2f zeigt ein akustisches Übertragungssystem 5 aus einem Festkörper 1 und einem gegenüber liegenden Festkörper 2e, der eine geringere Geschwindigkeit $v^{(2)}_{RW}$ für die Rayleighwelle besitzt als die Rayleighwellengeschwindigkeit des Festkörpers 1 $v^{(1)}_{RW}$. Dieser Festkörper 1 trägt an seinem einen Ende einen Sender für Rayleighwellen $S_{RW}$. In der Grenzschicht 11 breitet sich die Rayleighwelle RW aus. Durch seitliche Begrenzungselemente 25 wird die zu messende Flüssigkeit 3b begrenzt und so die Meßstrecke 100 definiert, an die sich links die Zuleitungstrecke 110 anschließt. Die Dicke d der Flüssigkeitsschicht 3b muß dicker als die viskose Grenzschicht der Flüssigkeit sein und unterliegt keiner weiteren Bedingung. Die Festkörpergrenzfläche im Bereich der Zuleitungsstrecke 110 grenzt an ein Medium 2a mit schlechter akustischer Ankoppelbarkeit (z.B. Luft oder andere Gase). Die Begrenzungselemente 25 sind so gestaltet, daß sie einen guten Durchtritt für die Rayleighwelle RW ermöglichen. An der Oberfläche des dem Festkörper 1 gegenüberliegenden Festkörpers 2e werden durch die Kompressionswellen KW in der Flüssigkeit, die von der sich dadurch abschwächenden Rayleighwelle RW in der Grenzschicht 11 angeregt sind, Volumenschallwellen SW angeregt, die sich im Festkörper 2e in definierten Richtungen ausbreiten und zu Empfängern E und E', die mit dem Festkörper 2e in Verbindung stehen, gelangen.

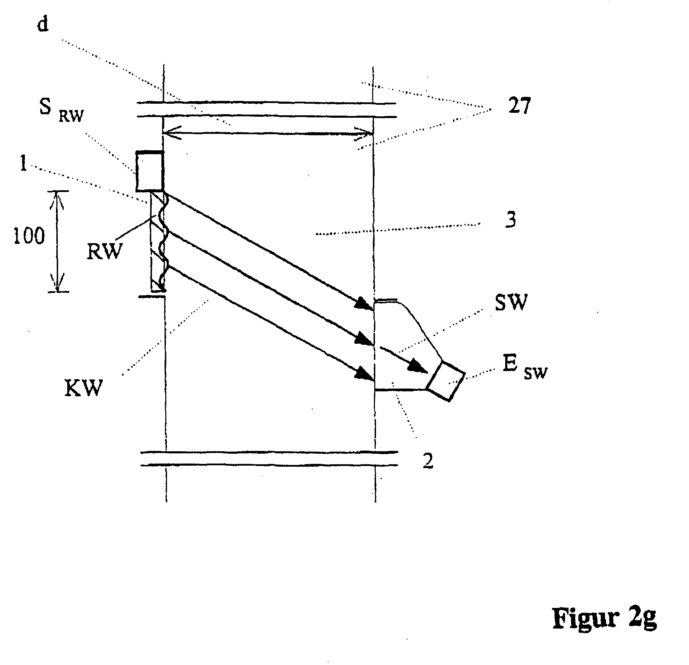

Figur 2g zeigt die schematische Darstellung eines die Meßvorrichtung tragenden Stücke einer Rohrleitung 27 vom Durchmesser d, die die zu messende Flüssigkeit 3 enthält. Auf einem in die Rohrwand integrierten Festkörper 1 breiten sich Rayleighwellen RW aus, die von einem ebenfalls in die Rohrwand integrierten Sender für Rayleighwellen $S_{RW}$ angeregt werden. Die Länge der Ausbreitungstrecke der Rayleighwellen definiert die Meßstrecke 100. Diese Rayleighwellen bewirken die Anregung von Kompressionswellen KW in der Flüssigkeit, die auf die gegenüberliegende Rohrwand treffen und dort in einem geeigneten Festkörper 2 Volumenschallwellen SW anregen, die von diesem Festkörper 2 zu einem Empfänger $E_{SW}$ geleitet werden. Das dargestellte Stück einer Rohrleitung kann so ausgeführt werden, daß ein Einbau in bestehende Systeme möglich ist, wobei nur eine geringe Querschnittsveränderung bewirkt wird.

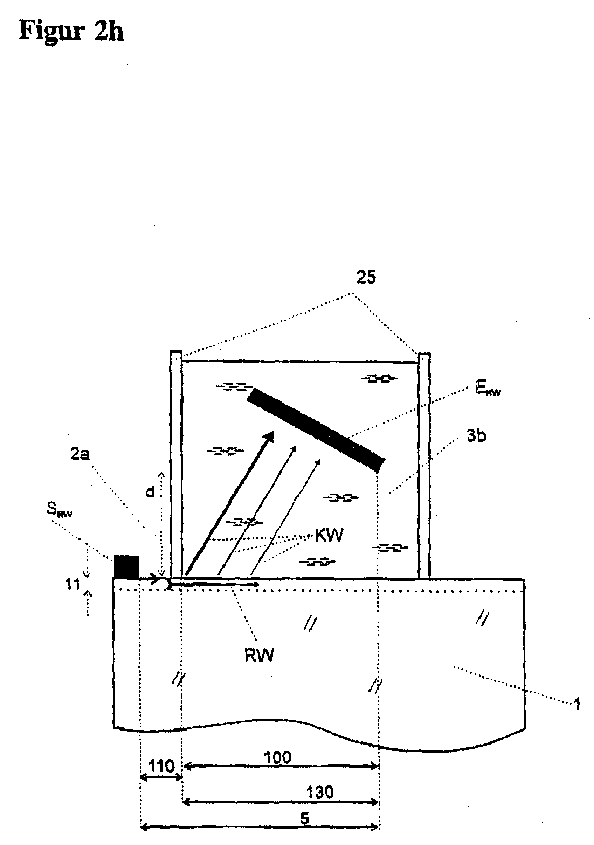

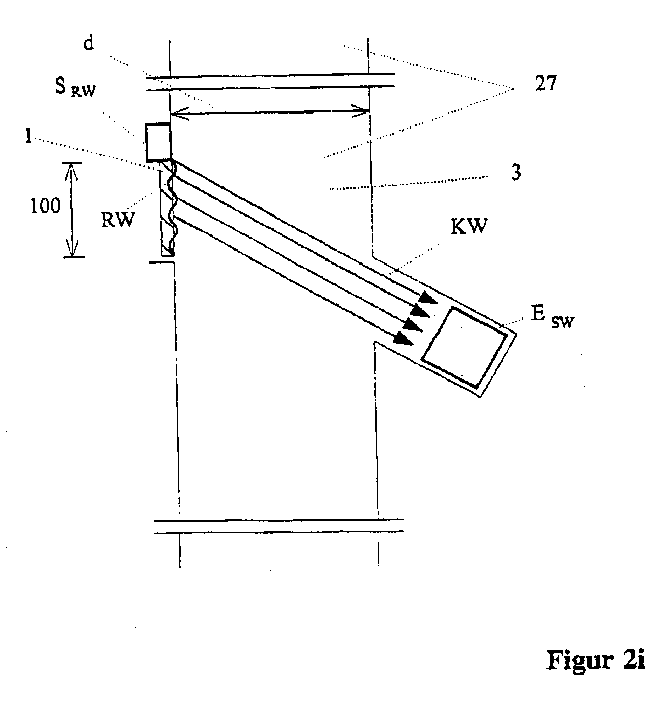

Die gegenüberliegende Festkörperoberfläche, auf die die sich in der Flüssigkeit ausbreitende Kompressionswelle trifft, kann direkt die Oberfläche eines Empfängers für Kompressionswellen sein. So zeigt Figur 2h ein akustisches Übertragungssystem 5 aus einem Festkörper 1 und einem gegenüber liegenden Festkörper $E_{KW}$ der ein Empfänger für Kompressionswellen ist. Dieser Festkörper 1 trägt an seinem einen Ende einen Sender für Rayleighwellen $S_{RW}$. In der Grenzschicht 11 breitet sich die Rayleighwelle RW aus, deren gesamte Ausbreitungsstrecke die Meßstrecke 100 definiert, an die sich links die Zuleitungstrecke 110 anschließt. Durch seitliche Begrenzungselemente 25 wird die zu messende Flüssigkeit 3b begrenzt. Die Dikke d der Flüssigkeitsschicht 3b muß dicker als die viskose Grenzschicht der Flüssigkeit sein und unterliegt keiner weiteren Bedingung. Die Festkörpergrenzfläche im Bereich der Zuleitungsstrecke 110 grenzt an ein Medium 2a mit schlechter akustischer Ankoppelberkeit (z. B. Luft oder andere Gase). Die Begrenzungselemente 25 sind so gestaltet, daß sie einen guten Durchtritt für die Rayleighwelle RW ermöglichen.

Figur 2i zeigt die schematische Darstellung eines die Meßvorrichtung tragenden Stücks einer Rohrleitung 27 vom Durchmesser d, die die zu messende Flüssigkeit 3 enthält. Auf einem in die Rohrwand integrierten Festkörper 1 breiten sich Rayleighwellen RW aus, die von einem ebenfalls in die Rohrwand integrierten Sender für Rayleighwellen $S_{RW}$ angeregt werden. Die Länge der Ausbreitungstrecke der Rayleighwellen definiert die Meßstrecke 100. Diese Rayleighwellen bewirken die Anregung von Kompressionswellen KW in der Flüssigkeit, die auf einen in einem an die gegenüberliegende Rohrwand angeschlossenen Rohrstutzen sitzenden Empfänger für Kompressionswellen $E_{KW}$ treffen. Das dargestellte Stück einer Rohrleitung kann so ausgeführt werden, daß ein Einbau in bestehende Systeme möglich ist, wobei nur eine geringe Querschnittsveränderung bewirkt wird.

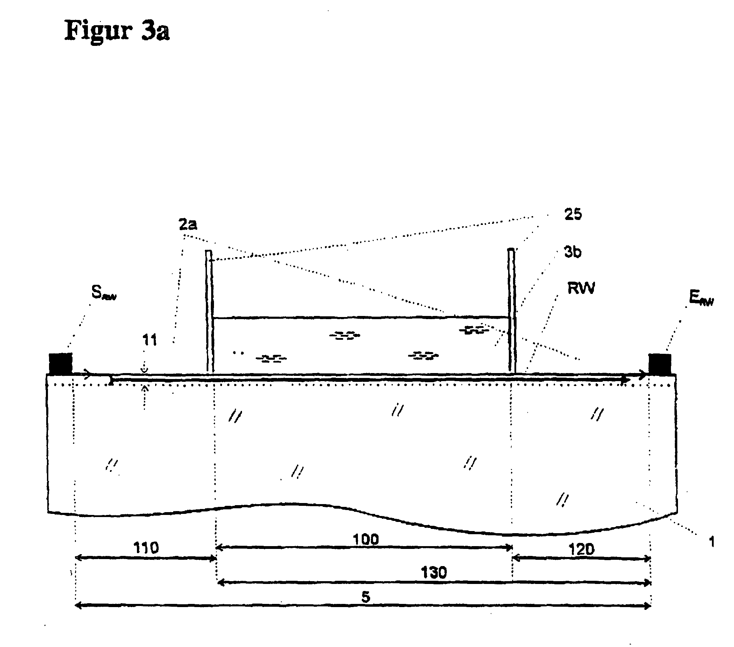

Die nachfolgenden Ausführungsbeispiele der Figuren 3a bis 3f beschreiben in stilisierter Form Möglichkeiten der Nutzung der Erfindungsvariante 3, wonach als wellenführende Festkörperoberfläche ein Material verwendet wird, das eine geringere Geschwindigkeit für die Ausbreitung von Rayleighwellen besitzt als die Geschwindigkeit der Kompressionswellen in der zu messenden, angrenzenden Flüssigkeit beträgt. Dadurch unterliegt die Dicke der Flüssigkeitsschicht über der Meßstrecke keiner oberen Begrenzung und kann insbesondere dicker als ¼ der Wellenlänge der Kompressionswelle $\lambda_{KW}$ in der Flüssigkeit sein.

So zeigt Figur 3a ein akustisches Übertragungssystem 5 aus einem Festkörper 1, dessen Rayleighwellengeschwindigkeit $v^{(1)}_{RW}$ kleiner ist als die Kompressionswellengeschwindigkeit $v_{KW}$ der zu messenden Flüssigkeit 3b, 1 trägt an seinem einen Ende einen Sender für Rayleighwellen $S_{RW}$ und an seinem anderen Ende einen Empfänger für Rayleighwellen $E_{RW}$, in der Grenzschicht 11 breitet sich die Rayleighwelle RW aus. Durch seitliche Begrenzungselemente 25 wird die zu messende Flüssigkeit 3b begrenzt und so die Meßstrecke 100 definiert, an die sich links und rechts die Zuleitungstrecke 110 und die Ableitungsstrecke 120 anschließen. Die Dicke der Flüssigkeitsschicht 3b muß dicker als die viskose Grenzschicht der Flüssigkeit sein und unterliegt keiner weiteren Bedingung. Die Festkörpergrenzfläche im Bereich der Zu- und Ableitungsstrecken 110, 120 grenzt an ein Medium 2a mit schlechter akustischer Ankoppelbarkeit (z.B. Luft oder andere Gase). Die Begrenzungselemente 25 sind so ausgebildet, daß sie den Durchgang der Rayleighwelle im wesentlichen nicht behindern, damit die durch die Wechselwirkung mit der Flüssigkeit der Rayleighwelle aufgeprägte Information möglichst nicht verfälscht bzw. abgeschwächt wird. Dies kann beispielsweise durch Verwendung von Dichtmaterialien wie PU-Schaum oder Gummilippen erreicht werden.

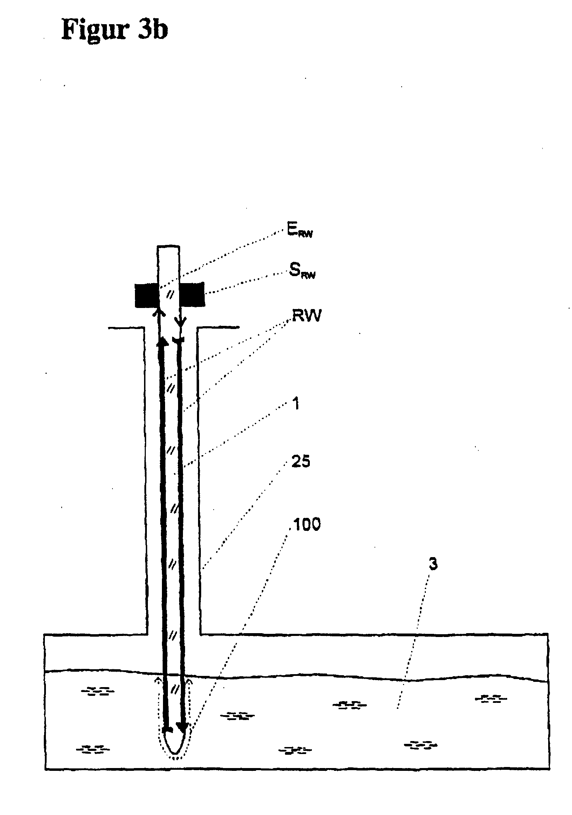

Rayleighwellen besitzen die Eigenschaft, physikalisch an die Oberfläche des sie führenden Festkörpers gebunden zu sein. Diese Wellenleitung erfolgt nahezu verlustios und ermöglicht somit räumlich ausgedehnte Festkörper als Träger der Welle. Die mögliche große räumliche Entfernung von Sender und Empfänger einerseits und Meßstrecke andererseits erlaubt Messungen an schlecht zugänglichen Orten oder an Orten bzw. in Medien an bzw. in denen Bedingungen (z.B. hohe Temperaturen, chemische Aggressivität, elektromagnetische Störungen) vorliegen, denen Sender und/oder Empfänger nicht ausgesetzt werden können. So zeigt Figur 3b einen langgestreckten, lanzenförmigen Festkörper 1 mit einer Rayleighwellengeschwindigkeit kleiner als die Geschwindigkeit der Kompressionswelle in der Flüssigkeit 3, dessen eine Ende Sender $S_{RW}$ und Empfänger $E_{RW}$ für die Rayleighwellen RW trägt und dessen anderes Ende in die zu messende Flüssigkeit 3 eintaucht. Der benetzte Teil der die Rayleighwelle RW tragenden Oberfläche des Festkörpers 1 bildet die Meßstrecke 100. Da die Veränderung der Kenngrößen der Rayleighwelle, die durch den Durchgang durch die Meßstrecke bewirkt werden von der Länge der Meßstrecke und von den Eigenschaften der Flüssigkeit 3 abhängen, kann eine Vorrichtung der dargestellten Art entweder als Füllstandssensor benutzt werden, nämlich dann, wenn die Flüssigkeit konstante Eigenschaften besitzt (oder die sich ändernden Flüssigkeitseigenschaften die Rayleighwelle nicht beeinflussen) oder, bei fester Eintauchtiefe, als Sensor zum Messen der Flüssigkeitseigenschaften (z.B. Viskosität).

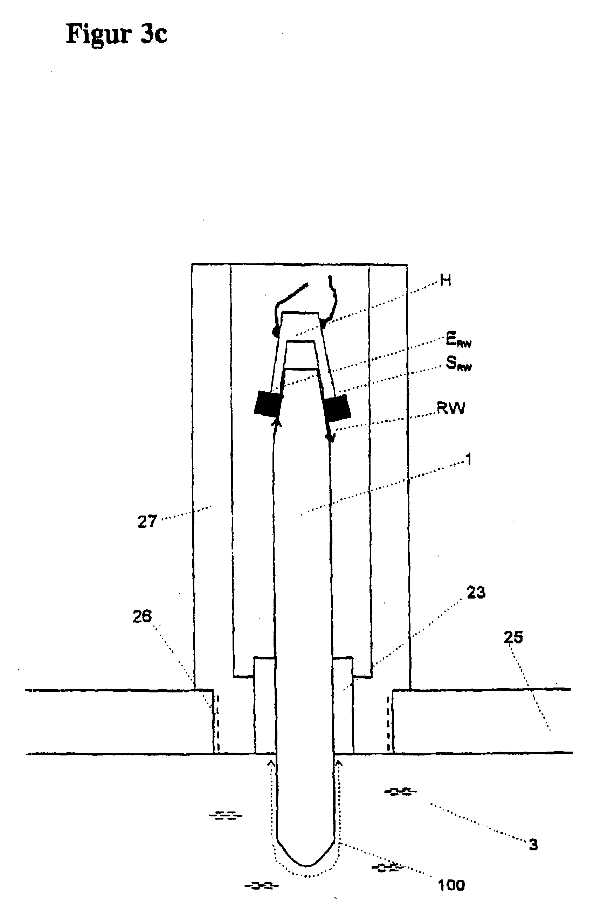

Die Figur 3c zeigt eine Variante der Ausgestaltung, die die Messung an einer Flüssigkeit in einem abgeschlossenen Behälter ermöglicht. In der Behälterwand 25 ist mit einer Verschraubung 26 eine Hülse 27 befestigt. Diese Hülse 27 dient als Träger für einen lanzenartigen Festkörper 1, der die Rayleighwelle führt und eine geringere Geschwindigkeit für die Rayleighwelle besitzt als die Geschwindigkeit der Kompressionswelle in der Flüssigkeit. Dieser Festkörper 1 ist in der Hülse 27 mit einem Dichtmaterial 23 befestigt, das den Durchtritt der Rayleigwellen gestattet. Somit wird eine Anordnung erreicht, bei der das eine Ende des die Rayleighwelle führenden Festkörpers 1 in Kontakt mit der zu messenden Flüssigkeit 3 steht und das andere Ende einen Halter H mit Sender $S_{RW}$ und Empfänger $E_{RW}$ für die Rayleighwellen trägt. Die dargestellte Formgebung des Festkörpers 1 im Bereich des formschlüssigen Halters H ermöglicht eine einfach handhabbare Ankopplung von Sender $S_{RW}$ und Empfänger $E_{RW}$ an der Festkörper 1.

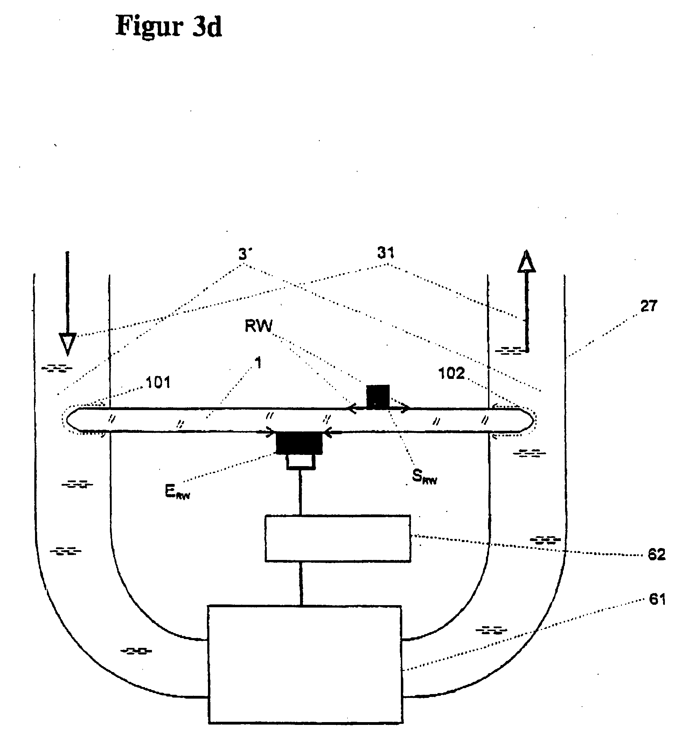

In Figur 3d wird eine Meßvorrichtung skizziert, die auf einem einstückigen, die Rayleighwelle führenden Festkörper 1 zwei Meßstrecken 101 und 102 besitzt. Dadurch können mit einer Meßvorrichtung die Eigenschaften einer Flüssigkeit 3' in einer Rohrleitung 27 an zwei verschiedenen Stellen, vor und hinter einem Reaktor 61, gemessen werden. Der Festkörper 1 besitzt eine Rayleighwellengeschwindigkeit, die kleiner ist als die Geschwindigkeit der Kompressionswelle in der Flüssigkeit 3'. Der Festkörper 1, der einen bidirektionalen Sender für Rayleighwellen $S_{RW}$ und einen ebenso bidirektionalen Empfänger für Rayleighwellen $E_{RW}$ tragt, durchdringt die Wand der Rohrleitung 27 in der in Figur 3c dargestellten Art. Die asymmetrische Anbringung des Sender $S_{RW}$ bewirkt unterschiedlich lange Laufstrecken für die Rayleighwellen, die die Meßstrecke 101 bzw. die Rayleighwellen, die Meßstrecke 102 durchlaufen, wodurch - bei gepulstem Sendesignal - die Wellenpakete, die die unterschiedlich langen Wege zurückgelegt haben, zu unterschiedlichen Zeiten im Empfänger $E_{RW}$ eintreffen und so von einem Empfänger mit zeitaufgelöster Messung aufgenommen werden können. Sind Sender $S_{RW}$ und Empfänger $E_{RW}$ für Rayleighwellen symmetrisch angeordnet, so sind zur Unterscheidung der Signale der beiden Meßstrecken 101, 102 zwei getrennte Empfänger notwendig. Das gewonnene Meßsignal kann über eine Regelung 62 die Betriebsbedingungen des Reaktors 61 bestimmen.

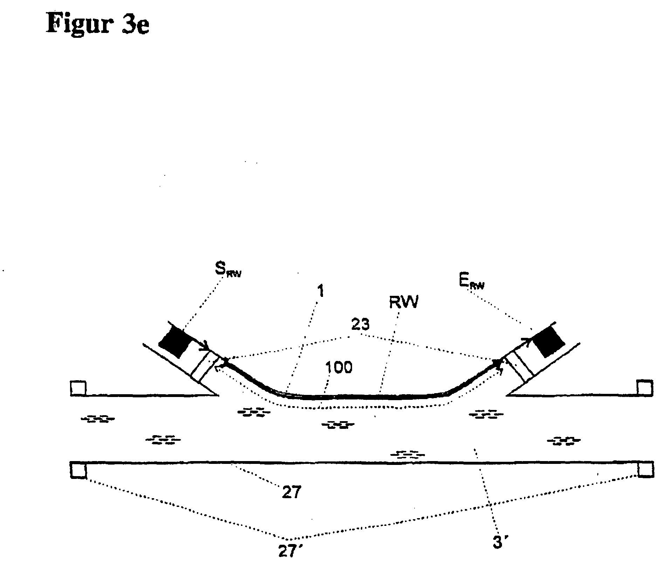

In Figur 3e wird schematisch eine Ausgestaltung gezeigt, die die Meßvorrichtung in eine, die Flüssigkeit 3' enthaltende Rohrleitung 27 integriert, ohne den Querschnitt der Rohrleitung 27 zu verringern. An des Rohr 27 sind zwei Rohrstutzen angebracht, von denen einer den Sender für die Rayleighwellen $S_{RW}$ und der andere den Empfänger für die Rayleighwellen $E_{RW}$ trägt. $S_{RW}$ und $E_{RW}$ sitzen dabei außerhalb der zu messenden Flüssigkeit 3', die durch das die Rohrstutzen abdichtenden Dichtmaterialien 23 eingeschlossen wird. Diese Dichtmaterialien 23 sind so ausgeführt, daß sie ein Durchtreten der Rayleighwelle RW ermöglichen. Der wellenführende Festkörper 1, wird entweder von der Rohrwand selbst gebildet, falls diese aus einem Material besteht, das eine geringere Geschwindigkeit für die Rayleighwelle $v^{(1)}_{RW}$ besitzt als die Geschwindigkeit der Kompressionswelle $v_{KW}$ in der angrenzenden Flüssigkeit 3' oder von einem in die Rohrwand eingelassenen, auf die Rohrwand aufgebrachten oder durch oben beschriebene, geeignete Veränderung des Materials der Rohrwand erzeugten, geeigneten Material, das sich zwischen Sender $S_{RW}$ und Empfänger $E_{RW}$ erstreckt, und die genannte Geschwindigkeitsbedingung $v^{(1)}_{RW} < v_{KW}$ erfüllt. Die Laufstrecke der Rayleighwelle RW, die innerhalb der beiden Dichtmaterialien 23 liegt und von der Flüssigkeit 3' benetzten ist, definiert die Meßstrecke 100. Das dargestellte Rohrstück kann mit den Flanschanschlüssen 27' in bestehende Leitungen eingebaut werden.

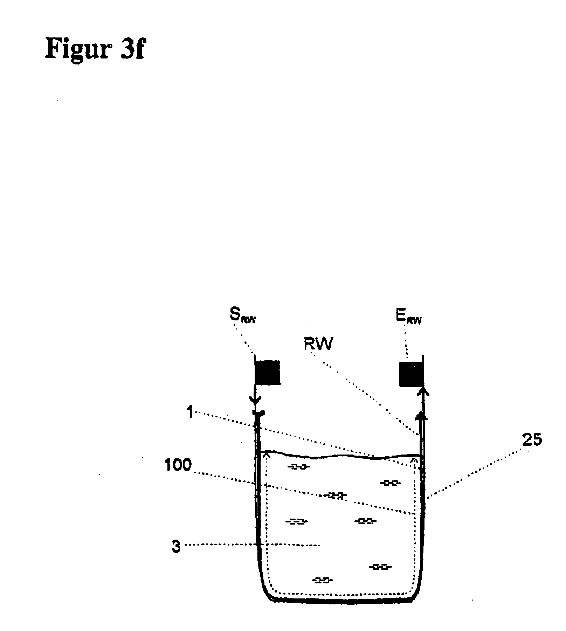

Figur 3f zeigt, daß analog zu der in Figur 3e für den Fall einer geschlossenen Rohrleitung dargestellten Weise, ebenso die Wand eines vorliegenden, die zu messende Flüssigkeit 3 enthaltenden Behälters 25 als die Rayleighwelle führenden Festkörper 1 benutzt werden kann. Auf den nicht von der Flüssigkeit 3 benetzten Enden der Behälterwand sind Sender $S_{RW}$ und Empfänger $E_{RW}$ für die Rayleighwelle RW angebracht. Der Weg der Rayleighwelle auf der Behälterwand erfolgt durch die Flüssigkeit 3 hindurch, wobei durch den benetzten Teil der Laufstrecke der Rayleighwelle die Meßstrecke 100 definiert wird. Der wellenführende Festkörper 1 wird entweder von der Behälterwand selbst gebildet, falls diese aus einem Material besteht, das eine geringere Geschwindigkeit für die Rayleighwelle $v^{(1)}_{RW}$ besitzt als die Geschwindigkeit der Kompressionswelle $v_{KW}$ in der angrenzenden Flüssigkeit 3 oder von einem in die Behälterwand eingelassenen, auf die Behälterwand aufgebrachten oder durch oben beschriebene, geeignete Veränderung des Materials der Behälterwand erzeugten, geeigneten Material, das sich zwischen Sender $S_{RW}$ und Empfänger $E_{RW}$ erstreckt, und die genannte Geschwindigkeitsbedingung $v^{(1)}_{RW} < v_{KW}$ erfüllt. Der Behälter 25 kann z.B. als Wanne, Tiegel oder als eine strömende Flüssigkeit enthaltende Rinne ausgeführt sein.

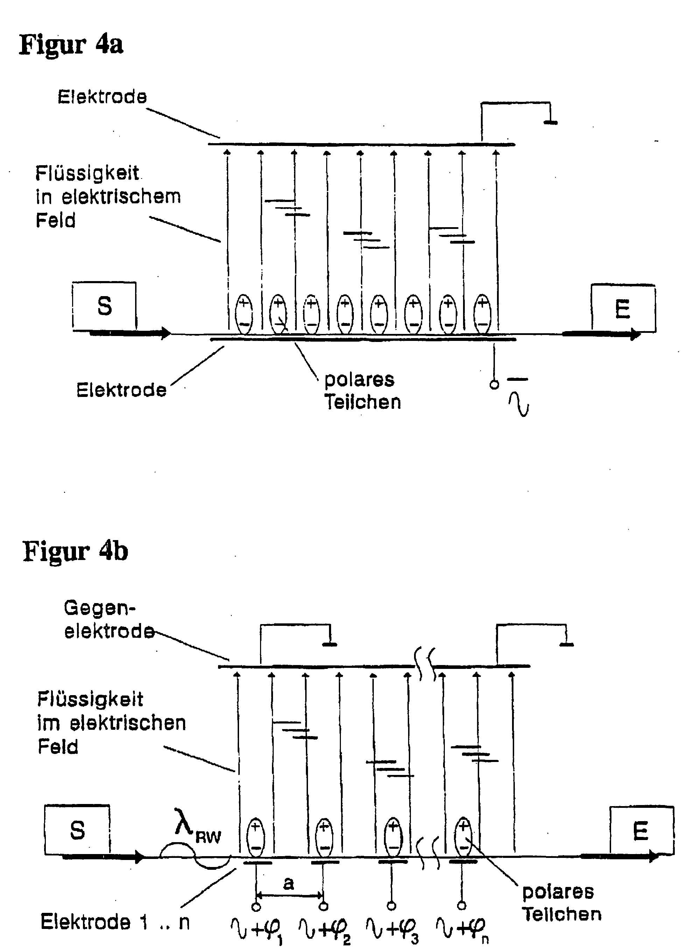

Die nachfolgend beschriebenen Figuren 4a bis 4i zeigen Ausführungsbeispiele, die zusätzlich zu der akustischen Energie eine weitere Energieform in den Bereich der Meßstrecke einkoppeln.

Nach Figur 4a befindet sich die polare Flüssigkeit in einem von außen angeregten elektrischen Feld. Dadurch lagern sich entsprechend ihrer Polarität Teilchen an die Elektrode, die gleichzeitig Meßstrecke ist, an. Somit kann der Anteil selektiv angesprochener polarer Teilchen vor der Elektrode und damit innerhalb der viskosen Grenzschicht gesteuert werden. Der Vergleich des Messergebnisses der Rayleighwellenausbreitung mit und ohne elektrisches Feld lässt so z.B. eine Aussage über den Ionengehalt in einer Flüssigkeit zu.

Gemäß Figur 4b ist die an der Meßstrecke befindliche Elektrode mehrfach unterbrochen, wobei jede Teilelektrode mit einem individuellen Signal angesteuert werden kann. Es sind verschiedene Betriebsmoden möglich:

- Betrieb mit Gleich- oder Wechselspannung

- unterschiedliches Gleichspannungspotential an verschiedenen Elektroden (Konzentrationsbildung von polaren Teilchen)

- alle Elektroden an gleichem Gleichspannungs-, aber unterschiedlichem Wechselspannungspotential (selektives Ansprechen verschiedener polarer Teilchen über deren charakteristische (bspw. Resonanz-) Frequenz

- Erzeugung einer elektrischen "Wanderwelle" durch phasenverschiedene Ansteuerung ($\varphi_{i+1}=\varphi_i+\Delta\varphi$ mit i=1..n)

- Synchronisierung dieser Wanderwelle mit der Ausbreitungsgeschwindigkeit der Rayleighwelle, z.B.. damit die Konzentration polarer Teilchen dort maximal ist, wo die Rayleighwelle eine maximale Auslenkung der Scher- und minimale Auslenkung der Kompressionskomponente hat.

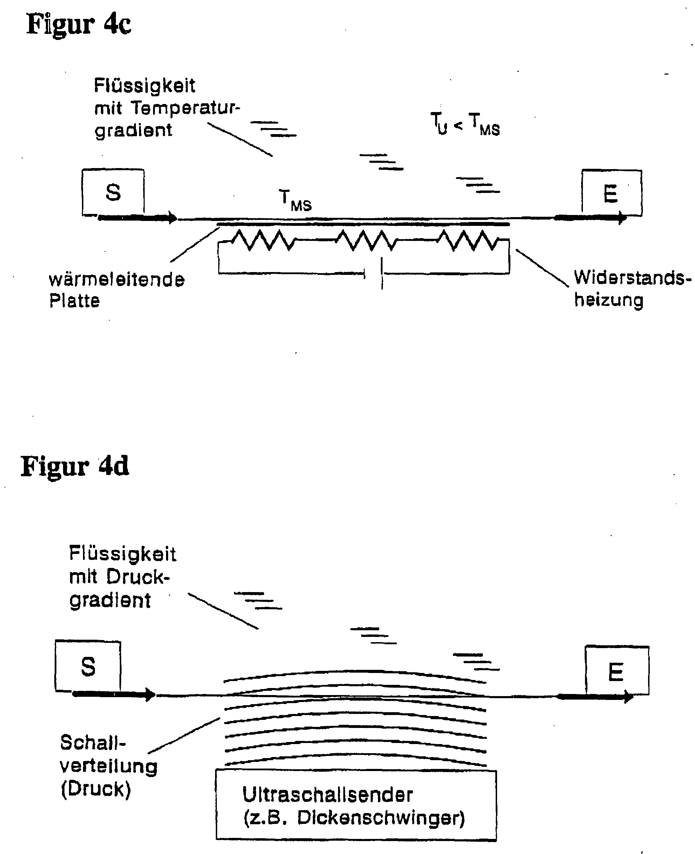

Figur 4c zeigt die Zufuhr thermischer Energie, z.B. elektrisch durch eine Widerstandsheizung, um einen Temperaturgradienten innerhalb der Flüssigkeit zu erzielen. Die Temperatur der Meßstrecke $T_{MS}$ ist höher als die der Umgebung $T_U$.
Damit können verschiedene Effekte erzeugt werden:

- Einwirkung auf chemische Prozesse oder Reaktionen, die durch Zufuhr thermischer Energie eine Viskositätsänderung bewirken.

- gezielte Änderung der Viskositätsverteilung (Viskositätsgradient) über die Temperatur z.B. für Anwendungen im Bereich der Verfahrenstechnik (Extruder).

Eine Möglichkeit zur Einleitung von mechanischer (akustischer) Energie in die Flüssigkeit, um z.B. (chemische) Prozesse zu beschleunigen oder z.B. eine Reinigungswirkung zu erzielen (Ultraschallreinigung), zeigt Figur 4d. Der "Reinigungserfolg" kann durch Veränderung der Konzentration / Zusammensetzung / Niederschlag auf der Messstrecke festgestellt werden.Umgekehrt kann eine bewußt gewünschte Durchmischung z.B. einer Emulsion abhängig von der an der Meßstrecke festgestellten, konzentrationsabhängigen Viskosität erzeugt werden.

Die mechanische Veränderung der Gestalt der Meßstrecke durch mechanischen Eingriff, wie sie in der Prinzipdarstellung von Figur 4e angedeutet ist, hat Vorteile hinsichtlich:

- Eine Durchmischung der Flüssigkeit ist möglich.

- Ein Pumpeffekt ist möglich.

- Eine längere Laufstrecke der Rayleighwelle wird erzeugt (wenn $\lambda_{MS}>>\lambda_{RW}$)

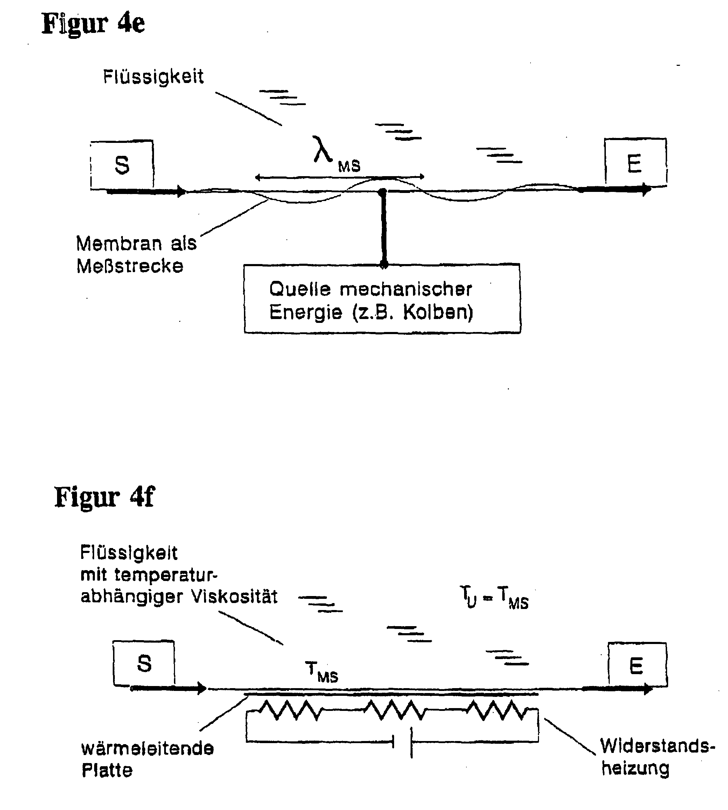

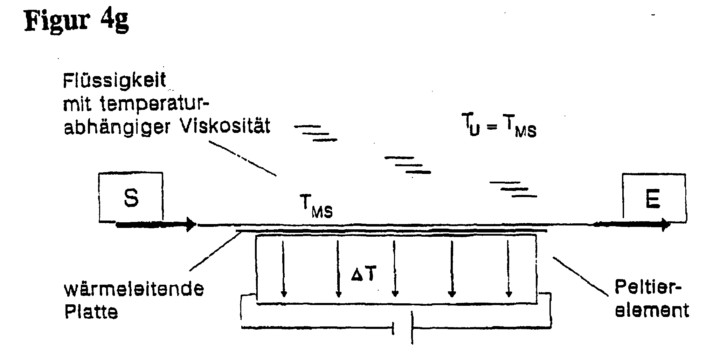

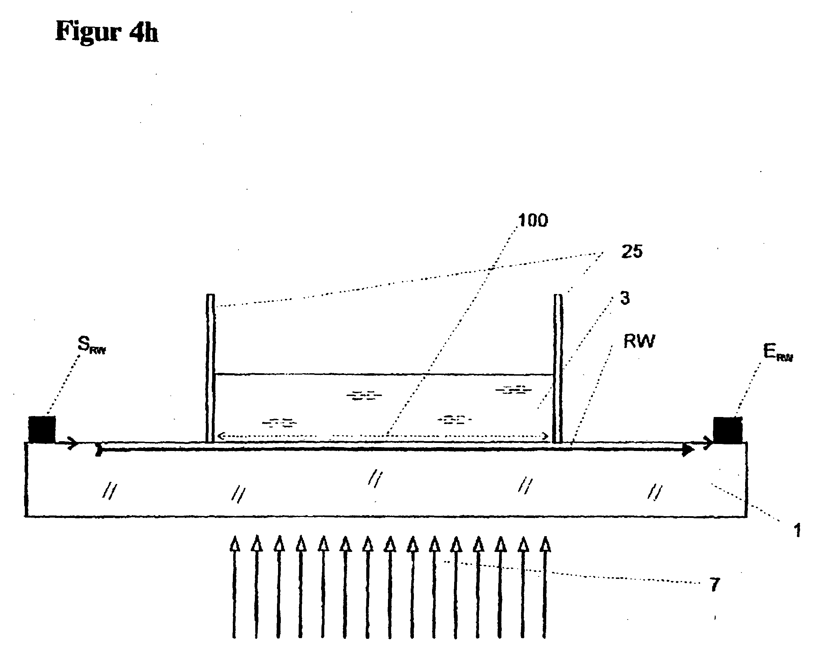

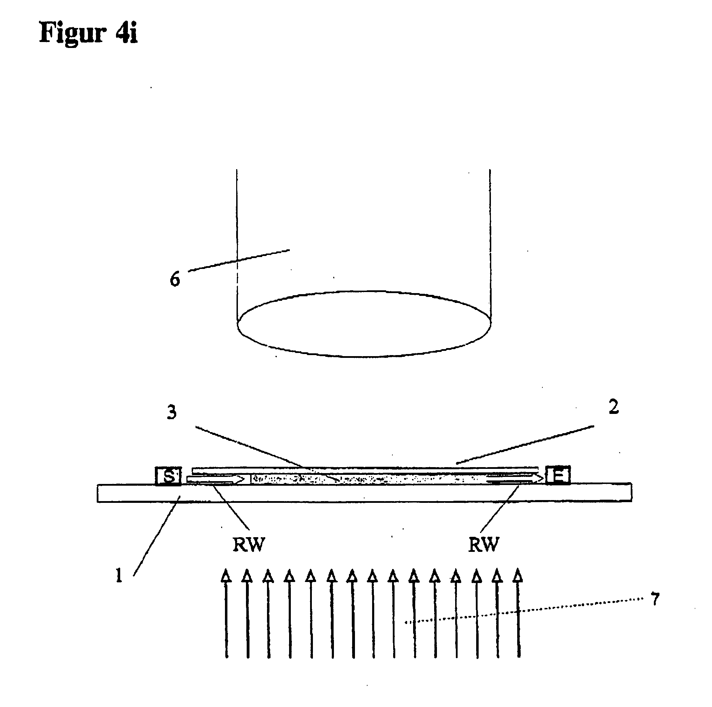

Mit Figur 4f soll auf die Möglichkeit der Regelung der Temperatur über die Messung der Viskosität hingewiesen werden. So können z.B. temperaturabhängige Prozesse in einem Rührwerk gesteuert werden. Regelung der Temperatur über die Messung der Viskosität kann auch unter Einsatz eines Kühlelements (bspw. Peltier-Elements) erfolgen (siehe Figur 4g). Anwendungsmöglichkeiten werden z.B. in der Prüfung der Qualität und der Regelung eines Kühlsystems gesehen.

Bild 4h zeigt den schematischen Aufbau einer Maßvorrichtung auf einem transparenten Festkörper 1. Dieser Festkörper 1 trägt an seinem einen Ende einen Sender für Rayleighwellen $S_{RW}$ und an seinem anderen Ende einen Empfänger für Rayleighwellen $E_{RW}$. Zwischen diesen beiden breitet sich an der Oberfläche von 1 die Rayleighwelle RW aus. Durch seitliche Begrenzungselemente 25 wird die zu messende Flüssigkeit 3 begrenzt und so die Meßstrecke 100 definiert. Die Begrenzungselemente 25 sind so ausgebildet, daß sie den Durchgang der Rayleighwelle im wesentlichen nicht behindern. Durch den transparenten Festkörper 1 fällt von unten Licht ein und bewirkt so einen zusätzlichen Energieeintrag in die Umgebung der Meßstrecke 100. Durch diese optische Anregung können Reaktionen in photoaktiven Flüssigkeiten oder in photoaktiven Festkörpern, die in der Flüssigkeit verteilt sind, ausgelöst werden. Dadurch bewirkte Veränderungen von Flüssigkeitseigenschaften können mit dem akustischen Meßsystem gemessen werden. Soll die Meßvorrichtung unter Verwendung eines nicht-transparenten Festkörpers realisiert werden, kann der Lichteinfall u.U. aus einer anderen Richtung erfolgen. Unter Benutzung von Lasern kann optische Energie in sehr schmalen Strahlenbündeln auf engern Raum konzentriert werden und damit die Meßstrecke nur teilweise mit optischer Energie versorgt werden.

Das Bild 4i zeigt schematisch den Aufbau einer akustischen Meßstrecke auf einem transparenten Trägermaterial zur Verwendung unter einem Mikroskop. Auf einem Objektträger 1 sitzen links ein Sender für Rayleighwellen $S_{RW}$ und rechts ein Empfänger für Rayleighwellen $E_{RW}$. Die zu untersuchende Probenflüssigkeit 3 befindet sich dazwischen und wird von einem Deckglas 2 bedeckt. Diese Anordnung ermöglicht die Messung von Flüssigkeitseigenschaften, beispielsweise biologischer oder biochemischer Flüssigkeiten bzw. von Veränderung dieser Flüssigkeitseigenschaften und die gleichzeitige optische Beobachtung dieser Flüssigkeiten mit einem Mikroskop 6. Vorteilhaft kann die Vorrichtung benutzt werden, wenn durch das zur optischen Beobachtung notwendige Licht 7 als Auslöser für photochemische Prozesse in der Probenflüssigkeit 3 wirkt und die dadurch bewirkten Veränderungen von Flüssigkeitseigenschaften mit dem akustischen Übertragungssystem gemessen werden können.

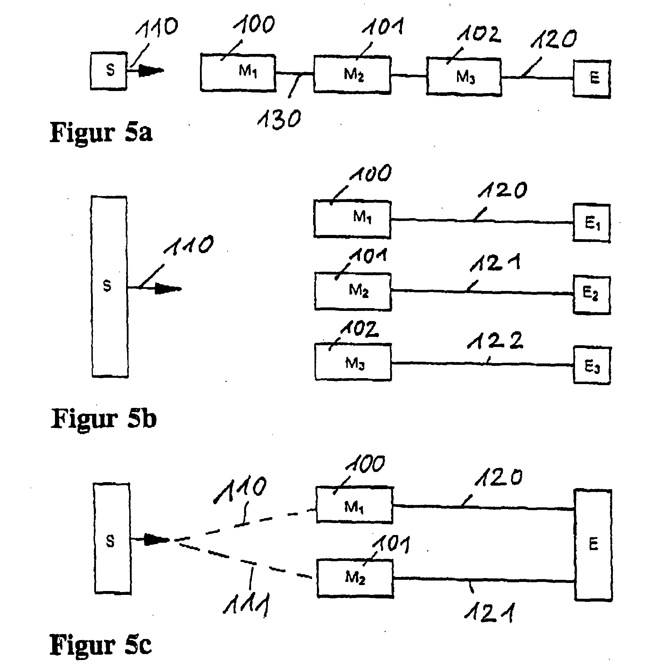

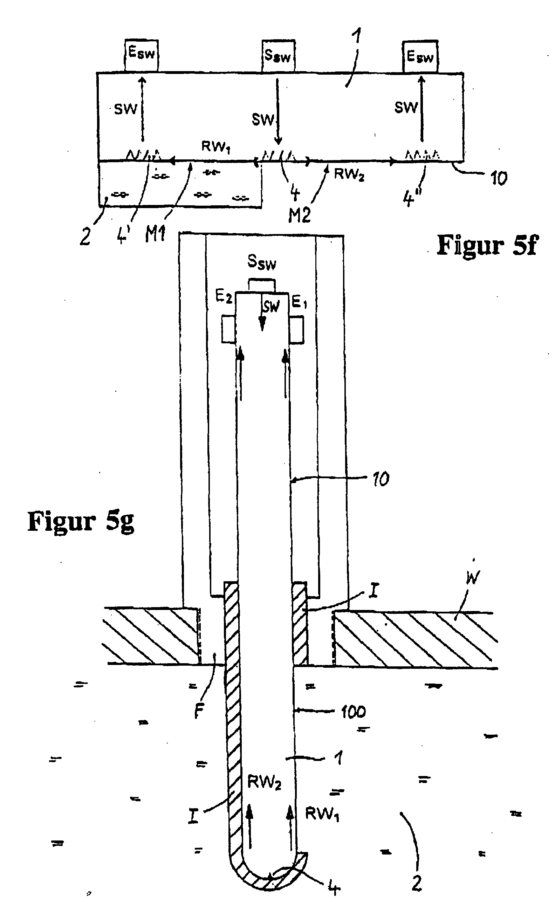

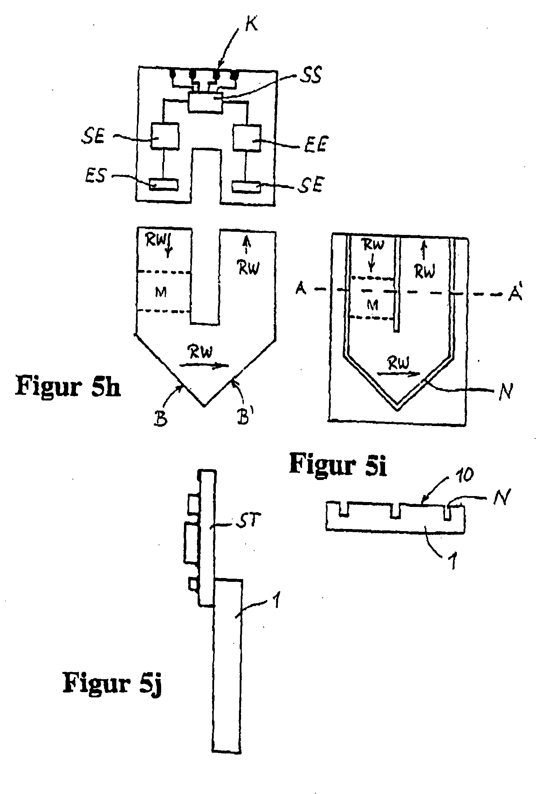

In den Figuren 5a bis 5c sind erfindungsgemäße Vorrichtungen mit mehreren Meßstrecken schematisch dargestellt. In Fig. 5a wird die von einem Sender für Rayleighwellen S ausgehende Rayleighwelle RW über eine Zuleitungsstrecke 110 zu einer ersten Meßstrecke 100. Nach dem Durchgang durch diese Meßstrecke werden die Rayleighwellen über eine Strecke mit Wellenleitcharakter 130 auf eine zweite Meßstrecke 101 und dieser weiter über eine Strecke mit Wellenleitcharakter auf eine dritte Meßstrecke 102. Vom Ende dieser Meßstrecke werden die Rayleighwellen über eine Ableitungsstrecke 120 dem Empfänger E zugeführt. Praktische Anwendung findet eine solche Anordnung bei der Füllstandsüberwachung von mehreren, voneinander getrennten Tanks mit identischen Flüssigkeiten. Sind die Meßstrecken identisch ausgeführt, so erhält man jeweils deutlich voneinander unterscheidbare Empfängersignale für den Fall, daß kein, ein, zwei oder drei Meßstrecken mit der Flüssigkeit in Kontakt stehen.

Eine weitere schematische Darstellung einer erfindungsgemäßen Anordnung ist in Fig. 5b dargestellt. Hier werden die von einem Sender für Rayleighwellen S ausgehenden Rayleighwellen RW über eine Zuleitungsstrecke 110 auf die Meßstrecken 100, 101 und 102 geleitet und nach Durchgang durch die jeweilige Meßstrecke über Ableitungsstrecken 120, 121, 122 den Empfängern $E_1$, $E_2$ und $E_3$ zugeleitet. Praktische Anwendung findet eine solche Anordnung mit zwei Meßstrecken bei einer erfindungsgemäßen Vorrichtung mit einer ersten Meßstrecke 100, die mit dem zu messenden Medium in Kontakt bringbar ist und einer zweiten Meßstrecke 101, die als Referenzstrecke dient und mit dem Medium nicht in Kontakt bringbar ist. Eine solche Anordnung mit Referenzstrecke kommt besonders dann zur Anwendung, wenn die durch die Flüssigkeit hervorgerufene Änderung des Meßsignals im Empfänger $E_1$ klein ist gegenüber anderen Einflüssen, wie beispielsweise Signaländerungen durch Temperaturschwankungen. Sowohl in Fig. 5a als auch 5b kann die Anzahl der verwendeten Meßstrecken beliebig gewählt werden. In Fig. 5c ist eine Anordnung schematisch dargestellt, bei der von einem Sender S ausgehende Rayleighwellen über Zuleitungsstrecken 110 und 111 den Meßstrecken 100 und 101 zugeführt werden und von diesen über Ableitungsstrecken 120 und 121 auf einen einzigen Empfänger E geleitet werden. Werden die Meßstrecken 100 und 101 gleichartig ausgeführt und unterscheidet sich die Rayleighwellen-Laufzeit auf der Strecke 110-120 von der Rayleighwellen-Laufzeit auf der Strecke 111-121, so können bei gepulstem Betrieb des Senders über die Laufzeitunterschiede der Rayleighwellen mit einem einzigen Empfänger physikalische oder technische Parameter der die Meßstrecken 100 und 101 benetzenden Flüssigkeiten abgeleitet werden.

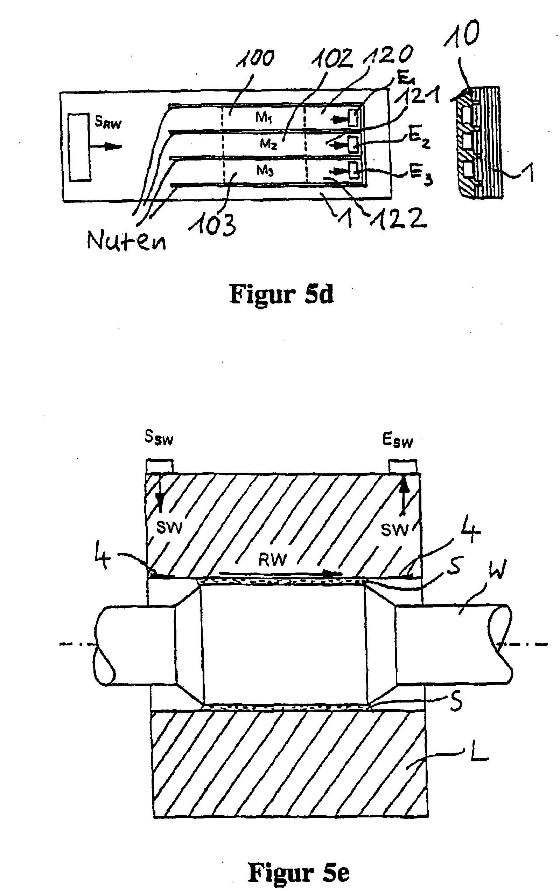

In den Figuren 5d und 5e sind zwei Ausführungsbeispiele von Anordnungen von Meßstrecken aus den Figuren 5a bis 5c dargestellt: Fig. 5d zeigt eine Anordnung gemäß der schematischen Darstellung in Fig. 5b. Auf einem Festkörper 1 ist ein Rayleighwellen-Sender $S_{RW}$ angeordnet, von dem aus Rayleighwellen RW auf die Meßatrecken 100, 102 und 103 treffen, über Ableitungsstrecken 120, 121 und 122 werden die Rayleighwellen den Empfängern $E_1$, $E_2$, $E_3$ zugeführt. Die Strecken mit wellenleitendem Charakter 100-120, 102-121 und 103-122 sind im Beispiel der Figuren 5d und 5e durch Nuten voneinander getrennt. Die Rayleighwellen werden auf der Festkörperoberfläche 10 jeweils zwischen den Nuten geführt und dem jeweils zugeordneten Empfänger zugeleitet. Werden die Meßstrecken 100, 102 und 103 aus verschiedenen, geeignet gewählten Materialien ausgeführt, so kann die an den Meßstrecken anstehende Flüssigkeit als eine von verschiedenen möglichen Flüssigkeiten identifiziert werden.

In Fig. 5e ist ein Ausführungsbeispiel einer erfindungsgemäßen Anordnung für die Bestimmung einer physikalischen oder technischen Kenngröße eines Schmierstoffes in einem Gleitlager im Teilschnitt dargestellt. In eine Lagerbuchse L ist eine Welle W drehbar gelagert, wobei zwischen Welle und Lagerbuchse Schmierstoff S zur Verringerung der Gleitreibung eingebracht wird. Von einem Sender $S_{SW}$ für Schallwellen werden Volumenweilen auf einen Modenwandler 4 geleitet, der auf der Innenseite der Lagerbuchse Rayleighwellen erzeugt, die in einem zweiten Modenwandler 4' in eine Volumenwelle gewandelt wird und nach Durchgang durch die Buchse auf einen Empfänger $E_{SW}$ für Volumenwellen trifft. Als Meßstrecke fungiert in diesem Beispiel der mit Schmierstoff gefüllte Spalt zwischen der Buchse und der Welle. Die Dicke des Schmierstoffs muß dabei in der Regel nicht klein gegen die Rayleighhwellenlänge sein, da in diesem Falle eine Anordnung wie in Variante 3 beschrieben vorliegt.

In Fig. 5f ist eine erfindungsgemäße Anordnung mit parallel angeordneten Meßstrecken M1, M2 unter Ausnutzung der Modenkonversion im Wellenleiter dargestellt. In einen Festkörper 1 werden mittels eines Senders für Volumenschallwellen $S_{SW}$ Schallwellen in den Festkörper 1 eingekoppelt. Diese treffen an der Oberfläche 10 des Festkörpers 1 auf einen Modenwandler 4, von dem aus sich Rayleighwellen RW1 und RW2 ausbreiten. Die Rayleighwellen werden an Modenwandlern 4' und 4" in Volumenschallwellen SW zurückgewandelt und in Empfängern für Volumenschallwellen $E_{SW}$ empfangen. In der gezeigten Anordnung verläuft eine Rayleighwelle $RW_1$ in der Meßstrecke M1, die mit der zu messenden Flüssigkeit 2 in Kontakt steht und die andere Meßstrecke M2 verläuft an einer Grenzfläche des Festkörpers 1 zu Luft oder Vakuum. Die Meßstrecke M2 dient vorzugsweise als Referenzstrecke für die Meßstrecke M1.

In Fig. 5g ist ein Ausführungsbeispiel für den Einbau einer erfindungsgemäßen Meßanordnung in die Wandung W einer Rohrleitung dargestellt. Die Meßstrecke 100 befindet sich an der Außenseite eines stabförmigen Festkörpers 1, der in die in der Rohrleitung zu messenden Flüssigkeit 2 eintaucht. Der Festkörper 1 ist von dem Flansch F durch ein Isoliermaterial I getrennt, in das die auf der Oberfläche des Festkörpers 1 laufenden Rayleighwellen RW nicht einkoppeln können. An der anderen Seite des Festkörpers 1 ist ein Sender $S_{SW}$ für Volumenschallwellen SW angeordnet. Volumenschallwellen SW aus diesem Sender $S_{SW}$ breiten sich im Inneren des Festkörpers 1 aus und treffen auf einen Modenwandler 4, von dem aus Rayleighwellen RW sich entlang der Oberfläche 10 ausbreiten. Die Rayleighwellen RW1 und RW2 werden mittels Rayleighwellen-Empfänger $E_1$ und $E_2$ an dem der Rohrwand W abgelegenen Seite des Festkörpers 1 empfangen. Die Anordnung ist so gewählt, daß die Rayleighwelle RW2 auf dem Teil der Festkörperoberfläche 10 verläuft, der mit der zu messenden Flüssigkeit 2 nicht in Kontakt kommt und von dieser durch einen Schallisolator I getrennt ist, in den die RW2 nicht einkoppeln kann. Das Signals des Empfängers E2 wird bei der Auswertung der Meßergebnisee als Referenzwert für die Konversionsgüte des Modenwandlers 4 benutzt. RW1 verläuft wenigstens teilweise in einem Bereich, der mit der Flüssigkeit 2 im Kontakt steht und die Meßstrecke 100 bildet.

In den Figuren 5 h bis 5i sind Beispiele für Wellenleiter gezeigt, auf denen Rayleighwellen RW auf ihrem Weg von Sender zum Empfänger wenigstens einmal reflektiert werden. In Fig. 5h ist die Oberfläche eines Rayleighwellen tragenden, im wesentlichen U-förmigen Festkörpers dargestellt. Eine Rayleighwelle breitet sich in einem Schenkel des U's längs eines Wellenleiters aus, der die Meßstrecke M enthält und trifft auf eine vorzugsweise unter 45 Grad angeordnete Begrenzung B des Festkörpers. Die ebenen Rayleighwellen werden daran reflektiert, treffen auf die gegenüberliegende Begrenzungskante B' und werden in den anderen Schenkel des U's reflektiert. In Flg. 5i ist eine Anordnung mit gleicher Form des Wellenleiters gezeigt, wobei die Rayleighwelle auf der Festkörperoberfläche 10 durch Nuten N geführt werden, deren Tiefe wenigstens der Wellenlänge der Rayleighwelle entsprechen. Derartige Nuten können entweder mechanisch in einen Festkörper eingearbeitet werden, beim Hersteilungsprozeß des Wellenleiters durch Spritzgießen erzeugt werden oder beispielsweise durch Photoätzen auf eine Festkörperoberfläche aufgebracht werden. In Fig. 5h und 5i wird die Rayleighwelle zweimal reflektiert, um vom Sender zum Ort des Empfängers zu gelangen. Entsprechend den Gesetzen der Optik ebener Wellen sind auch Wellenleiter mit einer reflektierenden Begrenzung (V-förmiger Wellenleiter) oder mit mehr als zwei relfektierenden Begrenzungen realisierbar. Ebenso stellt eine Festkörperoberfläche, bei der nach Durchgang der Rayleighwelle durch die Meßstrecke ein Gitter für Rayleighwellen senkrecht zur Ausbreitungsrichtung der Rayleighwellen angeordnet ist, einen erfindungsgemäßen Wellenleiter dar. Eine solche Anordnung ist dann zweckmäßig, wenn die aus einer Meßstrecke auslaufende Rayleighwelle eine breite Wellenfront besitzt, deren Energie nahezu vollständig auf einen im Vergleich dazu kleinen Empfänger geleitet werden soll. Ebenso sind Wellenleiter vorstellbar, bei denen nach Durchgang der Rayleighwelle durch die Meßstrecke die Oberfläche des Wellenleiters eine Sammellinse für Rayleighwellen trägt, in der die Rayleighwellen zum Empfänger hin gebeugt werden. Insbesondere kann die Meßstrecke als Linse für Rayleighwellen ausgebildet werden.

In Fig. 5j ist eine Anordnung eines Rayleighwellen RW tragenden Festkörpers 1 und einer kompakten Sender-Empfänger-Anordnung gezeigt. An den Festkörper 1 ist ein Schaltungsträger ST akustisch angekoppelt (beispielsweise unter Verwendung von Modenwandlern), der einen Sender S, die zum Betrieb des Senders notwendige elektronische Schaltung SE, den Empfänger E sowie die zum Betrieb des Empfängers notwendige elektronische Schaltung EE, eine Schnittstellen- und Auswerteschaltung trägt, die über eine Kontaktleiste K mit einer Spannungsversorgung und einem Auswerte- und Steuersystem verbunden ist. Eine solche Schaltung kann beispielsweise als Dickschichtschaltung auf einem keramischen Schaltungsträger ST angeordnet sein, der schall-leitende Eigenschaften besitzt. Eine derartige Anordnung von kompakter Elektronik und einem, mit dieser lösbar verbundenen Wellenleiter für Rayleighwellen kommt vorzugsweise dort zum Einsatz, wo der Wellenleiter nach einem Meßvorgang ausgetausch werden muß (z.B. bei der Messung irreversibler Polymerisationsvorgänge in der Flüssigkeit). In solchen Ausnahmefällen wird der kostengünstig herstellbare Wellenleiter für eine Einmalbenutzung ausgelegt.

Einleitend wurde bereits darauf hingewiesen, daß die Erfindung die Integration der Meßstrecke in eine bereits vorhandene Vorrichtung, zum Beispiel in die Wandung einer Arbeitsmaschine oder einer Rohrleitung, ermöglicht und dadurch On-line-Messungen direkt an den Orten erlaubt, an denen die Beurteilung der Flüssigkeitseigenschaften ausschlaggebend ist. Um die ggf. notwendige räumliche Entkopplung der Meßstrecke einerseits und von Sender bzw. Empfänger andererseits sicherstellen zu können, schlägt eine Erfindungsvariante die Anwendung des Prinzips der Modenwandlung vor, das mit verschiedenen Ausführungsbeispielen nachfolgend beschrieben wird.

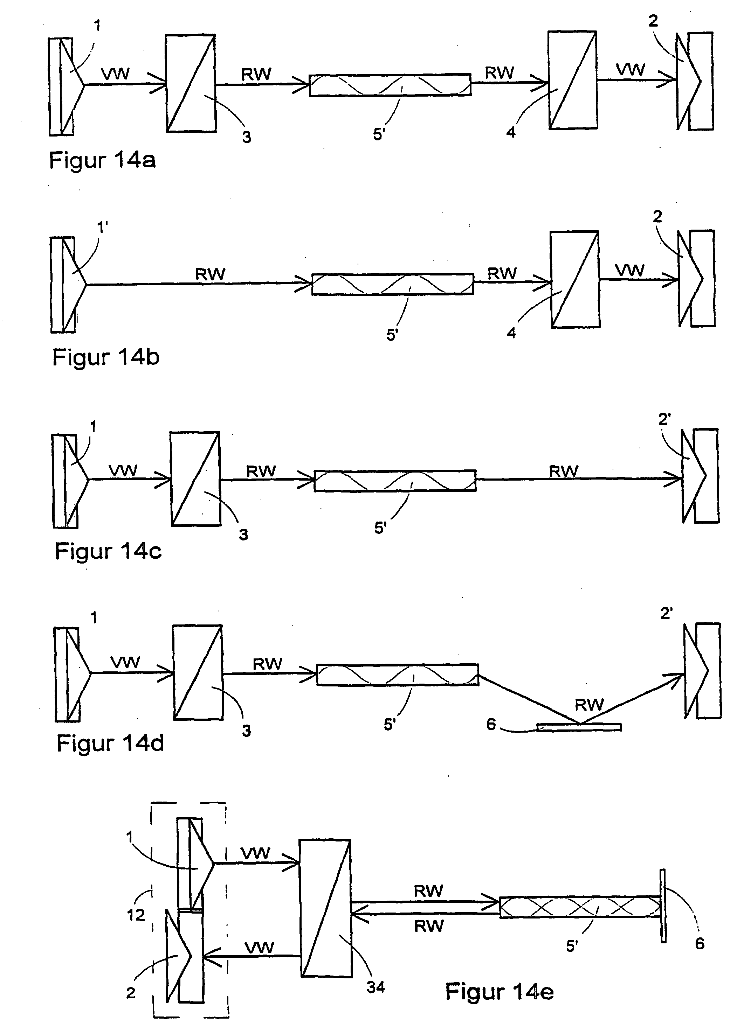

Das Blockschaltbild von Figur 14a verwendet einen Sender 1 zur Generierung von Volumenschallwellen, die sich in einem akustische Wellen leitenden Körper bis zum Erreichen eines Modenwandlers 3 ausbreiten. Dieser in Wirkverbindung mit der Meßstrecke 5' stehende Modenwandler 3 wandelt die Energie der Volumenschallwellen zu einem großen Teil in Rayleighwellen um. Da sich die Rayleighwellen in der Grenzschicht des betreffenden Körpers ausbreiten, dessen in Kontakt mit der zu messenden Flüssigkeit stehende Teil die Meßstrecke bildet, beeinflussen die Flüssigkeitseigenschaften (z.B. Dichte und Viskosität) die Kenngrößen der Rayleighwelle, wodurch eine meßbare Signalveränderung entsteht. Am Ende des zu überwachenden Bereichs 5 befindet sich ein zweiter Modenwandler 4 zur Rückwandlung der eintreffenden Rayleighwellen in Volumenschallwellen, die sich in Richtung des separaten Empfängers 2 ausbreiten.

Figur 14b zeigt ein Blockschaltbild mit nur einem Modenwandler 4 [zwischen Meßstrecke 5' und dem Empfänger 2] zur Konversion von Rayleighwellen in Volumenschallwellen. Der Sender 1' erzeugt die Rayleighwellen direkt an einem Ende der Meßstrecke 5' oder auf einer Grenzfläche, die mit der Meßstrecke 5' wellenleitend in Verbindung steht.

Die Figuren 14c und 14d verwenden wiederum Volumenschallwellen erzeugende Sender 1, denen in Wirkbeziehung zur Meßstrecke 5' ein Modenwandler 3 zur Konversion von Volumenschallwellen in Rayleighwellen zugeordnet ist. Als Empfänger 2' sind mechanischelektrische Wandler vorgesehen, die Rayleighwellen sensieren können und am Ende der Meßstrecke 5' oder auf einer mit dieser wellenleitend verbundenen Grenzfläche angeordnet sind. Gemäß Figur 14d ist im Ausbreitungsweg der Rayleighwelle zusätzlich ein Reflektor 6 vorgesehen, der zum Beispiel in der Form einer Kerbe oder eines Schlitzes gearbeitet sein kann.

Die in Figur 14e dargestellte Erfindungsvariante verwendet eine einteilige Sender/Empfänger-Einheit 12, bestehend aus Sender 1 und Empfänger 2. Wenn Sende- und Empfangsmodus zeitversetzt erfolgen, so kann für Sender 1 und Empfänger 2 ein und derselbe Dicken- oder Scherschwinger verwendet werden. Er würde abwechselnd Volumenschallwellen erzeugen und empfangen. Dieser Sender-/Empfänger-Einheit ist ein gemeinsamer Modenwandler 34 zugeordnet, der in zwei Ausbreitungsrichtungen arbeitet. Zunächst konvertiert der Modenwandler 34 die im Sendemodus erzeugten Volumenschallwellen in eine Rayleighwelle, welche sich entlang der Meßstrecke 5' bis zum Erreichen des Reflektors 6 ausbreitet. Nach ihrer Reflektion und Rücklauf entlang der Meßstrecke 5' wird die reflektierte Rayleighwelle zurück in eine Volumenschallwelle konvertiert, die bei Erreichen des Empfängers 2 (beziehungsweise des einstückigen Wandlers während des Empfangsmodus) sensiert wird.

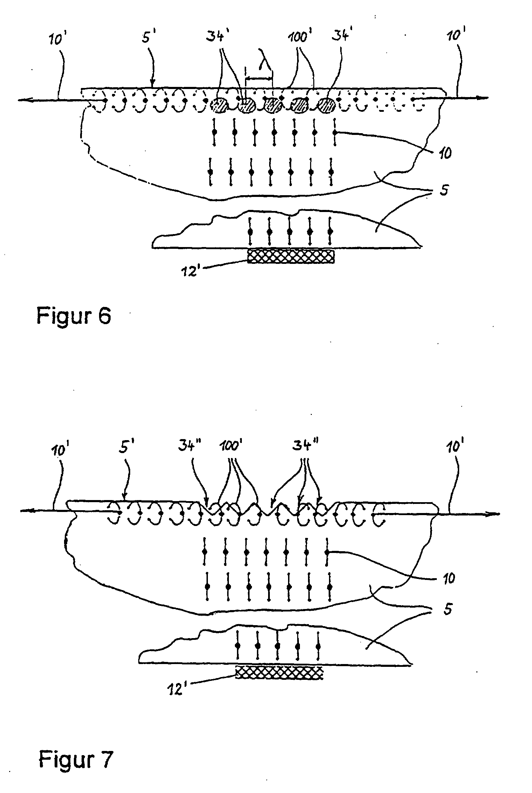

Die Figuren 6 bis 9 zeigen verschiedene Gestaltungsmöglichkeiten von Modenwandlern, deren Sender-Empfangscharakteristik zum Teil richtungsindifferent und zum Teil richtungsabhängig ist.

Bei der Ausführungsvariante gemäß Figur 6 teilt der Modenwandler 34' die Meßstrecke 5' in einen linksseitigen und einen rechtsseitigen Abschnitt, wobei deren äußere Ränder von jeweils einer Kerbe flankiert sind, die als Reflektoren für die vom Modenwandler 34' ausgehenden Rayleighwellen fungieren. Die Sender-/Empfänger-Einheit 12' arbeitet zyklisch im Sende- beziehungsweise Empfangsmodus, wobei Volumenschallwellen erzeugt beziehungsweise empfangen werden. In Figur 6 ist schematisch die Wellenausbreitung und Modenwandlung im Körper 5 der Meßstrecke 5' dargestellt. Die von der Sender-/Empfänger-Einheit ausgehende Volumenschallwelle mit der Ausbreitungsrichtung 10 erreicht in der Nähe der Grenzfläche der Meßstrecke 5' den aus einer Lochreihe bestehenden Modenwandler 34'. Beim Durchgang der Volumenschallwelle durch den gitterartigen Modenwandler 34' entsteht an jedem Spalt eine Elementarwelle 100', deren Überlagerung an der Scheibenoberkante 5' schließlich zur Entstehung von Rayleighwellen führt. Von dem an dem einen Ende der Meßstrecke 5' angeordneten Modenwandler 34' breitet sich die Rayleighwelle entlang ihres Weges 10' bis zu einem als Kerbe 6' ausgebildeten Reflektor aus.

Um einen hohen Wirkungsgrad des Modenwandlers 34' zu erzielen, ist darauf zu achten, daß die Teilung t der einzelnen Löcher der Lochreihe, also deren Abstand zueinander, möglichst exakt der Wellenlänge $\lambda$ der zu erzeugenden Rayleighwelle entspricht. Der Abstand s des Modenwandlers 34' vom zu überwachenden Bereich 5' sollte experimentell bestimmt werden. Er ist dann ideal, wenn die Überlagerung der Elementarwellen 100' zu einer maximalen Entstehung von Rayleighwellen führt.

Die Erfindungsvariante der Figur 7 unterscheidet sich von der Variante gemäß Figur 6 ausschließlich durch die Art des Modenwandlers 34", der direkt in die Kontur der Meßstrecke 5', und zwar in Form einer Reihe keilartiger Vertiefungen eingearbeitet wurde. Die Teilung der einzelnen Vertiefungen entspricht, wie auch bei der Lochreihe 34' der Wellenlänge $\lambda$ der zu erzeugenden Rayleighwelle. Ihre Tiefe d sollte bei symmetrischer Kerbenform $d \approx \lambda/2$ betragen. Bei symmetrischer Gestaltung der periodischen Einkerbungen ist der Modenwandler 34" gleichermaßen zur Generierung wie auch zum Empfang von Rayleighwellen zum Zwecke der Modenkonversion geeignet. Bei asymmetrischer Ausbildung der Einkerbungen, zum Beispiel indem eine der Keilflanken einen flacheren Winkel mit der Grenzflächenebene einschließt als die andere Keilflanke, erfolgt die Generierung der Rayleighwelle bevorzugt in Richtung des flacheren Winkels. Aus der Gegenrichtung ist der Empfang der Rayleighwelle bevorzugt.

Zum Schutz des Modenwandlers 34" vor Verschmutzung sollten dessen Einkerbungen von einem Material ausgefüllt sein, dessen akustische Eigenschaften sich von denen des Materials der Meßstrecke wesentlich unterscheiden. Diese Maßnahme kann auch zum Schutz der schlitzartigen Reflektoren ergriffen werden.

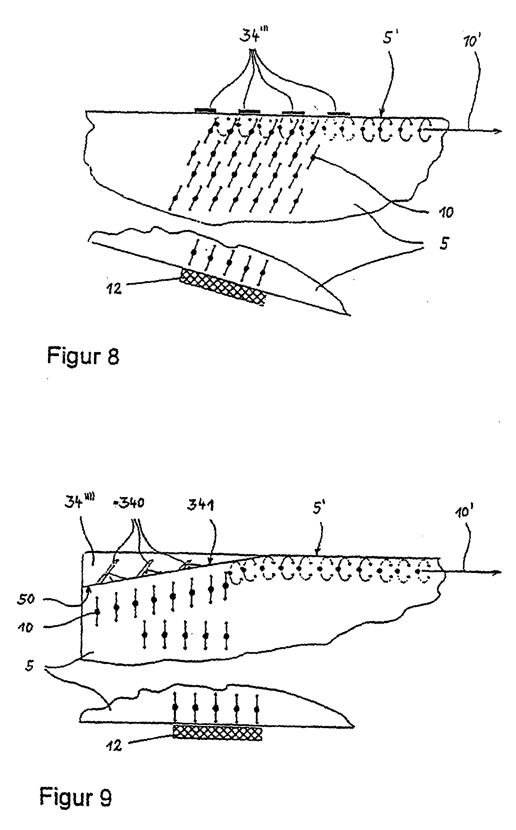

Ein Modenwandler 34''', bestehend aus mehreren auf die Meßstrecke aufgebrachten Einzelelementen, zeigt Figur 8. Der Abstand der Einzelelemente entspricht wiederum der Wellenlänge λ der zu erzeugenden Rayleighwelle. Gegenüber den Varianten der Figuren 6 und 7 besitzt diese Auführungsform den Vorteil, daß kein Eingriff in das Material der Meßstrecke vorgenommen werden muß. Die Sendeebene der gegenüberliegende Sender/Empfänger-Einheit ist bezüglich der Ebene des Modenwandlers 34''' und der ihn tragenden Meßstrecke 5' geneigt angeordnet. Somit treffen die ausgesendeten Rayleighwellen in einem entsprechenden Winkel auf den Modenwandler 34''', was zu einer bevorzugten Ausbreitungsrichtung 10' der dort generierten Rayleighwellen führt.

Auch der Empfang der Rayleighwelle und ihre Konversion zurück in eine Volumenschallwelle ist aus dieser Richtung bevorzugt. Deshalb sollte ein solcher Modenwandler 34''' am Ende des Meßbereichs 5' angeordnet sein, während das andere Ende des Meßbereichs 5' von einem Reflektor flankiert ist.

Einen Modenwandler mit ebenfalls ausgeprägter Sender-Empfangscharakteristik zeigt Figur 9. Er besitzt eine keilartige Form und ist fest mit dem Meßbereich 5' über eine Koppelfläche 50 verbunden. In die zugeordnete Koppelfläche 341 des Modenwandlers 34'''' sind winklig Schlitze 340 eingearbeitet, deren Abstand in etwa der Wellenlänge λ der Rayleighwelle entspricht. Die Volumenschallwellen werden an der Grenzfläche (Koppelflächen 50, 341) zwischen dem Körper 5 des Meßbereichs 5' und dem Modenwandler 34'''' zunächst in Richtung der Schlitze 340 gebrochen, um dort reflektiert und schließlich wieder in den Körper 5 eingekoppelt zu werden. Die Überlagerung der reflektierten Wellen führt nun zur Entstehung der gewünschten Rayleighwelle.

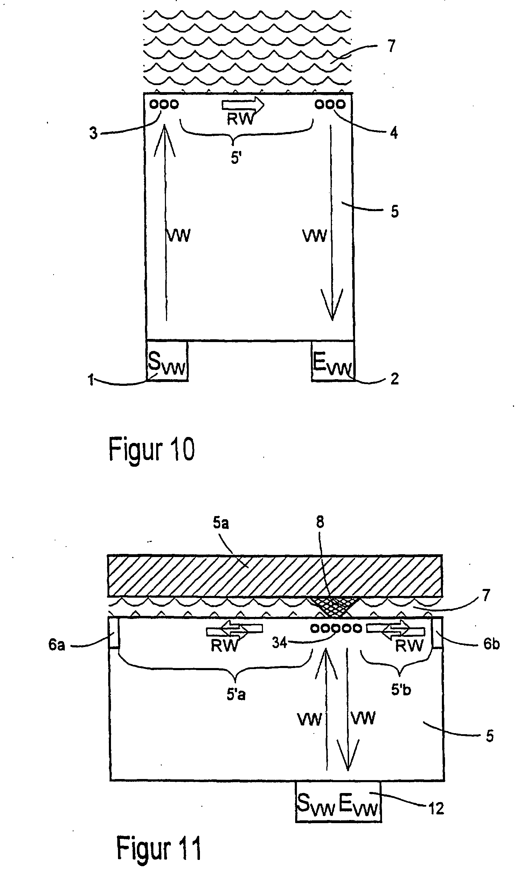

Die nachfolgend beschriebenen Figuren 10 bis 13 zeigen eine kleine Auswahl von Meßanordnungen mit verschiedenen Kombinationen von Sendern, Empfängern und Modenwandlern. Eine beträchtliche Anzahl weiterer erfindungsgemäßer Meßanordungen ließe sich aus dem Erfindungsgedanken herleiten; diese könnten jedoch zum Verständnis der Erfindung keinen wesentlichen Beitrag mehr leisten. Die Auswahl einer Erfindungsvariante und ihre konkrete Gestaltung sollten sich stets an den Anforderungen des Einzelfalls orientieren. Außerdem werden technische Maßnahmen, die insbesondere zur Verbesserung des Signal-Rausch-Verhältnisses und damit zur Erhöhung der Meßgenauigkeit geeignet sind, beschrieben.

Figur 10 zeigt in stark schematisierter Form eine Meßanordnung mit einem Festkörper 5, an dessen Meßstrecke 5' die zu messende Flüssigkeit 7 angrenzt. Die Modenwandler 3, 4 bilden die Ränder der Meßstrecke 5'. Ihre Darstellung versteht sich als Symbol, das für jede der in den Figuren 6 bis 9 beschriebenen Ausführungen von Modenwandlern stehen kann. Auf der Rückseite des Festkörpers 5 sind Sender 1 und Empfänger 2 angeordnet, die z.B. als einfache Dickenschwinger ausgeführt sein können. Ein Teil der vom Sender 1 im Festkörper 5 angeregten Volumenschallwellen erreicht den Modenwandler 3, wo eine Konvertierung zu Rayleighwellen RW erfolgt, die sich entlang der Meßstrecke 5' in Richtung des anderen Modenwandlers 4 ausbreiten. Dabei treten sie in Wechselwirkung mit der angrenzenden Flüssigkeit 7. Die so veränderte Rayleighwelle RW wird durch den Modenwandler 4 in eine Volumenschallwelle VW zurückgewandelt und vom Empfänger 2 sensiert. Sofern es die Prozeßbedingungen zulassen, sollte der die Meßstrecke 5' bildende Festkörper 5 eine Rayleighwellengeschwindigkeit besitzen, die kleiner als die Schallgeschwindigkeit der Kompressionswelle in der Flüssigkeit 7 ist. Dadurch wird die ansonsten unvermeidliche Auskopplung von Kompressionswellen KW und der damit verbundene erhebliche Energieverlust unterbunden.

Eine andere Möglichkeit, die für den Meßzweck eingesetzte Energie möglichst umfassend nutzbar zu machen, besteht in der Begrenzung der Flüssigkeitsschicht auf eine Dicke unter $\lambda_{KW}/4$ der Kompressionswelle KW in der Flüssigkeit. Falls dies mittels eines Spalts erfolgen soll, so muß die Rayleighwellengeschwindigkeit des der Meßstrecke 5' gegenüberliegenden Festkörpers 5a größer sein als die der Meßstrecke 5' selbst, damit die Voraussetzungen für die Totalreflexion erfüllt sind. Figur 11 zeigt eine Meßanordnung, die diesen Effekt ausnutzt.

Demnach ist ein Festkörper 5 mit einem gegenüberliegenden, einen Spalt begrenzenden Festkörper 5a vorgesehen, der durch ein Trennelement 8 in einen linken und einen rechten Bereich aufgeteilt wird. Jedem Bereich des Spaltes ist eine Meßstrecke 5'a, 5'b zugeordnet, die sich rechts und links des gemeinsamen Modenwandlers 34 bis zu den randseitig eingearbeiteten Reflektoren 6a, 6b erstrecken. Der Modenwandler 34 teilt den Bereich zwischen den Reflektoren 6a, 6b asymmetrisch in zwei ungleich lange Stecken, so daß die Laufzeiten des Signale entsprechend unterschiedlich und damit getrennt auswertbar sind. Um die Ausbildung und Ausbreitung der Rayleighwellen nicht zu behindern, besteht das Trennelement vorzugsweise aus einem akustisch schlecht ankoppelbaren Material, z.B. Polyurethan oder Gummi.

Um mit einer einteiligen Sender-/Empfänger-Einheit 12 auskommen zu können, muß die Einheit 12 im Pulsbetrieb arbeiten, d.h. die Einheit 12 arbeitet alternierend als Sender und Empfänger. Durch einen Sendeimpuls werden im Festkörper 5 Volumenschallwellen VW angeregt, die beim Durchgang durch den Modenwandler 34 in Rayleighwellen RW konvertiert werden. Da der Modenwandler 34 keine bevorzugte Ausbreitungscharakteristik für Rayleighwellen aufweist, besitzt die sich nach links ausbreitende Rayleighwelle RW etwa den gleichen Energiegehalt wie die sich nach rechts ausbreitende Rayleighwelle RW. Nach ihrer Reflexion an den Reflektoren 6a, 6b durchlaufen die Rayleighwellen RW die Meßstrecken 5'a, 5'b ein zweites Mal. Aufgrund der geringeren Ausdehnung der Meßstrecke 5'b erreicht die am Reflektor 6b reflektierte und durch die Wechselwirkung mit der Flüssigkeit 7 veränderte Rayleighwelle RW den Modenwandler 34 vor der am Reflektor 6a reflektierten Rayleighwelle RW und wird dort zurückkonvertiert in eine Volumenschallwelle VW. Sie erreicht die Sender-/Empfänger-Einheit 12 vor dem Signal der anderen Meßstrecke 6a, so daß eine eindeutige Signalzuordnung und Auswertung möglich ist.

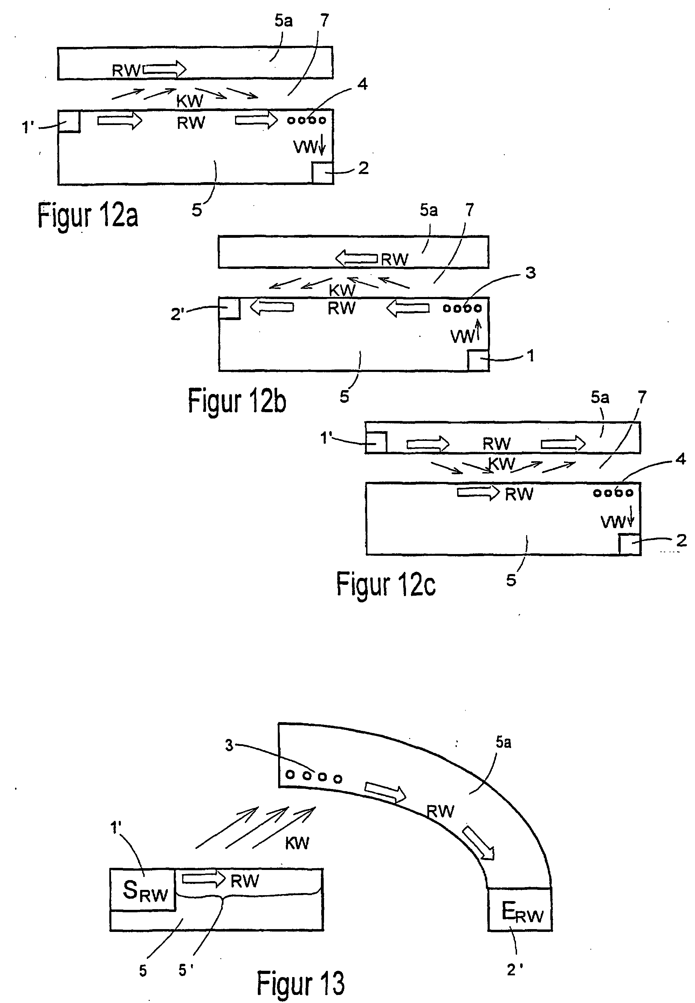

Die Figuren 12a bis 12c zeigen Varianten einer Meßanordnung mit einem der Meßstrecke gegenüberliegenden Festkörper 5a, dessen Rayleighwellengeschwindigkeit mit der der Meßstrecke übereinstimmt. Der dazwischenliegende Spalt für die zu messende Flüssigkeit 7 kann durchaus größer als $\lambda_{KW}/4$ der Kompresionswelle KW in der Flüssigkeit 7 sein, ohne einen unvertretbar großen Energieverlust zu riskieren, da die von der Rayleighwelle RW ausgekoppelte Energie - die in Form von Kompressionswellen KW durch die Flüssigkeit 7 zur gegenüberliegenden Festkörperoberfläche migriert - zu einem großen Teil wieder "eingefangen" wird und ihrerseits Rayleighwellen RW an dieser gegenüberliegenden Festkörperoberfläche anregt. Diese Rayleighwellen RW initiieren wiederum Kompressionswellen KW, die zurückkehren und erneut Rayleighwellen RW anregen. Durch dieses wechselseitige "Übersprechen" von akustischer Energie werden nicht nur wellenleiterähnliche Eigenschaften der Meßanordnung geschaffen, die Einbindung eines Rayleighwellen leitenden zusätzlichen Festkörpers 5a vergrößert auch die Länge der effektiven Meßstrecke. Der Grad des wechselseitigen "Übersprechens" akustischer Energie hängt weitestgehend von der konstruktiven Gestaltung der Meßanordnung ab und wird im wesentlichen vom Abstand der sich gegenüberliegenden Festkörper 5, 5a sowie der Länge der Meßstrecke bestimmt.

Gemäß Figur 12a wird ein Sender 1' zur Erzeugung von Rayleighwellen RW, die sich entlang der Meßstrecke bis zum Modenwandler 4 ausbreiten, eingesetzt. Auf diesem Weg kommt es durch akustisches "Übersprechen" zu Wechselwirkungen mit dem gegenüberliegenden Festkörper 5a. Beim Durchgang durch den Modenwandler 4 konvertiert die Rayleighwelle RW zu einer Volumenschallwelle VW im Festkörper 5 und kann vom Empfänger 2, z.B. in Form eines Dickenschwingers, sensiert werden.

Das Ausführungsbeispiel von Figur 12b unterscheidet sich in seiner Wirkungsweise kaum von der voranbeschriebenen Meßanordnung. Lediglich Sender und Empfänger wurden vertauscht. D.h., ein Sender für Volumenschallwellen VW ist am Festkörper 5 gegenüber dem Moderwandler 3 (und der Meßstrecke) angeordnet. Die Volumenschallwelle VW wird zu einer Rayleighwelle RW konvertiert und von einem am Ende der Meßstrecke angeordneten Empfänger für Rayleighwellen sensiert.

Die Besonderheit des Ausführungsbeispiels von Figur 12c besteht darin, daß der gegenüberliegende Festkörper 5a nicht nur als passives, sondern als aktives Bauelement in die Meßanordnung einbezogen wird. Demnach ist ein Sender 1' für Rayleighwellen RW im gegenüberliegenden Festkörper 5a angeordnet, von wo aus akustische Energie auf die Grenzschicht des Festkörpers 5 überspricht und dort Rayleighwellen RW anregt. Diese werden vom Modenwandler 4 zu Volumenschallwellen VW konvertiert und vom Empfänger 2 sensiert.

An dieser Stelle sei darauf hingewiesen, daß der Prinzipaufbau der Meßanordnungen der Figuren 12a bis 12c auch mit mehreren Modenwandlern ausgestattet sein kann. Jedoch muß beachtet werden, daß mit jeder Modenkonversion Verluste verbunden sind, die sich negativ auf den Meßvorgang auswirken können.

Falls die Materialeigenschaften (Rayleighwellengeschwindigkeit) und/oder die für das "Übersprechen" akustischer Energie notwendige Neigung der Grenzflächen der sich gegenüberliegenden Festkörper den Erfordernissen nicht angepaßt werden können, besteht die Möglichkeit, das in Figur 13 dargestellte Prinzip einzusetzen. Es geht von der Feststellung aus, daß Kompressionswellen KW in der Flüssigkeit in einem vergleichsweise weiten Winkelbereich ihres Auftreffens auf einen Festkörper in der Lage sind, genügend viel Energie einzukoppeln. Die schematische Darstellung von Figur 13 zeigt einen ersten Festkörper 5 mit einem Sender 1' für Rayleighwellen RW, die sich entlang der Meßstrecke 5' ausbreiten. Die durch die Vertikalkomponente der Rayleighwelle RW ausgekoppelte und in eine Kompressionswelle KW der Flüssigkeit konvertierte Energie trifft in einem gewissen Abstand auf die Oberfläche eines gewölbt ausgebildeten (oder geneigt angeordneten) zweiten Festkörpers 5a. Durch den an der Oberfläche platzierten Modenwandler 3 wird ein Teil der Energie der Volumenschallwelle KW in Rayleighwellenenergie umgewandelt, die sich in der Grenzschicht des Festkörpers 5a bis zum Empfänger 2 ausbreitet. In Analogie zu Figur 12c tragen die Grenzflächen beider Festkörper 5, 5a zum Meßeffekt bei.

**Bezugszeichenliste für die Figuren 1a bis 1m**

| | |
|---|---|
| 1 | Festkörper (der die Meßstrecke trägt) |
| 1a | Festkörper (der die Meßstrecke trägt) |
| 1b | Festkörper (der die Meßstrecke trägt) |
| 1c | Festkörper (der die Meßstrecke trägt) |
| 1d | Festkörper (der die Meßstrecke trägt) |
| 1e | Festkörper (der die Meßstrecke trägt) |
| 1ee | Walze |
| 1f | Festkörper (der die Meßstrecke trägt) |
| 1ff | Walze |
| 1h | Festkörper (der die Meßstrecke trägt) |
| 1g | Festkörper (der die Meßstrecke trägt) |
| 10 | Festkörperoberfläche / Grenzfläche |
| 11 | Grenzschicht (in der sich die Rayleighwelle RW ausbreitet) |
| 100 | Meßstrecke |
| 101 | Meßstrecke |
| 102 | Meßstrecke |
| 103 | Meßstrecke |
| 104 | Meßstrecke |
| 105 | Meßstrecke |
| 106 | Meßstrecke |
| 110 | Zuleitungsstrecke für akustische Energie zur Meßstrecke |
| 111 | Zuleitungsstrecke für akustische Energie zur Meßstrecke |
| 120 | Ableitungsstrecke für akustische Energie zum Empfänger |
| 121 | Ableitungsstrecke für akustische Energie zum Empfänger |
| 130 | Strecke mit Wellenleitcharakter |
| 131 | Grenze des Bereichs mit Wellenleitcharakter |
| 140 | Rotationsachse |
| 150 | Abstreifer |
| 151 | Abstreifer / Rührer |
| 151a | Hohlachse |
| | |
| 2 | Medium (das an die Flüssigkeit angrenzt und der Meßstrecke gegenüberliegt) |
| 2a | Medium mit schlechter akustischer Ankoppelbarkeit, z.B. Gas |
| 2b | Medium mit guter akustischer Ankoppelbarkeit (wie Meßstrecke) und mit einer im Vergleich zum Festkörper der Meßstrecke höheren Rayleighwellengeschwindigkeit |
| 2'b | Begrenzungselemente |
| 2c | Medium mit gleicher Rayleighwellengeschwindigkeit wie die Meßstrecke, vorzugsweise identisch mit dem Festkörper der Meßstrecke |
| 2d | Medium mit im Vergleich zur Meßstrecke ungleicher Rayleighwellengeschwindigkeit, aber daran angepaßter Neigung ihrer Grenzflächen |
| 2e | Medium mit im Vergleich zur Meßstrecke größe- |

| | |
|---|---|
| | rer Geschwindigkeit für die Kompressionswelle |
| 20 | Festköperoberfläche / Grenzfläche |
| 21 | Grenzschicht (in der sich die Rayleighwelle RW ausbreitet) |
| 200 | Meßstrecke |
| | |
| 3 | Flüssigkeit |
| 3a | Flüssigkeitsschicht dünner $\lambda_{KW}/4$ |
| 3b | Flüssigkeitsschicht dünner oder gleich oder dikker $\lambda/_{KW}4$ |
| | |
| 4 | Modenwandler |
| 40 | Reflektor |
| | |
| 5 | akustisches Übertragungssystem |
| | |
| 60 | Störquelle |
| 61 | Abstreifer |
| 62 | Rohrleitung |
| | |
| 70 | akustisches Koppelelement / Abstreifer |
| 71 | akustisches Koppelsystem |
| 72 | Keilwandler |
| 73 | Keilwandler |
| | |
| d | Dicke der Flüssigkeitsschicht |
| | |
| E | Empfänger |
| $E_{RW}$ | Empfänger für Rayleighwellen |
| $E_{KW}$ | Empfänger für Kompressionswellen |
| $E_{VW}$ | Empfänger für Volumenschallwellen |
| | |
| s | Sender |
| $S_{RW}$ | Sender für Rayleighwellen |
| $S_{VW}$ | Sender für Volumenschallwellen |
| | |
| RW | Rayleighwelle |
| KW | Kompressionswelle in der Flüssigkeit |
| VW | Volumenschallwelle im Festkörper |
| | |
| $v^{(1)}_{RW}$ | Rayleighgeschwindigkeit der Meßstrecke (in der ersten Festkörpergrenzschicht) |
| $V^{(2)}_{RW}$ | Rayleighgeschwindigkeit in der zweiten, gegenüberliegenden Festkörpergrenzschicht |
| $V_{KW}$ | Schallgeschwindigkeit der Kompressionswelle in der Flüssigkeit |
| | |
| $\lambda_{RW}$ | Wellenlänge der Rayleighwelle |
| | |
| $\lambda_{KW}$ | Wellenlänge der Kompressionswelle |
| | |
| (1) | Index für die Meßstrecke / den ersten Festkörper |
| (2) | Index für den der Meßstrecke gegenüberliegenden zweiten Festkörper |
| II | Index für die Flüssigkeit |

**Bezugszeichenliste für die Figuren 6 bis 14e**

| 1 | Sender von Volumenschallwellen |
|---|---|
| 1' | Sender von Rayleighwellen |
| 10 | Ausbreitungsrichtung von Volumenschallwellen |
| 10' | Ausbreitungsrichtung der Rayleighwellen |
| 12 | Sender/Empfänger-Einheit von Volumenschallwellen |
| 12' | Sender/Empfänger-Einheit von Volumenschallwellen |
| 100' | Elementarwelle |
| 2 | Empfänger von Volumenschallwellen |
| 2' | Empfänger von Rayleighwellen |
| 3 | Modenwandler (VW in RW) |
| 34 | Modenwandler (VW in RW und zurück von RW in VW) |
| 34' | Modenwandler |
| 34" | Modenwandler |
| 34''' | Modenwandler |
| 34'''' | Modenwandler |
| 340 | Schlitz |
| 341 | Kante, Koppelfläche |
| 4 | Modenwandler (RW in VW) |
| 5 | wellenleitender Festkörper |
| 5a | der Meßstrecke gegenüberliegender Festkörper |
| 5' | Meßstrecke |
| 5'a | Meßstrecke |
| 5'b | Meßstrecke |
| 50 | Kante, Koppelfläche |
| 6 | Reflektor |
| 6a | Reflektor |
| 6b | Reflektor |
| 7 | zu messende Flüssigkeit |
| 8 | Trennelement |
| $\lambda$ | Wellenlänge der Rayleighwelle |
| $E_{RW}$ | Empfänger für Rayleighwellen |
| $E_{VW}$ | Empfänger für Volumenschallwellen |
| $S_{RW}$ | Sender von Rayleighwellen |
| $S_{VW}$ | Sender von Volumenschallwellen |
| RW | Ravleighwelle |
| KW | Kompressionswelle |
| VW | Volumenschallwelle |

Die Bezugszeichen der nachstehenden Patentansprüche sind in folgender Verbindung zu den Figuren zu lesen:

Patentansprüche 1 bis 17 $\Rightarrow$ in Verbindung mit den Figuren 1a bis 5.5c,
Patentansprüche 18 bis 29 $\Rightarrow$ in Verbindung mit den Figuren 6 bis 14e,
Patentansprüche 30 bis 58 $\Rightarrow$ in Verbindung mit den Figuren 1a bis 5.5c,
Patentansprüche 59 bis 68 $\Rightarrow$ in Verbindung mit den Figuren 6 bis 14e.

**Patentansprüche**

1. Verfahren zum Messen physikalischer oder technischer Größen von Flüssigkeiten (3, 3a, 3b), einschließlich hochviskoser, teigiger oder pastöser Medien, unter Verwendung eines akustischen Übertragungssystems (5) mit wenigstens einer von einer Festkörperoberfläche aus nichtpiezoelektrischem Material gebildeten Meßstrekke (100 - 106), die mit dem zu vermessenden Medium zumindest teilweise in Kontakt bringbar ist und der mittels eines Senders ($S_{RW}$, $S_{VW}$) akustische Energie zugeführt wird, und mit mindestens einem Empfänger ($E_{RW}$, $E_{KW}$, $E_{VW}$), wobei

   a) zumindest ein Teil der akustischen Energie der Meßstrecke (100 - 106) in Form mindestens einer Rayleighwelle (RW) zur Verfügung gestellt wird,

   b) die Rayleighwelle (RW) sich auf der Meßstrecke (100 - 106) über wenigstens ein Achtel ihrer Wellenlänge ($\lambda_{RW}$), vorzugsweise über mehr als das Doppelte ihrer Wellenlänge, ausbreitet,

   c) in dem akustischen Übertragungssystem (5) aus der Rayleighwelle (RW) ausgekoppelte Energie dem Empfänger ($E_{RW}$, $E_{KW}$, $E_{VW}$) zugeführt wird oder das akustische Übertragungssystem (5) zumindest zwischen dem Beginn der Meßstrecke (100 - 106) und dem Empfänger ($E_{RW}$, $E_{KW}$, $E_{VW}$) nach dem Prinzip eines Wellenleiters arbeitet, indem eine Auskopplung von Energie aus der Rayleighwelle (RW) in das zu vermessende Medium, die nicht der Messung dient, dadurch unterdrückt wird, daß die Schichtdikke (d) des zu messenden Mediums auf der Meßstrecke (100 - 106) auf einen Bereich begrenzt wird, der größer als die viskose Grenzschichtdicke und kleiner als die zur Ausbildung der Grundschwingung einer stehenden Kompressionswelle (KW) notwendigen Flüssigkeitsschicht ist, und

   d) zur Ermittlung der zu messenden Größe Veränderungen wenigstens einer Kenngröße der Rayleighwelle (RW) zugrunde gelegt werden.

**2.** Verfahren nach Anspruch 1, **dadurch gekennzeichnet, daß** die Schichtdicke (d) des zu messenden Mediums auf der Meßstrecke (100 - 106) auf einen Bereich unterhalb eines Viertels der Wellenlänge ($_{KW}$/4) der Kompressionswelle (KW) begrenzt wird.

**3.** Verfahren nach Anspruch 1 oder 2, **dadurch gekennzeichnet, daß** die Schicht des zu messenden Mediums von einer ablaufenden Flüssigkeitsschicht (3a) gebildet wird.

**4.** Verfahren nach einem der vorhergehenden Ansprüche, **dadurch gekennzeichnet, daß** die Schicht des zu messenden Mediums eine Flüssigkeitsschicht (3a) ist, deren Dicke durch ein relativ zur Meßstrecke bewegtes, parallel geführtes mechanisches Element (150, 151) begrenzt wird.

**5.** Verfahren nach einem der vorhergehenden Ansprüche, **dadurch gekennzeichnet, daß** die Schicht des zu messenden Mediums eine Flüssigkeitsschicht ist, deren Dicke durch einen Abstreifer begrenzt wird, und daß über den Abstreifer Rayleighwellen in die Meßstrecke oder eine davorliegende Zuleitungsstrecke eingekoppelt werden.

**6.** Verfahren nach einem der vorhergehenden Ansprüche, **dadurch gekennzeichnet, daß** die Schicht des zu messenden Mediums eine Flüssigkeitsschicht ist, deren Dicke durch ein zur Meßstrecke parallel und periodisch geführtes mechanisches Element, z.B. in Form eines Abstreifers oder eines Kolbens im Zylinder, begrenzt wird, und daß der Meßvorgang mit der gleichen Periode wie die Bewegung des mechanischen Elements oder einem Vielfachen dieser Periode durchgeführt wird.

**7.** Verfahren nach einem der vorhergehenden Ansprüche, **dadurch gekennzeichnet, daß** die Strömungsgeschwindigkeit der Flüssigkeit entlang der Ausbreitungsrichtung der Rayleighwelle (RW) bei der Auswertung der Meßergebnisse berücksichtigt wird.

**8.** Verfahren nach Anspruch 1 oder 2, **dadurch gekennzeichnet, daß** die Schichtdicke des zu messenden Mediums durch einen Spalt begrenzt wird, der einerseits durch die Meßstrecke (100, 106) und andererseits eine gegenüberliegende Wendung eines Festkörpers (2b) begrenzt wird, deren Rayleighwellengeschwindigkeit größer ist als die der Meßstrecke (100, 106).

**9.** Verfahren nach Anspruch 8, **dadurch gekennzeichnet, daß** das zu messende Medium von einem Flüssigkeitsstrom gebildet wird, wobei die Strömungsgeschwindigkeit der Flüssigkeit entlang der Ausbreitungsrichtung der Rayleighwelle (RW) bei der Auswertung der Meßergebnisse berücksichtigt wird.

**10.** Verfahren zum Messen physikalischer oder technischer Größen von Flüssigkeiten (3, 3a, 3b), einschließlich hochviskoser, teigiger oder pastöser Medien, unter Verwendung eines akustischen Übertragungssystems (5) mit wenigstens einer von einer Festkörperoberfläche aus nichtpiezoelektrischem Material gebildeten Meßstrecke (100 - 106), die mit dem zu vermessenden Medium zumindest teilweise in Kontakt bringbar ist und der mittels eines Senders ($S_{RW}$, $S_{VW}$) akustische Energie zugeführt wird, und mit mindestens einem Empfänger ($E_{RW}$, $E_{KW}$, $E_{VW}$), wobei

   a) zumindest ein Teil der akustischen Energie der Meßstrecke (100 - 106) in Form mindestens einer Rayleighwelle (RW) zur Verfügung gestellt wird,

   b) die Rayleighwelle (RW) sich auf der Meßstrecke (100 - 106) über wenigstens ein Achtel ihrer Wellenlänge ($_{RW}$), vorzugsweise über mehr als das Doppelte ihrer Wellenlänge, ausbreitet,

   c) in dem akustischen Übertragungssystem (5) aus der Rayleighwelle (RW) ausgekoppelte Energie dem Empfänger ($E_{RW}$, $E_{KW}$, $E_{VW}$) zugeführt wird oder das akustische Übertragungssystem (5) zumindest zwischen dem Beginn der Meßstrecke (100 - 106) und dem Empfänger ($E_{RW}$, $E_{KW}$, $E_{VW}$) nach dem Prinzip eines Wellenleiters arbeitet, indem eine Auskopplung von Energie aus der Rayleighwelle (RW) in das zu vermessende Medium, die nicht der Messung dient, unterdrückt wird,

   d) an der Festkörperoberfläche der Meßstrecke die Rayleighwellen (RW) in Kompressionswellen (KW) konvertiert und in das zu messende Medium abgestrahlt werden und daß die Kompressionswellen (KW) von einer im Abstand zur Meßstrecke verlaufenden Festkörperoberfläche aufgefangen werden, und

   e) zur Ermittlung der zu messenden Größe Veränderungen wenigstens einer Kenngröße der Rayleighwelle (RW) zugrunde gelegt werden.

**11.** Verfahren nach Anspruch 10, **dadurch gekennzeichnet, daß** die Schichtdicke des zu messenden Mediums größer als ein Viertel der Wellenlänge ($_{KW}$) der Kompressionswelle (KW) ist und daß die Kompressionswellen (KW) möglichst vollständig von der im Abstand zur Meßstrecke verlaufenden Festkörperoberfläche aufgefangen werden.

12. Verfahren nach Anspruch 11, **dadurch gekennzeichnet, daß** die die Meßstrecke (100) bildende Festkörperoberfläche und die gegenüberliegende Festkörperoberfläche derart zueinander ausgerichtet sind und derartige Rayleighwellengeschwindigkeiten aufweisen, daß die Kompressionswellen (KW) an der der Meßstrecke (100) gegenüberliegenden Festkörperoberfläche wieder zu Rayleighwellen (RW) konvertiert werden.

13. Verfahren nach Anspruch 12, **dadurch gekennzeichnet, daß** die an der der Meßstrecke (100) gegenüberliegen Festkörperoberfläche angeregten Rayleighwellen (RW) ihrerseits Kompressionswellen (KW) in die angrenzende Flüssigkeit auskoppeln, die wiederum an der Festkörperoberfläche der Meßstrecke (100) Rayleighwellen (RW) anregen.

14. Verfahren nach Anspruch 13, **dadurch gekennzeichnet, daß** die Rayleighwellengeschwindigkeit ($v^{(1)}_{RW}$) auf der die Meßstrecke (100) bildenden Festkörperoberfläche größer ist als die Rayleighwellengeschwindigkeit ($v^{(2)}_{RW}$) auf der gegenüberliegenden Festkörperoberfläche, so daß die Kompressionswellen (KW) an der der Meßstrecke (100) gegenüberliegenden Festkörperoberfläche zu Volumenschallwellen (SW, VW) in diesem gegenüberliegenden Festkörper konvertiert werden.

15. Verfahren nach einem der vorhergehenden Ansprüche, **dadurch gekennzeichnet, daß** die Rayleighwellen über einen Oberflächenbereich geleitet werden, der funktioneller Bestandteil einer Vorrichtung ist, z.B. einer Arbeitsmaschine oder einer massiven Wandung, und somit die Meßstrecke bildet.

16. Verfahren nach einem der vorhergehenden Ansprüche, **dadurch gekennzeichnet, daß** über die Meßstrecke Energie, z.B. Wärme, elektrische, magnetische oder optische Energie oder akustische Energie in das Medium eingekoppelt oder ausgekoppelt wird.

17. Verfahren nach einem der vorhergehenden Ansprüche, **dadurch gekennzeichnet, daß** zur Ermittlung der zu messenden Größe ausschließlich der dissipative Energieverlust der Rayleighwelle (RW) in der Meßstrecke (100-106) herangezogen wird.

18. Verfahren nach einem der vorhergehenden Ansprüche, **dadurch gekennzeichnet, daß** eine Auskopplung von Energie aus der Rayleighwelle (RW), die sich entlang der Meßstrecke ausbreitet, in eine Flüssigkeitsschicht dadurch unterbunden wird, daß das die Meßstrecke bildende Material derart ausgewählt wird, daß Rayleighwellengeschwindigkeit in diesem Material kleiner ist als die Schallgeschwindigkeit einer Kompressionswelle (KW) in dem angrenzenden, zu vermessenden Medium.

19. Verfahren zum Messen physikalischer oder technischer Größen von Flüssigkeiten (7), einschließlich hochviskoser, teigiger oder pastöser Medien, unter Verwendung eines akustischen Übertragungssystems (5) mit wenigstens einer von einer Festkörperoberfläche aus nichtpiezoelektrischem Material gebildeten Meßstrecke (5', 5'a, 5'b), die einen funktionalen Bestandteil einer Vorrichtung, wie z.B. einer Arbeitsmaschine, eines Behälters, eines Transportsystems etc., bildet, die mit dem zu vermessenden Medium zumindest teilweise in Kontakt bringbar ist und der mittels eines Senders (1, 1') akustische Energie zugeführt wird, und mit mindestens einem Empfänger (2, 2'), wobei

a) zumindest ein Teil der akustischen Energie der Meßstrecke (5', 5'a, 5'b) in Form mindestens einer Rayleighwelle (RW) zur Verfügung gestellt wird,

b) die Rayleighwelle (RW) sich auf der Meßstrecke (5', 5'a, 5'b) über wenigstens ein Achtel ihrer Wellenlänge ( $_{RW}$), vorzugsweise über mehr als das Doppelte ihrer Wellenlänge, ausbreitet,

c) zumindest ein Teil der vom Sender (1, 1') ausgehenden akustischen Welle auf ihrem Weg zum Empfänger (2, 2') wenigstens einmal einen Modenwandler (3, 4, 34', 34'', 34''', 34'''') durchläuft und

d) dieser Teil der Welle hinsichtlich der Mode wenigstens teilweise von einer Rayleighwelle (RW) in einer Volumenschallwelle (SW, VW) oder umgekehrt konvertiert wird und

e) zur Ermittlung der zu messenden Größe Veränderungen wenigstens einer Kenngröße der Rayleighwelle (RW) zugrunde gelegt werden.

20. Verfahren nach Anspruch 19, **dadurch gekennzeichnet, daß** vom Sender (1) in dem die Meßstrecke (5') tragenden bzw. bildenden Festkörper (5) Volumenschallwellen (VW) angeregt werden, die von einem in unmittelbarer Nähe der Meßstrecke (5') angeordneten Modenwandler (3) in Rayleighwellen (RW). konvertiert werden, die anschließend die Meßstrecke (5') durchlaufen.

21. Verfahren nach Anspruch 20, **dadurch gekennzeichnet, daß** die Rayleighwellen (RW) nach dem Durchlaufen der Meßstrecke (5') von einem sich an die Meßstrecke (5') anschließenden zweiten Modenwandler (4) in Volumenschallwellen (VW) rückkonvertiert werden, die sich bis zu einem volumenschallwellensensitiven Empfänger (2) ausbreiten.

22. Verfahren nach Anspruch 20, **dadurch gekennzeichnet, daß** die Rayleighwellen (RW) nach dem Durchlaufen der Meß-strecke (5') direkt oder nach dem Durchlaufen einer sich daran anschließenden Ableitungsstrecke von einem rayleighwellensensitiven Empfänger (2') sensiert werden.

23. Verfahren nach Anspruch 20, **dadurch gekennzeichnet, daß** die Rayleighwellen (RW) nach dem Durchlaufen der Meßstrecke (5', 5a, 5b) reflektiert werden, so daß sie die Meßstrecke (5', 5a, 5b) in der Gegenrichtung ein zweites Mal durchlaufen und wieder auf den Modenwandler (34) treffen, der die zurücklaufende Rayleighwelle (RW) wieder in eine Volumenschallwelle (VW) konvertiert, die sich bis zum Empfänger (12) ausbreitet, und daß die Wellenanregung gepulst erfolgt.

24. Verfahren nach Anspruch 19, **dadurch gekennzeichnet, daß** vom Sender (1') in der Meßstrecke (5') oder in einer mit dieser verbundenen Zuleitungsstrecke Rayleighwellen (RW) angeregt werden, die nach dem Durchlaufen der Meßstrecke (5') von einem Modenwandler (4) in Volumenschallwellen (VW) konvertiert und bis zum Empfänger (2) weitergeleitet werden.

25. Verfahren nach Anspruch 19, **dadurch gekennzeichnet, daß** zur Ermittlung der zu messenden Größe ausschließlich der dissipative Energieverlust der Rayleighwelle (RW) in der Meßstrecke herangezogen wird.

26. Verfahren nach einem der vorhergehenden Ansprüche, **dadurch gekennzeichnet, daß** die Schichtdicke des zu messenden Mediums auf der Meßstrecke (5') auf einen Bereich begrenzt wird, der größer als die viskose Grenzschichtdicke und kleiner als die zur Ausbildung der Grundschwingung einer stehenden Kompressionswelle (KW) notwendigen Flüssigkeitsschicht ist, vorzugsweise auf einen Bereich unterhalb einem Viertel der Wellenlänge ($\lambda_{KW}$) der Kompressionswelle (KW).

27. Verfahren nach Anspruch 26, **dadurch gekennzeichnet, daß** die Schichtdicke des zu messenden Mediums durch einen Spalt begrenzt wird, der einerseits durch die Meßstrekke (5') und andererseits einen gegenüberliegenden Festkörper (5a) begrenzt wird, deren Rayleighwellengeschwindigkeit größer ist als die der Meßstrecke (5').

28. Verfahren nach Anspruch 19, **dadurch gekenn-** **zeichnet, daß** an der Festkörperoberfläche der Meßstrecke (S') die Rayleighwellen (RW) in Kompressionswellen (KW) konvertiert und in das zu messende Medium (7) mit einer Schichtdicke, die größer als ein Viertel der Wellenlänge ($\lambda_{kw}$) der Kompressionswelle (KW) sein kann, abgestrahlt werden, und daß die Kompressionswellen (KW) möglichst vollständig von einer im Abstand zur Meßstrecke (5') angeordneten Festkörperoberfläche aufgefangen werden.

29. Verfahren nach Anspruch 19, **dadurch gekennzeichnet, daß** für die Meßstrecke (5') ein Festkörper (5) verwendet wird, dessen Rayleighwellengeschwindigkeit kleiner ist als die Schallgeschwindigkeit der Kompressionswelle (KW) in der zu messenden Flüssigkeit (7).

30. Verfahren nach einem der Ansprüche 19 bis 29, **dadurch gekennzeichnet, daß** das akustische Übertragungssystem (5) zumindest zwischen dem Beginn und dem Ende der Meßstrecke (100 - 106) nach dem Prinzip eines Wellenleiters arbeitet, indem eine Auskopplung von Energie aus der Rayleighwelle (RW) in das zu vermessende Medium, die nicht der Messung dient, unterdrückt wird, oder aus der Rayleighwelle (RW) ausgekoppelte Energie dem Empfänger ($E_{RW}$, $E_{KW}$, $E_{VW}$) zugeführt wird, und daß zur Ermittlung der zu messenden Größe Veränderungen wenigstens einer Kenngröße der Rayleighwelle (RW) zugrunde gelegt werden.

31. Vorrichtung zum Messen physikalischer oder technischer Größen von Flüssigkeiten (3, 3a, 3b), einschließlich hochviskoser, teigiger oder pastöser Medien, unter Verwendung eines akustischen Übertragungssystems (5) mit wenigstens einer von einer Festkörperoberfläche aus nichtpiezoelektrischem Material gebildeten Meßstrekke (100 - 106), die mit dem zu vermessenden Medium zumindest teilweise in Kontakt bringbar ist und der mittels eines Senders ($S_{RW}$, $S_{VW}$) akustische Energie zuführbar ist, und mit mindestens einem Empfänger ($E_{RW}$, $E_{KW}$, $E_{VW}$), wobei

    a) die Meßstrecke (100 - 106) wenigstens auf einer solchen Länge zur Fortleitung von Rayleighwellen (RW) geeignet ist, die einem Achtel der Wellenlänge ($\lambda_{RW}$) der erzeugten Rayleighwelle (RW), vorzugsweise mehr als dem Doppelten dieser Wellenlänge, entspricht,

    b) in dem akustischen Übertragungssystem (5) aus der Rayleighwelle (RW) ausgekoppelte Energie dem Empfänger ($E_{RW}$, $E_{KW}$, $E_{VW}$) zugeführt wird oder das akustische Übertragungssystem (5) zumindest zwischen dem Beginn der Meßstrecke (100 - 106) und dem Empfänger ($E_{RW}$, $E_{KW}$, $E_{VW}$) nach dem Prinzip eines Wellenleiters ausgebildet ist, indem eine Auskopplung von Energie aus der Rayleighwelle (RW) in das zu vermessende Medium, die nicht der Messung dient, dadurch unterdrückt wird, daß die Schichtdicke (d) des zu messenden Mediums auf der Meßstrecke (100 - 106) auf einen Bereich begrenzt ist, der größer als die viskose Grenzschichtdicke und kleiner als die zur Ausbildung der Grundschwingung einer stehenden Kompressionswelle (KW) notwendige Dicke der Flüssigkeitsschicht ist,

c) der Sender ($S_{RW}$, $S_{VW}$) und/oder der Empfänger ($E_{RW}$, $E_{KW}$, $E_{VW}$) einerseits und die Meßstrecke (100 - 106) andererseits separate Bauteile sind, und

d) die Vorrichtung so eingerichtet ist, daß zur Ermittlung der zu messenden Größe Veränderungen wenigstens einer Kenngröße der Rayleighwelle (RW) zugrunde gelegt werden.

**32.** Vorrichtung nach Anspruch 31, **dadurch gekennzeichnet, daß** die Schichtdicke (d) des zu messenden Mediums auf der Meßstrecke (100 - 106) auf einen Bereich unterhalb eines Viertels der Wellenlänge ($_{KW}$) der Kompressionswelle (KW) begrenzt ist.

**33.** Vorrichtung nach Anspruch 31 oder 32, **dadurch gekennzeichnet, daß** die Festkörperoberfläche der Meßstrekke (101) als geneigte Platte (1b) ausgebildet ist.

**34.** Vorrichtung nach einem der Ansprüche 31 bis 33, **dadurch gekennzeichnet, daß** die Festkörperoberfläche der Meßstrecke als ebenes oder kegelförmiges, drehbar gelagertes Element ausgebildet ist, über dessen Rotationsgeschwindigkeit die zur Begrenzung der Schichtdicke notwendige Zentrifugalkraft erzeugbar ist.

**35.** Vorrichtung nach einem der Ansprüche 31 bis 34, **dadurch gekennzeichnet, daß** der Festkörperoberfläche der Meßstrecke ein Abstreifer (150, 151) zugeordnet ist, der die Flüssigkeitsschicht (3a) auf ein vorher bestimmtes Maß reduziert.

**36.** Vorrichtung nach einem der Ansprüche 31 bis 35, **dadurch gekennzeichnet, daß** der Festkörperoberfläche der Meßstrecke eine Abblasvorrichtung zugeordnet ist, die ein Anwachsen der Flüssigkeitsschicht auf ein vorher bestimmtes Maß begrenzt.

**37.** Vorrichtung nach einem der Ansprüche 31 bis 36, **dadurch gekennzeichnet, daß** gegenüber der Festkörperoberfläche der Meßstrecke und parallel dazu in einem Abstand von höchstens einem Viertel der Wellenlänge ($_{KW}$) der Kompressionswelle (KW) eine weitere, einen Spalt bildende Festkörperoberfläche angeordnet ist, auf der die Rayleighwellengeschwindigkeit größer ist als auf der Festkörperoberfläche der Meßstrecke.

**38.** Vorrichtung zum Messen physikalischer oder technischer Größen von Flüssigkeiten (3, 3a, 3b), einschließlich hochviskoser, teigiger oder pastöser Medien, unter Verwendung eines akustischen Übertragungssystems (5) mit wenigstens einer von einer Festkörperoberfläche aus nichtpiezoelektrischem Material gebildeten Meßstrekke (100 - 106), die mit dem zu vermessenden Medium zumindest teilweise in Kontakt bringbar ist und der mittels eines Senders ($S_{RW}$, $S_{VW}$) akustische Energie zuführbar ist, und mit mindestens einem Empfänger ($E_{RW}$, $E_{KW}$, $E_{VW}$), wobei

a) die Meßstrecke (100 - 106) wenigstens auf einer solchen Länge zur Fortleitung von Rayleighwellen (RW) geeignet ist, die einem Achtel der Wellenlänge ($_{RW}$) der erzeugten Rayleighwelle (RW), vorzugsweise mehr als dem Doppelten dieser Wellenlänge, entspricht,

b) in dem akustischen Übertragungssystem (5) aus der Rayleighwelle (RW) ausgekoppelte Energie dem Empfänger ($E_{RW}$, $E_{KW}$, $E_{VW}$) zugeführt wird oder das akustische Übertragungssystem (5) zumindest zwischen dem Beginn der Meßstrecke (100 - 106) und dem Empfänger ($E_{RW}$, $E_{KW}$, $E_{VW}$) nach dem Prinzip eines Wellenleiters ausgebildet ist, indem eine Auskopplung von Energie aus der Rayleighwelle (RW) in das zu vermessende Medium, die nicht der Messung dient, unterdrückt wird,

c) gegenüber der Festkörperoberfläche der Meßstrecke und dazu parallel in einem Abstand eine weitere Festkörperoberfläche angeordnet ist, auf der die Rayleighwellengeschwindigkeit kleiner oder gleich der Rayleighwellengeschwindigkeit auf der Festkörperoberfläche der Meßstrecke ist, und die weitere Festkörperoberfläche so angeordnet ist, daß sie während der Messung mit dem zu vermessenden Medium in Kontakt steht, derart, daß sich das zu vermessende Medium zwischen den beiden Festkörperoberflächen befindet,

d) der Sender ($S_{RW}$, $S_{VW}$) und/oder der Empfänger ($E_{RW}$, $E_{KW}$, $E_{VW}$) einerseits und die Meßstrecke (100 - 106) andererseits separate Bauteile sind, und

e) die Vorrichtung so eingerichtet ist, daß zur Ermittlung der zu messenden Größe Veränderungen wenigstens einer Kenngröße der Rayleighwelle (RW) zugrunde gelegt werden.

39. Vorrichtung nach Anspruch 38, **dadurch gekennzeichnet, daß** die Festkörperoberflächen der Meßstrecke und des im Abstand gegenüberliegenden Elements aus Materialien mit gleicher Rayleighwellengeschwindigkeit, insbesondere aus identischen Materialien bestehen.

40. Vorrichtung nach Anspruch 38, **dadurch gekennzeichnet, daß** die Rayleighwellengeschwindigkeit auf dem der Meßstrecke gegenüberliegend angeordneten Festkörper kleiner als die Rayleighwellengeschwindigkeit auf der Meßstrecke ist.

41. Vorrichtung zum Messen physikalischer oder technischer Größen von Flüssigkeiten (3, 3a, 3b), einschließlich hochviskoser, teigiger oder pastöser Medien, unter Verwendung eines akustischen Übertragungssystems (5) mit wenigstens einer von einer Festkörperoberfläche aus nichtpiezoelektrischem Material gebildeten Meßstrekke (100 - 106), die mit dem zu vermessenden Medium zumindest teilweise in Kontakt bringbar ist und der mittels eines Senders ($S_{RW}$, $S_{VW}$) akustische Energie zuführbar ist, und mit mindestens einem Empfänger ($E_{RW}$, $E_{KW}$, $E_{VW}$), wobei

a) die Meßstrecke (100 - 106) wenigstens auf einer solchen Länge zur Fortleitung von Rayleighwellen (RW) geeignet ist, die einem Achtel der Wellenlänge ($_{RW}$) der erzeugten Rayleighwelle (RW), vorzugsweise mehr als dem Doppelten dieser Wellenlänge, entspricht,

b) in dem akustischen Übertragungssystem (5) aus der Rayleighwelle (RW) ausgekoppelte Energie dem Empfänger ($E_{RW}$, $E_{KW}$, $E_{VW}$) zugeführt wird oder das akustische Übertragungssystem (5) zumindest zwischen dem Beginn der Meßstrecke (100 - 106) und dem Empfänger ($E_{RW}$, $E_{KW}$, $E_{VW}$) nach dem Prinzip eines Wellenleiters ausgebildet ist, indem eine Auskopplung von Energie aus der Rayleighwelle (RW) in das zu vermessende Medium, die nicht der Messung dient, unterdrückt wird,

c) der Festkörperoberfläche der Meßstrecke in einem Abstand gegenüberliegend ein eine Festkörperoberfläche aufweisendes Element aus einem Material mit einer anderen Rayleighwellengeschwindigkeit angeordnet ist und in einem solchen Winkel zu der Festkörperoberfläche geneigt ist, daß durch eine von der Festkörperoberfläche der Meßstrecke ausgehende Kompressionswelle (KW) auf der gegenüberliegenden Festkörperoberfläche Rayleighwellen (RW) angeregt werden,

d) der Sender ($S_{RW}$, $S_{VW}$) und/oder der Empfänger ($E_{RW}$, $E_{KW}$, $E_{VW}$) einerseits und die Meßstrecke (100 - 106) andererseits separate Bauteile sind, und

e) die Vorrichtung so eingerichtet ist, daß zur Ermittlung der zu messenden Größe Veränderungen wenigstens einer Kenngröße der Rayleighwelle (RW) zugrunde gelegt werden.

42. Vorrichtung zum Messen physikalischer oder technischer Größen von Flüssigkeiten (3, 3a, 3b), einschließlich hochviskoser, teigiger oder pastöser Medien, unter Verwendung eines akustischen Übertragungssystems (5) mit wenigstens einer von einer Festkörperoberfläche aus nichtpiezoelektrischem Material gebildeten Meßstrekke (100 - 106), die mit dem zu vermessenden Medium zumindest teilweise in Kontakt bringbar ist und der mittels eines Senders ($S_{RW}$, $S_{VW}$) akustische Energie zuführbar ist, und mit mindestens einem Empfänger ($E_{RW}$, $E_{KW}$, $E_{VW}$), wobei

a) die Meßstrecke (100 - 106) wenigstens auf einer solchen Länge zur Fortleitung von Rayleighwellen (RW) geeignet ist, die einem Achtel der Wellenlänge ($_{RW}$) der erzeugten Rayleighwelle (RW), vorzugsweise mehr als dem Doppelten dieser Wellenlänge, entspricht,

b) in dem akustischen Übertragungssystem (5) aus der Rayleighwelle (RW) ausgekoppelte Energie dem Empfänger ($E_{RW}$, $E_{KW}$, $E_{VW}$) zugeführt wird oder das akustische Übertragungssystem (5) zumindest zwischen dem Beginn der Meßstrecke (100 - 106) und dem Empfänger ($E_{RW}$, $E_{KW}$, $E_{VW}$) nach dem Prinzip eines Wellenleiters ausgebildet ist, indem eine Auskopplung von Energie aus der Rayleighwelle (RW) in das zu vermessende Medium, die nicht der Messung dient, unterdrückt wird,

c) der Festkörperoberfläche der Meßstrecke in einem Abstand gegenüberliegend ein eine Festkörperoberfläche aufweisendes Element aus einem Material mit einer anderen Rayleighwellengeschwindigkeit angeordnet ist und in einem solchen Winkel zu der Festkörperoberfläche geneigt ist, daß durch eine von der Festkörperoberfläche der Meßstrecke ausgehende Kompressionswelle (KW) im gegenüberliegenden Festkörper Volumenschallwellen (SW, VW) angeregt werden,

d) der Sender ($S_{RW}$, $S_{VW}$) und/oder der Empfänger ($E_{RW}$, $E_{KW}$, $E_{VW}$) einerseits und die Meßstrecke (100 - 106) andererseits separate Bauteile sind, und

e) die Vorrichtung so eingerichtet ist, daß zur Ermittlung der zu messenden Größe Veränderungen wenigstens einer Kenngröße der Rayleighwelle (RW) zugrunde gelegt werden.

43. Vorrichtung nach Anspruch 40 oder 42, **dadurch gekennzeichnet, daß** der gegenüberliegende Festkörper mit einem Empfänger in Verbindung steht, der zum Sensieren von Volumenschallwellen (SW, VW) geeignet ist.

44. Vorrichtung nach Anspruch 40 oder 42, **dadurch gekennzeichnet, daß** der gegenüberliegende Festkörper ein Empfänger zum Sensieren von Volumenschallwellen (SW, VW) ist.

45. Vorrichtung nach einem der Ansprüche 31 bis 44, **dadurch gekennzeichnet, daß** die Meßstrecke von einer Legierung, insbesondere von einer nach dem Schmelz-Spinnverfahren hergestellten Legierung gebildet ist.

46. Vorrichtung nach einem der Ansprüche 31 bis 45, **dadurch gekennzeichnet, daß** die Meßstrecke funkioneller Bestandteil einer Vorrichtung ist, z.B. einer Arbeitsmaschine oder einer massiven Wandung.

47. Vorrichtung nach einem der Ansprüche 31 bis 46, **dadurch gekennzeichnet, daß** die Meßstrecke Mittel zur Einkopplung oder Auskopplung von Energie, z.B. von Wärme, von elektrischer, magnetischer oder optischer Energie oder von akustischer Energie mit einer von der Rayleighwelle verschiedenen Frequenz, aufweist.

48. Vorrichtung nach einem der Ansprüche 41 bis 47, **dadurch gekennzeichnet, daß** das zu vermessende Medium im Bereich der Meßstrecke mit einer zusätzlichen Vorrichtung zur Energiezuführung oder Energieabführung gekoppelt ist.

49. Vorrichtung nach Anspruch 48, **dadurch gekennzeichnet, daß** ein die Meßstrecke ausbildender oder tragender Festkörper elektrisch leitfähig ausgebildet und mit einer Gleich- oder Wechselspannungsquelle verbunden ist, um ein elektrisches Feld in einer zu vermessenden polaren oder elektrorheologischen Flüssigkeit oder einer Flüssigkeit mit in Ionen dissoziierten Bestandteilen zu erzeugen.

50. Vorrichtung nach Anspruch 48, **dadurch gekenn-**

**zeichnet, daß** ein die Meßstrecke ausbildender oder tragender Festkörper mit einer Wärmequelle oder mit einer anderen wärmeerzeugenden Energiequelle, z.B. einer elektrischen Spannungsquelle zum Betreiben der Meßstrecke als Widerstandsheizung, gekoppelt ist.

51. Vorrichtung nach Anspruch 48, **dadurch gekennzeichnet, daß** ein die Meßstrecke ausbildender oder tragender . Festkörper optisch durchlässig und gegebenenfalls optisch wellenleitend ausgebildet ist und mit einer Lichtquanten erzeugenden Energiequelle, z.B. einer LASER-Quelle, gekoppelt ist.

52. Vorrichtung nach Anspruch 48, **dadurch gekennzeichnet, daß** ein die Meßstrecke ausbildender oder tragender Festkörper in thermischer Verbindung mit einer Kühlvorrichtung steht oder einen Teil dieser Kühlvorrichtung bildet.

53. Vorrichtung nach Anspruch 52, **dadurch gekennzeichnet, daß** ein die Meßstrecke ausbildender oder tragender Festkörper Teil eines Peltier-Elements ist.

54. Vorrichtung nach einem der Ansprüche 31 bis 53, **dadurch gekennzeichnet, daß** im akustischen Übertragungssystem auf der Festkörperoberfläche wenigstens ein Modenwandler vorgesehen ist, der eine Volumenschallwelle (VW) in eine Rayleighwelle (RW) oder umgekehrt konvertiert.

55. Vorrichtung nach einem der Ansprüche 31 bis 54, **dadurch gekennzeichnet, daß** Sender und Empfänger als einstückige Einheit ausgebildet sind, wobei die Einheit abwechselnd im Sendemodus und Empfangsmodus betrieben wird.

56. Vorrichtung nach einem der Ansprüche 31 bis 55, **dadurch gekennzeichnet, daß** im akustischen Übertragungssystem auf der Festkörperoberfläche wenigstens ein Reflektor vorgesehen ist, der zur Umlenkung der auf ihn auftreffenden Wellenmode geeignet ist.

57. Vorrichtung zum Messen physikalischer oder technischer Größen von Flüssigkeiten (7), einschließlich hochviskoser, teigiger oder pastöser Medien, unter Verwendung eines akustischen Übertragungssystems (5) mit wenigstens einer von einer nichtpiezoelektrischen Festkörperoberfläche gebildeten Meßstrecke (5', 5'a, 5'b), die mit dem zu vermessenden Medium (7) zumindest teilweise in Kontakt bringbar und ein funktionaler Bestandteil einer Vorrichtung, wie z.B. einer Arbeitsmaschine, eines Behälters, eines Transportsystems etc., ist und der mittels eines Senders (1, 1') akustische Energie zuführbar ist, und mit mindestens einem Empfänger (2, 2'), wobei

a) die Meßstrecke (5') wenigstens auf einer solchen Länge zur Fortleitung von Rayleighwellen (RW) geeignet ist, die einem Achtel der Wellenlänge ($_{RW}$) der erzeugten Rayleighwelle (RW), vorzugsweise mehr als dem Doppelten dieser Wellenlänge, entspricht,

b) in Wirkverbindung zur Meßstrecke (5') oder zu einem mit der Meßstrecke (5') verbundenen Bereich wenigstens ein Modenwandler (3, 4, 34, 34', 34", 34''', 34'''') angeordnet ist, der so eingerichtet ist, daß er

- eine vom Sender (1, 1') zur Meßstrecke (5') hinlaufende Volumenschallwelle (VW) in eine Rayleighwelle (RW) konvertiert und/oder

- eine von der Meßstrecke (5') zum Empfänger laufende Rayleighwelle (RW) in eine Volumenschallwelle (VW) konvertiert, und

c) die Vorrichtung so eingerichtet ist, daß zur Ermittlung der zu messenden Größe Veränderungen wenigstens einer Kenngröße der Rayleighwelle (RW) zugrunde gelegt werden.

58. Vorrichtung nach Anspruch 57, **dadurch gekennzeichnet, daß** Sender (1, 12) und Empfänger (2, 12) auf der Rückseite des die Meßstrecke (5') tragenden bzw. bildenden Festkörpers (5) angeordnet sind und mit jeweils einem am Beginn bzw. am Ende der Meßstrecke (5') vorgesehenen Modenwandler (3, 4, 34) Volumenschallwellen (VW) leitend in Verbindung stehen.

59. Vorrichtung nach Anspruch 57, **dadurch gekennzeichnet, daß** Sender und Empfänger als einstückige Baueinheit (12) ausgebildet und auf der Rückseite des die Meßstrecke (5'a, 5'b) tragenden bzw. bildenden Festkörpers (5) angeordnet sind und mit einem am Beginn der Meßstrecke (5'a, 5'b) vorgesehenen Modenwandler (34) Volumenschallwellen (VW) leitend in Verbindung stehen, und daß am Ende der Meßstrecke (5'a, 5'b) ein Reflektor (6a, 6b) vorgesehen ist, der die Rayleighwelle (RW) in Richtung des Modenwandlers (34) reflektiert.

60. Vorrichtung nach Anspruch 57, **dadurch gekennzeichnet, daß** der Modenwandler (34', 34", 34''', 34'''') aus mehreren periodisch angeordneten Elementen besteht, die entlang der Ausbreitungsrichtung der Rayleighwelle angeordnet sind und eine Teilung aufweisen, die annähernd der Wellenlänge ($_{RW}$) der Rayleighwelle entspricht.

61. Vorrichtung nach Anspruch 57, **dadurch gekennzeichnet, daß** der Modenwandler (34') in Form einer Lochreihe in der Nähe der Grenzfläche des die Meßstrecke (5') bildenden oder tragenden Festkörpers ausgeführt ist.

62. Vorrichtung nach Anspruch 60, **dadurch gekennzeichnet, daß** der Modenwandler (34") in Form von periodisch angeordneten, symmetrisch oder asymmetrisch ausgebildeten Zähnen oder Kerben in der Oberfläche des die Meßstrekke (5') bildenden oder tragenden Festkörpers ausgeführt ist.

63. Vorrichtung nach Anspruch 60, **dadurch gekennzeichnet, daß** der Modenwandler von zusätzlichen separaten Teilen gebildet ist, die auf der Oberfläche des die Meßstrekke (5') bildenden oder tragenden Festkörpers angeordnet sind.

64. Vorrichtung nach Anspruch 63, **dadurch gekennzeichnet, daß** der Modenwandler (34''') von Einzelelementen gebildet ist, die in einem Abstand einer Wellenlänge ($_{RW}$) der Rayleighwellen fest mit der Oberfläche eines die Meßstrecke (5') bildenden oder tragenden Festkörpers verbunden sind, wobei die Senderichtung (10) der Volumenschallwelle geneigt zur Festkörperoberfläche verläuft.

65. Vorrichtung nach Anspruch 57, **dadurch gekennzeichnet, daß** die Schichtdicke einer zu messenden Flüssigkeitsschicht (7) auf der Meßstrecke (5') auf einen Bereich begrenzt ist, der größer als die viskose Grenzschichtdicke und kleiner als die zur Ausbildung der Grundschwingung einer stehenden Kompressionswelle (KW) notwendige Dicke der Flüssigkeitsschicht ist, vorzugsweise auf einen Bereich unterhalb eines Viertels der Wellenlänge ($_{KW}$) der Kompressionswelle (KW).

66. Vorrichtung nach einem der Ansprüche 31 bis 65; **dadurch gekennzeichnet, daß** Sender und Empfänger als einstückige Einheit (12) ausgebildet sind, wobei sich die Einheit abwechselnd im Sendemodus und Empfangsmodus befindet.

**Claims**

1. Method for measuring physical or technical dimensions of liquids (3, 3a, 3b), including highly viscous, doughy or paste-like mediums, using an acoustic transfer system (5) with at least one test section (100 - 106) formed by a solid surface made from non-piezo-electric material, which can be brought at least partly into contact with the medium to be measured and to which acoustic energy is fed by means of a sender ($S_{RW}$, $S_{VW}$), and with at least one receiver ($E_{RW}$, $E_{KW}$, $E_{VW}$), wherein

a) at least part of the acoustic energy is made available to the test section (100 - 106) in the form of at least one Rayleigh wave (RW),

b) the Rayleigh wave (RW) propagates on the test section (100 - 106) over at least an eighth of its wavelength ($_{RW}$), preferably over more than double its wavelength,

c) energy decoupled from the Rayleigh wave (RW) in the acoustic transfer system (5) is fed to the receiver ($E_{RW}$, $E_{KW}$, $E_{VW}$) or the acoustic transfer system (5) works according to the principle of a wave guide at least between the beginning of the test section (100 - 106) and the receiver ($E_{RW}$, $E_{KW}$, $E_{VW}$), wherein decoupling of energy from the Rayleigh wave (RW) into the medium to be measured, which does not serve for the measurement, is suppressed in that the layer thickness of the medium to be measured on the test section (100 - 106) is limited to a field which is greater than the viscous boundary layer thickness and smaller than the liquid layer necessary for the formation of the fundamental frequency of a stationary compression wave (KW), and

d) for the purpose of determining the value to be measured changes of at least one characteristic value of the Rayleigh wave (RW) are used as a basis.

2. Method according to Claim 1 **characterised in that** the layer thickness (d) of the medium to be measured on the test section (100 - 106) is limited to an area below a quarter of the wavelength ($_{KW}$/4) of the compression wave (KW).

3. Method according to Claim 1 or 2 **characterised in that** the layer of the medium to be measured is formed by a draining liquid layer (3a).

4. Method according to one of the preceding claims **characterised in that** the layer of the medium to be measured is a liquid layer (3), of which the thickness is limited by a mechanical element (150, 151) which is parallel guided and moved relative to the test section.

5. Method according to one of the preceding claims **characterised in that** the layer of the medium to be measured is a liquid layer, of which the thickness is limited by a doctor blade and that by means of the doctor blade Rayleigh waves are coupled into the test section or a feed section lying in front of it.

6. Method according to one of the preceding claims **characterised in that** the layer of the medium to be measured is a liquid layer, of which the thickness is limited by a mechanical element guided periodically and parallel to the test section, e.g. in the form of a doctor blade or a piston in the cylinder, and that the measurement process is carried out with the same period as the movement of the mechanical element or a multiple of this period.

7. Method according to one of the preceding claims **characterised in that** the flow speed of the liquid along the propagation direction of the Rayleigh wave (RW) is taken into consideration during the evaluation of the test results.

8. Method according to Claim 1 or 2 **characterised in that the** layer thickness of the medium to be measured is limited by a gap, which on the one hand is limited by the test section (100, 106) and on the other hand an opposite-lying face of a solid (2b), of which the Rayleigh wave speed is greater than that of the test section (100, 106).

9. Method according to Claim 8 **characterised in that** the medium to be measured is formed by a liquid flow, wherein the flow speed of the liquid along the propagation direction of the Rayleigh wave (RW) is taken into consideration during the evaluation of the test results.

10. Method for measuring physical or technical dimensions of liquids (3, 3a, 3b), including highly viscous, doughy or paste-like mediums, using an acoustic transfer system (5) with at least one test section (100 - 106) formed by a solid surface made from non-piezo-electric material, which can be brought at least partly into contact with the medium to be measured and to which acoustic energy is fed by means of a sender ($S_{RW}$, $S_{VW}$), and with at least one receiver ($E_{RW}$, $E_{KW}$, $E_{VW}$), wherein

a) at least part of the acoustic energy is made available to the test section (100 - 106) in the form of at least one Rayleigh wave (RW),

b) the Rayleigh wave (RW) propagates on the test section (100 - 106) over at least an eighth of its wavelength ($_{RW}$), preferably over more than double its wavelength,

c) energy decoupled from the Rayleigh wave (RW) in the acoustic transfer system is fed to the receiver ($E_{RW}$, $E_{KW}$, $E_{VW}$) or the acoustic transfer system (5) works according to the principle of a wave guide at least between the beginning of the test section (100 - 106) and the receiver ($E_{RW}$, $E_{KW}$, $E_{VW}$), wherein decoupling of energy from the Rayleigh wave (RW) into the medium to be measured, which does not serve for the measurement, is suppressed,

d) on the solid surface of the test section the Rayleigh waves (RW) are converted into compression waves (KW) and radiated into the medium to be measured and that the compression waves (KW) are captured by a solid surface running at a distance from the test section, and

e) for the purpose of determining the value to be measured changes of at least one characteristic value of the Rayleigh wave (RW) are used as a basis.

11. Method according to Claim 10 **characterised in that** the layer thickness of the medium to be measured is greater than a quarter of the wavelength ($\lambda_{KW}$) of the compression wave (KW) and that the compression waves (KW) are captured as fully as possible by the solid surface running at a distance from the test section.

12. Method according to Claim 11 **characterised in that** the solid surface forming the test section (100) and the opposite-lying solid surface are oriented towards each other and have such Rayleigh waves speeds that the compression waves (KW) on the solid surface lying opposite the test section (100) are converted into Rayleigh waves (RW) again.

13. Method according to Claim 12 **characterised in that** the Rayleigh waves (RW) energised on the solid surface lying opposite the test section (100) for their part decouple compression waves (KW) into the contiguous liquid, which in turn energise Rayleigh waves (RW) on the solid surface of the test section (100).

14. Method according to Claim 13 **characterised in that** the Rayleigh wave speed ($V^{(1)}_{RW}$) on the solid surface forming the test section (100) is greater than the Rayleigh wave speed ($v^{(2)}_{RW}$) on the opposite-lying solid surface, in such a way that the compression waves (KW) on the solid surface lying opposite the test section (100) are converted into volume soundwaves (SW, VW) in this opposite-lying solid.

15. Method according to one of the preceding claims **characterised in that** the Rayleigh waves are passed over a surface area, which is a functional component of a device, e.g. a machine or a solid wall, and thus forms the test section.

16. Method according to one of the preceding claims **characterised in that** via the test section energy, e.g. heat, electric, magnetic or optical energy or acoustic energy is coupled into or decoupled from the medium.

17. Method according to one of the preceding claims **characterised in that** for the purpose of determining the value to be measured solely the dissipative energy loss of the Rayleigh wave (RW) in the test section (100 - 106) is used.

18. Method according to one of the preceding claims **characterised in that** decoupling of energy from the Rayleigh wave (RW), which propagates along the test section, into a liquid layer is prevented **in that** the material forming the test section is selected in such a way that Rayleigh wave speed in this material is smaller than the sound speed of a compression wave (KW) in the neighbouring medium to be measured.

19. Method for measuring physical or technical dimensions of liquids (7), including highly viscous, doughy or paste-like mediums, using an acoustic transfer system (5) with at least one test section (5', 5'a, 5'b) formed by a solid surface made from non-piezo-electric material, which forms a functional component of a device, e.g. a machine, a receptacle, a transport system, etc, which can be brought at least partly into contact with the medium to be measured and to which acoustic energy is fed by means of a sender (1, 1'), and with at least one receiver (2, 2'), wherein

a) at least part of the acoustic energy is made available to the test section (5', 5'a, 5'b) in the form of at least one Rayleigh wave (RW),

b) the Rayleigh wave (RW) propagates on the test section (5', 5'a, 5'b) over at least an eighth of its wavelength ($\lambda_{RW}$), preferably over more than double its wavelength,

c) at least part of the acoustic wave leaving the sender (1, 1') traverses a mode converter (3, 4, 34', 34'', 34''', 34'''') at least once on its way to the receiver (2, 2') and

d) this part of the wave with regard to the mode is at least partly converted from a Rayleigh wave (RW) into a volume soundwave (SW, VW) or vice versa and

e) for the purpose of determining the value to be measured changes of at least one characteristic value of the Rayleigh wave (RW) are used as a basis.

20. Method according to Claim 19 **characterised in that** through the sender (1) in the solid (5) carrying or forming the test section (5') volume soundwaves (VW) are energised, which are converted in a mode converter (3) arranged in the direct vicinity of the test section (5') into Rayleigh waves (RW), which subsequently run through the test section (5').

21. Method according to Claim 20 **characterised in that** the Rayleigh waves (RW), after running through the test section (5'), are converted by a second mode converter (4) connected to the test section (5') back into volume soundwaves (VW), which propagate as far as a volume soundwave sensitive receiver (2).

22. Method according to Claim 20 **characterised in that** the Rayleigh waves (RW), after running through the test section (5') directly or after running through a connecting removal section, are sensed by a Rayleigh wave sensitive receiver (2').

23. Method according to Claim 20 **characterised in that** the Rayleigh waves (RW), after running through the test section (5', 5'a, 5'b) are reflected, in such a way that they run through the test section (5', 5'a, 5'b) a second time in the opposite direction and once again come into contact with the mode converter (34), which converts the Rayleigh wave (RW) running back into a volume soundwave (VW) again, which propagates as far as the receiver (12), and that the wave energisation takes place in a pulsed way.

24. Method according to Claim 19 **characterised in that** through the sender (1') in the test section (5') or in a feed section connected with this Rayleigh waves (RW) are energised, which after going through the test section (5') are converted by a mode converter (4) into volume soundwaves (VW) and passed on to the receiver (2).

25. Method according to Claim 19 **characterised in that** for the purpose of determining the value to be measured solely the dissipative energy loss of the Rayleigh wave (RW) in the test section is used.

26. Method according to one of the preceding claims **characterised in that** the layer thickness of the medium to be measured on the test section (5') is limited to an area which is greater than the viscous boundary layer thickness and smaller than the liquid layer necessary for the formation of the fundamental frequency of a stationary compression wave (KW), preferably to an area below a quarter of the wavelength ($_{KW}$) of the compression wave (KW).

27. Method according to Claim 26 **characterised in that** the layer thickness of the medium to be measured is limited by a gap, which on the one hand is limited by the test section (5') and on the other hand an opposite-lying solid (5a), of which the Rayleigh wave speed is greater than that of the test section (5').

28. Method according to Claim 19 **characterised in that** on the solid surface of the test section (5') the Rayleigh waves (RW) are converted into compression waves (KW) and radiated into the medium (7) to be measured with a layer thickness which can be greater than a quarter of the wavelength ($_{kw}$) of the compression wave (KW), and that the compression waves (KW) are captured as fully as possible by a solid surface arranged at a distance from the test section (5').

29. Method according to Claim 19 **characterised in that** for the test section (5') a solid (5) is used, of which the Rayleigh wave speed is smaller than the sound speed of the compression wave (KW) in the liquid (7) to be measured.

30. Method according to one of the Claims 19 to 29 **characterised in that** the acoustic transfer system (5) works according to the principle of a wave guide at least between the beginning and the end of the test section (100 - 106), wherein decoupling of energy from the Rayleigh wave (RW) into the medium to be measured, which does not serve for the measurement, is suppressed, or energy decoupled from the Rayleigh wave (RW) is fed to the receiver ($E_{RW}$, $E_{KW}$, $E_{VW}$), and that for the purpose of determining the value to be measured changes of at least one characteristic value of the Rayleigh wave (RW) are used as a basis.

31. Device for measuring physical or technical dimensions of liquids (3, 3a, 3b), including highly viscous, doughy or paste-like mediums, using an acoustic transfer system (5) with at least one test section (100 - 106) formed by a solid surface made from non-piezo-electric material, which can be brought at least partly into contact with the medium to be measured and to which acoustic energy is fed by means of a sender ($S_{RW}$, $S_{VW}$), and with at least one receiver ($E_{RW}$, $E_{KW}$, $E_{VW}$), wherein

a) the test section (100 - 106) is suitable for the passing on of Rayleigh waves (RW) at least over such a length as corresponds to an eighth of the wavelength ($_{RW}$) of the Rayleigh wave (RW) produced, preferably to more than double this wavelength,

b) in the acoustic transfer system (5) energy decoupled from the Rayleigh wave (RW) is fed to the receiver ($E_{RW}$, $E_{KW}$, $E_{VW}$) or the acoustic transfer system (5) is formed according to the principle of a wave guide at least between the beginning of the test section (100 - 106) and the receiver ($E_{RW}$, $E_{KW}$, $E_{VW}$), wherein decoupling of energy from the Rayleigh wave (RW) into the medium to be measured, which does not serve for the measurement, is suppressed in that the layer thickness (d) of the medium to be measured on the test section (100 - 106) is limited to an area which is greater than the viscous boundary layer thickness and smaller than the thickness of the liquid layer necessary for the formation of the fundamental frequency of a stationary compression wave (KW),

c) the sender ($S_{RW}$, $S_{VW}$) and / or the receiver ($E_{RW}$, $E_{KW}$, $E_{VW}$) on the one hand and the test section (100 - 106) on the other hand are separate components, and

d) the device is arranged in such a way that for the purpose of determining the value to be measured changes of at least one characteristic value of the Rayleigh wave (RW) are used as a basis.

32. Device according to Claim 31 **characterised in that** the layer thickness (d) of the medium to be measured on the test section (100 - 106) is limited to an area below a quarter of the wavelength ($\lambda_{KW}$) of the compression wave (KW).

33. Device according to Claim 31 or 32 **characterised in that** the solid surface of the test section (101) is formed as an inclined plate (1b).

34. Device according to one of the Claims 31 to 33 **characterised in that** the solid surface of the test section is formed as a flat or cone-shaped, rotatable mounted element, via whose rotation speed the centrifugal force necessary for limiting the layer thickness can be produced.

35. Device according to one of the Claims 31 to 34 **characterised in that** a doctor blade (150, 151) is assigned to the solid surface of the test section, wherein this doctor blade (150, 151) reduces the liquid layer (3a) to a previously determined extent.

36. Device according to one of the Claims 31 to 35 **characterised in that** a blow device is assigned to the solid surface of the test section, wherein this blow device limits the growth of the liquid layer to a previously determined extent.

37. Device according to one of the Claims 31 to 36 **characterised in that** opposite the solid surface of the test section and parallel thereto at a maximum distance of a quarter of the wavelength ($\lambda_{kw}$) of the compression wave (KW) a further solid surface forming a gap is arranged, on which the Rayleigh wave speed is greater than on the solid surface of the test section.

38. Device for measuring physical or technical dimensions of liquids (3, 3a, 3b), including highly viscous, doughy or paste-like mediums, using an acoustic transfer system (5) with at least one test section (100 - 106) formed by a solid surface made from non-piezo-electric material, which can be brought at least partly into contact with the medium to be measured and to which acoustic energy can be fed by means of a sender ($S_{RW}$, $S_{VW}$), and with at least one receiver ($E_{RW}$, $E_{KW}$, $E_{VW}$), wherein

a) the test section (100 - 106) is suitable for the passing on of Rayleigh waves (RW) at least over such a length as corresponds to an eighth of the wavelength ($\lambda_{RW}$) of the Rayleigh wave (RW) produced, preferably to more than double this wavelength,

b) in the acoustic transfer system (5) energy decoupled from the Rayleigh wave (RW) is fed to the receiver ($E_{RW}$, $E_{KW}$, $E_{VW}$) or the acoustic transfer system is formed according to the principle of a wave guide at least between the beginning of the test section (100 - 106) and the receiver ($E_{RW}$, $E_{KW}$, $E_{VW}$), wherein decoupling of energy from the Rayleigh wave (RW) into the medium to be measured, which does not serve for the measurement, is suppressed,

c) opposite the solid surface of the test section and parallel thereto at a distance a further solid surface is arranged, on which the Rayleigh wave speed is lower than or equal to the Rayleigh wave speed on the solid surface of the test section, and the further solid surface is arranged in such a way that during the measurement it is in contact with the medium to be measured, in such a way that the medium to be measured is between the two solid surfaces,

d) the sender ($S_{RW}$, $S_{VW}$) and / or the receiver ($E_{RW}$, $E_{KW}$, $E_{VW}$) on the one hand and the test section (100 - 106) on the other hand are separate components, and

e) the device is arranged in such a way that for the purpose of determining the value to be measured changes of at least one characteristic value of the Rayleigh wave (RW) are used as a basis.

39. Device according to Claim 38 **characterised in that** the solid surfaces of the test section and the element lying opposite at a distance consist of materials with the same Rayleigh wave speed, in particular identical materials.

40. Device according to Claim 38 **characterised in that** the Rayleigh wave speed on the solid arranged lying opposite the test section is lower than the Rayleigh wave speed on the test section.

41. Device for measuring physical or technical dimensions of liquids (3, 3a, 3b), including highly viscous, doughy or paste-like mediums, using an acoustic transfer system (5) with at least one test section (100 - 106) formed by a solid surface made from non-piezo-electric material, which can be brought at least partly into contact with the medium to be measured and to which acoustic energy can be fed by means of a sender ($S_{RW}$, $S_{VW}$), and with at least one receiver ($E_{RW}$, $E_{KW}$, $E_{VW}$), wherein

   a) the test section (100 - 106) is suitable for the passing on of Rayleigh waves (RW) at least over such a length as corresponds to an eighth of the wavelength ($_{RW}$) of the Rayleigh wave (RW) produced, preferably to more than double this wavelength,

   b) in the acoustic transfer system (5) energy decoupled from the Rayleigh wave (RW) is fed to the receiver ($E_{RW}$, $E_{KW}$, $E_{VW}$) or the acoustic transfer system (5) is formed according to the principle of a wave guide at least between the beginning of the test section (100 - 106) and the receiver ($E_{RW}$, $E_{KW}$, $E_{VW}$), wherein decoupling of energy from the Rayleigh wave (RW) into the medium to be measured, which does not serve for the measurement, is suppressed,

   c) an element made from a material with a different Rayleigh wave speed having a solid surface is arranged lying opposite the solid surface of the test section at a distance and is inclined at such an angle to the solid surface that through a compression wave (KW) leaving the solid surface of the test section on the opposite-lying solid surface Rayleigh waves (RW) are energised,

   d) the sender ($S_{RW}$, $S_{VW}$) and / or the receiver ($E_{RW}$, $E_{KN}$, $E_{VW}$) on the one hand and the test section (100 - 106) on the other hand are separate components, and

   e) the device is designed in such a way that for the purpose of determining the value to be measured changes of at least one characteristic value of the Rayleigh wave (RW) are used as a basis.

42. Device for measuring physical or technical dimensions of liquids (3, 3a, 3b), including highly viscous, doughy or paste-like mediums, using an acoustic transfer system (5) with at least one test section (100 - 106) formed from a solid surface made from non-piezo-electric material, which can be brought at least partly into contact with the medium to be measured and to which acoustic energy is fed by means of a sender ($S_{RW}$, $S_{VW}$), and with at least one receiver ($E_{RW}$, $E_{KW}$, $E_{VW}$), wherein

   a) the test section (100 - 106) is suitable for the passing on of Rayleigh waves (RW) at least over such a length as corresponds to an eighth of the wavelength ($_{RW}$) of the Rayleigh wave (RW) produced, preferably to more than double this wavelength,

   b) in the acoustic transfer system (5) energy decoupled from the Rayleigh wave (RW) is fed to the receiver ($E_{RW}$, $E_{KW}$, $E_{VW}$) or the acoustic transfer system (5) is formed according to the principle of a wave guide at least between the beginning of the test section (100 - 106) and the receiver ($E_{RW}$, $E_{KW}$, $E_{VW}$), wherein decoupling of energy from the Rayleigh wave (RW) into the medium to be measured, which does not serve for the measurement, is suppressed,

   c) an element made from a material with a different Rayleigh wave speed having a solid surface is arranged lying opposite the solid surface of the test section at a distance and is inclined at such an angle to the solid surface that through a compression wave (KW) leaving the solid surface of the test section in the opposite-lying solid surface volume soundwaves (SW, VW) are energised,

   d) the sender ($S_{RW}$, $S_{VW}$) and / or the receiver ($E_{RW}$, $E_{KW}$, $E_{VW}$) on the one hand and the test section (100 - 106) on the other hand are separate components, and

   e) the device is arranged in such a way that for the purpose of determining the value to be measured changes of at least one characteristic value of the Rayleigh wave (RW) are used as a basis.

43. Device according to Claim 40 or 42 **characterised in that** the opposite-lying body is in connection with a receiver, which is suitable for sensing volume soundwaves (SW, VW).

44. Device according to Claim 40 or 42 **characterised in that** the opposite-lying body is a receiver for sensing volume soundwaves (SW, VW).

**45.** Device according to one of the Claims 31 to 44 **characterised in that** the test section is formed by an alloy, in particular an alloy produced according to the smelting/spinning process.

**46.** Device according to one of the Claims 31 to 45 **characterised in that** the test section is a functional component of a device, e.g. a machine or a solid wall.

**47.** Device according to one of the Claims 31 to 46 **characterised in that** the test section has means of coupling or decoupling energy, e.g. heat, electric, magnetic or optical energy or acoustic energy with a different frequency from the Rayleigh wave.

**48.** Device according to one of the Claims 41 to 47 **characterised in that** the medium to be measured is coupled in the area of the test section with an additional device for supplying or removing energy.

**49.** Device according to Claim 48 **characterised in that** a solid carrying or forming the test section is formed in an electrically conductive way and is connected with a DC voltage or alternating voltage source, in order to produce an electric field in a polar or electro-rheological liquid to be measured or a liquid with components dissociated in ions.

**50.** Device according to Claim 48 **characterised in that** a solid carrying or forming the test section is coupled with a heat source or with another heat-producing energy source, e.g. an electric voltage source for operating the test section as resistive heating.

**51.** Device according to Claim 48 **characterised in that** a solid forming or carrying the test section is formed in an optically transmissive and possibly optically wave-guiding way and is coupled with an energy source producing light quanta, e.g. a laser source.

**52.** Device according to Claim 48 **characterised in that** a solid forming or carrying the test section is in thermal connection with a cooling device or forms part of this cooling device.

**53.** Device according to Claim 52 **characterised in that** a solid forming or carrying the test section is part of a Peltier element.

**54.** Device according to one of the Claims 31 to 53 **characterised in that** in the acoustic transfer system on the solid surface at least one mode converter is provided, which converts a volume soundwave (VW) into a Rayleigh wave (RW) or vice versa.

**55.** Device according to one of the Claims 31 to 54 **characterised in that** the sender and receiver are formed as one component, wherein the unit is operated alternately in sending mode and receiving mode.

**56.** Device according to one of the Claims 31 to 55 **characterised in that** in the acoustic transfer system on the solid surface at least one reflector is provided, which is suitable for deflecting the wave mode impacting on it.

**57.** Device for measuring physical or technical dimensions of liquids (7), including highly viscous, doughy or paste-like mediums, using an acoustic transfer system (5) with at least one test section (5', 5'a, 5'b) formed by a solid surface made from non-piezoelectric material, which can be brought at least partly into contact with the medium (7) to be measured and is a functional component of a device, e.g. a machine, a receptacle, a transport system, etc, and to which acoustic energy can be fed by means of a sender (1, 1'), and with at least one receiver (2, 2'), wherein

  a) the test section (5') is suitable for the passing on of Rayleigh waves (RW) at least over such a length as corresponds to an eighth of the wavelength ($_{RW}$) of the Rayleigh wave (RW) produced, preferably to more than double this wavelength,

  b) at least one mode converter (3, 4, 34, 34', 34'', 34''', 34'''') is arranged in effective connection with the test section (5') or with an area connected with the test section (5'), wherein this mode converter (3, 4, 34, 34', 34'', 34''', 34'''') is arranged in such a way that it

  - converts a volume soundwave (VW) running from the sender (1, 1') to the test section (5') into a Rayleigh wave (RW) and / or

  - converts a Rayleigh wave running from the test section (5') to the receiver into a volume soundwave (VW), and

  c) the device is arranged in such a way that for the purpose of determining the value to be measured changes of at least one characteristic value of the Rayleigh wave (RW) are used as a basis.

**58.** Device according to Claim 57 **characterised in that** the sender (1, 12) and receiver (2, 12) are arranged on the rear side of the solid carrying or forming the test section (5') and are in connection with a mode converter (3, 4, 34) arranged at the beginning / end of the test section (5') in a volume soundwave (VW) conducting way.

**59.** Device according to Claim 57 **characterised in that** the sender and receiver are formed as one component (12) and are arranged on the rear side of the solid carrying or forming the test section (5'a, 5'b) and are in connection with a mode converter (34) provided at the beginning of the test section (5'a, 5'b) in a volume soundwave (VW) conducting way, and that at the end of the test section (5'a, 5'b) a reflector (6a, 6b) is provided, which reflects the Rayleigh wave in the direction of the mode converter (34).

**60.** Device according to Claim 57 **characterised in that** the mode converter (34', 34'', 34''', 34'''') consists of several periodically arranged elements, which are positioned along the propagation direction of the Rayleigh wave and have a division which corresponds approximately to the wavelength ($_{RW}$) of the Rayleigh wave.

**61.** Device according to Claim 57 **characterised in that** the mode converter (34') is designed in the form of a row of holes in the vicinity of the boundary area of the solid forming or carrying the test section (5').

**62.** Device according to Claim 60 **characterised in that** the mode converter (34'') is designed in the form of periodically arranged, symmetrically or asymmetrically formed teeth or notches in the surface of the solid forming or carrying the test section (5').

**63.** Device according to Claim 60 **characterised in that** the mode converter is formed by additional separate parts, which are arranged on the surface of the solid forming or carrying the test section (5').

**64.** Device according to Claim 63 **characterised in that** the mode converter (34''') is formed by individual elements, which at a distance of a wavelength ($_{RW}$) of the Rayleigh waves are securely connected with the surface of a solid forming or carrying the test section (5'), wherein the sending direction (10) of the volume soundwave runs inclined to the solid surface.

**65.** Device according to Claim 57 **characterised in that** the layer thickness of a liquid layer (7) to be measured on the test section (5') is limited to an area which is greater than the viscous boundary layer thickness and smaller than the thickness of the liquid layer necessary for the formation of the fundamental frequency of a stationary compression wave (KW), preferably to an area below a quarter of the wavelength ( KW) of the compression wave (KW).

**66.** Device according to one of the Claims 31 to 65 **characterised in that** the sender and receiver are formed as one component (12), wherein the unit is alternately in sending mode and receiving mode.

## Revendications

**1.** Procédé pour la mesure de grandeurs physiques ou techniques relatives à des liquides (3, 3a, 3b) y compris des milieux très visqueux ou pâteux en utilisant un système de propagation acoustique (5) avec au moins une section de mesure (100 - 106) comportant au moins une surface de solide constituée d'un matériau non piézoélectrique, laquelle section peut être mise au moins partiellement en contact avec l'élément à mesurer et à laquelle on transmet l'énergie acoustique grâce à un émetteur ($S_{RW}$, $S_{VW}$) et avec au moins un récepteur ($E_{RW}$, $E_{KW}$, $E_{VW}$) où

a) au moins une partie de l'énergie acoustique de la section de mesure (100 - 106) est mise à disposition sous forme d'au moins une onde de Rayleigh (RW),

b) l'onde de Rayleigh (RW) se propage dans la section de mesure (100 - 106) sur au moins un huitième de sa longueur d'onde ($_{RW}$) de préférence sur plus du double de sa longueur d'onde,

c) dans un système de propagation acoustique (5) on transmet au récepteur ($E_{RW}$, $E_{KW}$, $E_{VW}$) une énergie découplée provenant de l'onde de Rayleigh (RW), ou bien le système de propagation acoustique (5) fonctionne au moins entre le début de la section de mesure (100 - 106) et le récepteur ($E_{RW}$, $E_{KW}$, $E_{VW}$) selon le principe d'un guide d'ondes - où un découplage de l'énergie, laquelle provient de l'onde de Rayleigh (RW) dans le milieu à mesurer et laquelle ne sert pas à la mesure, est atténué par le fait que l'épaisseur de couche (d) de l'élément à mesurer sur la section de mesure (100 - 106) est limitée à une zone qui est plus grande que l'épaisseur de la couche-limite visqueuse et plus petite que la couche de liquide nécessaire à la formation de la fréquence d'amplitude fondamentale d'une onde de compression (KW) et

d) pour obtenir la grandeur à mesurer, les modifications ont pour base au moins un paramètre caractéristique de l'onde de Rayleigh (RW).

**2.** Procédé selon la revendication 1 **caractérisé en ce que** l'épaisseur de couche (d) de l'élément à mesurer sur la section de mesure (100 - 106) est limitée à une zone au-dessous du quart de la longueur d'onde ($_{KW}$/4) de l'onde de compression (KW).

3. Procédé selon la revendication 1 ou 2 **caractérisé en ce que** la couche de l'élément à mesurer est formée par une couche de liquide (3a) qui s'écoule.

4. Procédé selon l'une des revendications précédentes **caractérisé en ce que** la couche de l'élément à mesurer est une couche de liquide (3a) dont l'épaisseur est limitée par un élément (150, 151) mécanique qui s'étend parallèlement et qui se déplace par rapport à la section de mesure.

5. Procédé selon l'une des revendications précédentes **caractérisé en ce que** la couche de l'élément à mesurer est une couche de liquide dont l'épaisseur est limitée par un séparateur et que grâce à un séparateur les ondes de Rayleigh sont injectées dans la section de mesure ou dans une section d'alimentation située au devant.

6. Procédé selon l'une des revendications précédentes **caractérisé en ce que** la couche de l'élément à mesurer est une couche de liquide dont l'épaisseur est limitée par un élément mécanique amené périodiquement et parallèle à la section de mesure par ex. sous forme d'un séparateur ou d'un piston dans le cylindre et que le processus de mesure est réalisé selon la même période que le déplacement de l'élément mécanique ou selon un multiple de cette période.

7. Procédé selon l'une des revendications précédentes **caractérisé en ce que** dans l'interprétation des résultats de la mesure on tient compte de la vitesse d'écoulement du liquide le long de la direction de propagation de l'onde de Rayleigh (RW).

8. Procédé selon l'une des revendications 1 ou 2 **caractérisé en ce que** l'épaisseur de la couche de l'élément à mesurer est limitée par un intervalle lequel est limité d'un côté par la section de mesure (100, 106) et de l'autre côté par un coude opposé d'un solide (2b) et dans lequel la vitesse des ondes de Rayleigh est supérieure à celle de la section de mesure (100, 106).

9. Procédé selon la revendication 8 **caractérisé en ce que** l'élément à mesurer est formé par un écoulement de liquide où dans l'interprétation des résultats de la mesure on tient compte de la vitesse d'écoulement du liquide le long de la direction de propagation de l'onde de Rayleigh (RW).

10. Procédé pour la mesure de grandeurs physiques ou techniques relatives à des liquides (3, 3a, 3b) y compris des milieux très visqueux ou pâteux en utilisant un système de propagation acoustique (5) avec au moins une section de mesure (100 - 106) comportant au moins une surface de solide constituée d'un matériau non piézoélectrique, laquelle section peut être mise au moins partiellement en contact avec l'élément à mesurer et à laquelle on transmet l'énergie acoustique grâce à un émetteur ($S_{RW}$, $S_{VW}$) et avec au moins un récepteur ($E_{RW}$, $E_{KW}$, $E_{VW}$) où

a) au moins une partie de l'énergie acoustique de la section de mesure (100 - 106) est mise à dispositon sous forme d'au moins une onde de Rayleigh (RW),

b) l'onde de Rayleigh (RW) se propage dans la section de mesure (100 - 106) sur au moins un huitième de sa longueur d'onde ($_{RW}$) de préférence sur plus du double de sa longueur d'onde,

c) dans un système de propagation acoustique (5) on transmet au récepteur ($E_{RW}$, $E_{KW}$, $E_{VW}$) une énergie découplée provenant de l'onde de Rayleigh (RW) ou bien le système de propagation acoustique (5) fonctionne au moins entre le début de la section de mesure (100 - 106) et le récepteur ($E_{RW}$, $E_{KW}$, $E_{VW}$) selon le principe d'un guide d'ondes - où un découplage de l'énergie, laquelle provient de l'onde de Rayleigh (RW) dans le milieu à mesurer et laquelle ne sert pas à la mesure, est atténué,

d) les ondes de Rayleigh (RW) sur la surface du solide de la section de mesure sont converties en ondes de compression (KW) et sont émises dans l'élément à mesurer et que les ondes de compression (KW) sont interceptées par une surface du solide qui s'étend à une distance de la section de mesure et

e) pour obtenir la grandeur à mesurer, les modifications ont pour base au moins un paramètre caractéristique de l'onde de Rayleigh (RW).

11. Procédé selon la revendication 10 **caractérisé en ce que** l'épaisseur de couche de l'élément à mesurer est supérieure au quart de la longueur d'onde ($_{KW}$) de l'onde de compression (KW) et que les ondes de compression (KW) sont si possible entièrement interceptées par la surface du solide qui s'étend à une distance de la section de mesure.

12. Procédé selon la revendication 11 **caractérisé en ce que** la surface du solide formant la section de mesure (100) et la surface du solide se trouvant vis-à-vis sont disposées l'une par rapport à l'autre de telle sorte et présentent les vitesses de l'onde de Rayleigh telles que les ondes de compression (KW) sont de nouveau converties en ondes de Rayleigh (RW) sur la surface du solide se trouvant vis-à-vis de la section de mesure (100).

13. Procédé selon la revendication 12 **caractérisé en ce que** les ondes de Rayleigh (RW) générées à la surface du solide vis-à-vis de la section de mesure (100) de leur côté découplent des ondes de compression (KW) dans le liquide voisin, lesquelles génèrent de nouveau des ondes de Rayleigh (RW) sur la surface du solide de la section de mesure (100).

14. Procédé selon la revendication 13 **caractérisé en ce que** la vitesse des ondes de Rayleigh ($v^{(1)}_{RW}$) sur la surface du solide formant la section de mesure (100) est supérieure à la vitesse des ondes de Rayleigh ($v^{(2)}_{RW}$) sur la surface du solide se trouvant vis-à-vis, de sorte que les ondes de compression (KW) sur la surface du solide se trouvant vis-à-vis sur la section de mesure (100) sont converties en ondes sonores de volume (SW, VW) dans ce solide se trouvant vis-à-vis.

15. Procédé selon l'une des revendications précédentes **caractérisé en ce que** les ondes de Rayleigh (RW) sont conduites par une zone de surface qui est un composant fonctionnel d'un dispositif, par ex. d'une machine-outil ou d'une paroi massive et qui forme ainsi la section de mesure.

16. Procédé selon l'une des revendications précédentes **caractérisé en ce que**, sur la section de mesure, on injecte ou on découple de l'énergie dans le milieu, par ex. de la chaleur, de l'énergie électrique, magnétique ou optique ou de l'énergie acoustique.

17. Procédé selon l'une des revendications précédentes **caractérisé en ce que**, pour obtenir la grandeur à mesurer, on utilise exclusivement la déperdition par dissipation d'énergie de l'onde de Rayleigh (RW) dans la section de mesure (100 - 106).

18. Procédé selon l'une des revendications précédentes **caractérisé en ce qu'**un découplage de l'énergie provenant de l'onde de Rayleigh (RW) qui se propage le long de la section de mesure est réduit dans une couche de liquide du fait que le matériau composant la section de mesure est choisi de telle sorte que la vitesse des ondes de Rayleigh dans ce matériau est inférieure à la vitesse du son d'une onde de compression (KW) dans le milieu voisin à mesurer.

19. Procédé pour la mesure de grandeurs physiques ou techniques relatives à des liquides (7) y compris des milieux très visqueux ou pâteux en utilisant un système de propagation acoustique (5) avec au moins une section de mesure (5', 5'a, 5'b) comportant au moins une surface de solide constituée d'un matériau non piézoélectrique, laquelle section forme un composant fonctionnel d'un dispositif comme par ex. d'une machine-outil, d'un conteneur, d'un système de transport etc., laquelle peut être mise au moins partiellement en contact avec l'élément à mesurer et à laquelle on transmet l'énergie acoustique grâce à un émetteur (1, 1') et avec au moins un récepteur (2, 2') où

   a) au moins une partie de l'énergie acoustique de la section de mesure (5', 5'a, 5'b) est mise à disposition sous forme d'au moins une onde de Rayleigh (RW),

   b) l'onde de Rayleigh (RW) se propage dans la section de mesure (5', 5'a, 5'b) sur au moins un huitième de sa longueur d'onde ($_{RW}$) de préférence sur plus du double de sa longueur d'onde,

   c) au moins une partie de l'onde acoustique provenant de l'émetteur (1, 1') traverse au moins une fois un convertisseur de mode (3, 4, 34', 34'', 34''', 34'''') lorsqu'elle se déplace vers le récepteur (2, 2') et

   d) cette partie de l'onde est convertie en fonction du mode au moins partiellement d'une onde de Rayleigh (RW) en une onde acoustique de volume (SW, VW), ou inversement et

   e) pour obtenir la grandeur à mesurer, les modifications ont pour base au moins un paramètre caractéristique de l'onde de Rayleigh (RW).

20. Procédé selon la revendication 19 **caractérisé en ce que** des ondes acoustiques de volume (VW) sont générées par l'émetteur (1) dans le solide (5) formant ou portant la section de mesure (5'), lesquelles sont converties en ondes de Rayleigh (RW) par un convertisseur de mode (3) disposé à proximité immédiate de la section de mesure (5'), lesquelles parcourent ensuite la section de mesure (5').

21. Procédé selon la revendication 19 **caractérisé en ce qu'**après avoir parcouru la section de mesure (5') les ondes de Rayleigh (RW) sont alors de nouveau converties en ondes acoustiques de volume (VW) par un deuxième convertisseur de mode (4) disposé sur la section de mesure, lesquelles se propagent jusqu'à un récepteur (2) sensible aux ondes acoustiques de volume.

22. Procédé selon la revendication 20 **caractérisé en ce qu'**après avoir parcouru la section de mesure (5') les ondes de Rayleigh (RW) sont captées par un récepteur (2') sensible aux ondes de Rayleigh directement ou après avoir parcouru une section de dérivation se trouvant à la suite.

**23.** Procédé selon la revendication 20 **caractérisé en ce qu'**après avoir parcouru la section de mesure (5', 5'a, 5'b) les ondes de Rayleigh (RW) sont réfléchies de sorte qu'elles parcourent une seconde fois en sens inverse la section de mesure (5', 5'a, 5'b) et qu'elles parviennent de nouveau au convertisseur de mode (34) qui convertit de nouveau les ondes de Rayleigh (RW) retournées en une onde acoustique de volume (VW) qui se propage jusqu'au récepteur (12) et que l'excitation des ondes est pulsée.

**24.** Procédé selon la revendication 19 **caractérisé en ce que** l'émetteur (1') génère des ondes de Rayleigh (RW) dans la section de mesure (5') ou dans une section d'alimentation qui lui est liée, lesquelles après avoir parcouru la section de mesure (5') sont converties en ondes acoustiques de volume grâce à un convertisseur de mode (4) et qui de là sont transmises au récepteur (2).

**25.** Procédé selon l'une des revendications précédentes **caractérisé en ce que**, pour obtenir la grandeur à mesurer, on utilise exclusivement la déperdition par dissipation d'énergie de l'onde de Rayleigh (RW) dans la section de mesure.

**26.** Procédé selon l'une des revendications précédentes **caractérisé en ce que** l'épaisseur de couche (5') de l'élément à mesurer sur la section de mesure est limitée à une zone qui est plus grande que l'épaisseur de la couche-limite visqueuse et plus petite que la couche de liquide nécessaire à la formation de la fréquence d'amplitude fondamentale d'une onde de compression (KW), de préférence dans une zone se situant au dessous d'un quart de la longueur d'onde ($_{KW}$) de l'onde de compression (KW).

**27.** Procédé selon la revendication 26 **caractérisé en ce que** l'épaisseur de la couche de l'élément à mesurer est limitée par un intervalle lequel est limité d'un côté par la section de mesure (5') et de l'autre côté par un coude opposé d'un solide (5a) et dans lequel la vitesse des ondes de Rayleigh est supérieure à celle de la section de mesure (5').

**28.** Procédé selon la revendication 19 **caractérisé en ce que** les ondes de Rayleigh (RW) à la surface du solide de la section de mesure (S') sont converties en ondes de compression (KW) et sont émises dans le milieu (7) à mesurer avec une épaisseur de couche qui peut être supérieure à un quart de la longueur d'onde ($_{KW}$) de l'onde de compression (KW) et que les ondes de compression (KW) sont interceptées si possible intégralement par une surface de solide qui se trouve à distance de la section de mesure (5').

**29.** Procédé selon la revendication 19 **caractérisé en ce que** l'on utilise un solide (5) pour la section de mesure (5') dont la vitesse d'onde de Rayleigh est inférieure à la vitesse du son de l'onde de compression (KW) dans le liquide (7) à mesurer.

**30.** Procédé selon l'une des revendications 19 à 29 **caractérisé en ce que** le système de propagation acoustique (5) fonctionne au moins entre le début et l'extrémité de la section de mesure (100 - 106) selon le principe d'un guide d'ondes où un découplage de l'énergie, laquelle provient de l'onde de Rayleigh (RW) dans le milieu à mesurer et laquelle ne sert pas à la mesure, est atténué, ou que l'énergie découplée provenant de l'onde de Rayleigh (RW) est conduite au récepteur ($E_{RW}$, $E_{KW}$, $E_{VW}$) et que, pour obtenir la grandeur à mesurer, les modifications ont pour base au moins un paramètre caractéristique de l'onde de Rayleigh (RW).

**31.** Procédé pour la mesure de grandeurs physiques ou techniques relatives à des liquides (3, 3a, 3b) y compris des milieux très visqueux ou pâteux en utilisant un système de propagation acoustique (5) avec au moins une section de mesure (100 - 106) comportant au moins une surface de solide constituée d'un matériau non piézoélectrique, laquelle section peut être mise au moins partiellement en contact avec l'élément à mesurer et à laquelle on transmet l'énergie acoustique grâce à un émetteur ($S_{RW}$, $S_{VW}$) et avec au moins un récepteur ($E_{RW}$, $E_{KW}$, $E_{VW}$) où

   a) la section de mesure (100 - 106) est adaptée pour transmettre les ondes de Rayleigh (RW) au moins sur une longueur qui correspond à un huitième de la longueur d'onde ($_{RW}$) des ondes de Rayleigh (RW) produites, de préférence à plus du double de cette longueur d'onde,

   b) dans un système de propagation acoustique (5) on transmet au récepteur ($E_{RW}$, $E_{KW}$, $E_{VW}$) une énergie découplée provenant de l'onde de Rayleigh (RW) ou bien le système de propagation acoustique (5) est formé au moins entre le début de la section de mesure (100 - 106) et le récepteur ($E_{RW}$, $E_{KW}$, $E_{VW}$) selon le principe d'un guide d'ondes - où un découplage de l'énergie, laquelle provient de l'onde de Rayleigh (RW) dans le milieu à mesurer et laquelle ne sert pas à la mesure, est atténué par le fait que l'épaisseur de couche (d) de l'élément à mesurer sur la section de mesure (100 - 106) est limitée à une zone qui est plus grande que l'épaisseur de la couche-limite visqueuse et plus petite que la couche de liquide nécessaire à la formation de la fréquence d'amplitude fondamentale d'une onde de compression (KW),

c) l'émetteur ($S_{RW}$, $S_{VW}$) et/ou le récepteur ($E_{RW}$, $E_{KW}$, $E_{VW}$) d'une part et la section de mesure (100 - 106) d'autre part sont des éléments séparés et

d) le dispositif est conçu de sorte que pour obtenir la grandeur à mesurer les modifications ont pour base au moins un paramètre caractéristique de l'onde de Rayleigh (RW).

**32.** Dispositif selon la revendication 31 **caractérisé en ce que** l'épaisseur de couche (d) de l'élément à mesurer sur la section de mesure (100 - 106) est limitée à une zone au-dessous du quart de la longueur d'onde ($_{KW}$) de l'onde de compression (KW).

**33.** Dispositif selon la revendication 31 ou 32, **caractérisé en ce que** la surface du solide de la section de mesure (101) est formée d'une plaque (1b) adéquate.

**34.** Dispositif selon l'une des revendications 31 à 33 **caractérisé en ce que** la surface du solide de la section de mesure est formée d'un élément sur palier plan ou sphérique, rotatif, tel que la force centrifuge nécessaire à la limitation de l'épaisseur de couche peut être produite par la vitesse de rotation de cet élément.

**35.** Dispositif selon l'une des revendications 31 à 34 **caractérisé en ce que** la surface du solide de la section de mesure est reliée à un séparateur (150, 151) qui réduit l'épaisseur de couche du liquide (3a) à une dimension prédéterminée.

**36.** Dispositif selon l'une des revendications 31 à 35 **caractérisé en ce que** la surface du solide de la section de mesure est reliée à un dispositif d'écoulement qui limite l'augmentation de l'épaisseur de couche du liquide (3a) à une dimension prédéterminée.

**37.** Dispositif selon l'une des revendications 31 à 36 **caractérisé en ce que,** vis-à-vis de la surface du solide de la section de mesure et parallèlement à celle-ci formant un écart correspondant au plus du quart de la longueur d'onde ($_{RW}$) de l'onde de compression (KW), est disposée une surface de solide complémentaire formant un intervalle sur laquelle la vitesse des ondes de Rayleigh est plus grande que sur la surface du solide de la section de mesure.

**38.** Procédé pour la mesure de grandeurs physiques ou techniques relatives à des liquides (3, 3a, 3b) y compris des milieux très visqueux ou pâteux en utilisant un système de propagation acoustique (5) avec au moins une section de mesure (100 - 106) comportant au moins une surface de solide constituée d'un matériau non piézoélectrique, laquelle section peut être mise au moins partiellement en contact avec l'élément à mesurer et à laquelle on transmet l'énergie acoustique grâce à un émetteur ($S_{RW}$, $S_{VW}$) et avec au moins un récepteur ($E_{RW}$, $E_{KW}$, $E_{VW}$) où

a) la section de mesure (100 - 106) est adaptée pour transmettre les ondes de Rayleigh (RW) au moins sur une longueur qui correspond à un huitième de la longueur d'onde ($_{RW}$) des ondes de Rayleigh (RW) produites, de préférence à plus du double de cette longueur d'onde.

b) dans un système de propagation acoustique (5) on transmet au récepteur ($E_{RW}$, $E_{KW}$, $E_{VW}$) une énergie découplée provenant de l'onde de Rayleigh (RW) ou bien le système de propagation acoustique (5) est formé au moins entre le début de la section de mesure (100 - 106) et le récepteur ($E_{RW}$, $E_{KW}$, $E_{VW}$) selon le principe d'un guide d'ondes - où un découplage de l'énergie, laquelle provient de l'onde de Rayleigh (RW) dans le milieu à mesurer et laquelle ne sert pas à la mesure, est atténué,

c) vis-à-vis de la surface du solide de la section de mesure et parallèlement à celle-ci formant un écart est disposée une surface de solide complémentaire formant un intervalle sur laquelle la vitesse des ondes de Rayleigh est plus petite ou égale que sur la surface du solide de la section de mesure, et la surface complémentaire du solide est disposée de telle sorte que, pendant la mesure, elle se trouve en contact avec le milieu à mesurer, de façon que le milieu à mesurer se trouve entre les deux surfaces du solide.

d) l'émetteur ($S_{RW}$, $S_{VW}$) et/ou le récepteur ($E_{RW}$, $E_{KW}$, $E_{VW}$) d'une part et la section de mesure (100 - 106) d'autre part sont des éléments séparés, et

e) le dispositif est conçu de sorte que pour obtenir la grandeur à mesurer les modifications ont pour base au moins un paramètre caractéristique de l'onde de Rayleigh (RW).

**39.** Dispositif selon la revendication 38 **caractérisé en ce que** les surfaces du solide de la section de mesure et de l'élément vis-à-vis formant un écart sont constituées de matériaux présentant la même vitesse d'ondes de Rayleigh, notamment de matériaux identiques.

**40.** Dispositif selon la revendication 38 **caractérisé en ce que** la vitesse des ondes de Rayleigh sur le solide disposé vis-à-vis de la section de mesure est inférieure à la vitesse des ondes de Rayleigh sur la section de mesure.

**41.** Procédé pour la mesure de grandeurs physiques ou techniques relatives à des liquides (3, 3a, 3b) y compris des milieux très visqueux ou pâteux en utilisant un système de propagation acoustique (5) avec au moins une section de mesure (100 - 106) comportant au moins une surface de solide constituée d'un matériau non piézoélectrique, laquelle section peut être mise au moins partiellement en contact avec l'élément à mesurer et à laquelle on transmet l'énergie acoustique grâce à un émetteur ($S_{RW}$, $S_{VW}$) et avec au moins un récepteur ($E_{RW}$, $E_{KW}$, $E_{VW}$) où

    a) la section de mesure (100 - 106) est adaptée pour transmettre les ondes de Rayleigh (RW) au moins sur une longueur qui correspond à un huitième de la longueur d'onde ($_{RW}$) des ondes de Rayleigh (RW) produites, de préférence à plus du double de cette longueur d'onde.

    b) dans un système de propagation acoustique (5) on transmet au récepteur ($E_{RW}$, $E_{KW}$, $E_{VW}$) une énergie découplée provenant de l'onde de Rayleigh (RW), ou bien le système de propagation acoustique (5) est formé au moins entre le début de la section de mesure (100 - 106) et le récepteur ($E_{RW}$, $E_{KW}$, $E_{VW}$) selon le principe d'un guide d'ondes - où un découplage de l'énergie, laquelle provient de l'onde de Rayleigh (RW) dans le milieu à mesurer et laquelle ne sert pas à la mesure, est atténué,

    c) à distance de la surface du solide de la section de mesure et vis-à-vis de celle-ci est disposé un élément qui présente une surface de solide, qui est fait en un matériau dont la vitesse d'onde de Rayleigh est différente et qui forme avec la surface du solide un angle tel que des ondes de Rayleigh (RW) sont générées sur la surface opposée du solide par une onde de compression (KW) provenant de la surface du solide de la section de mesure,

    d) l'émetteur ($S_{RW}$, $S_{VW}$) et/ou le récepteur ($E_{RW}$, $E_{KW}$, $E_{VW}$) d'une part et la section de mesure (100 - 106) d'autre part sont des éléments séparés, et

    e) le dispositif est conçu de sorte que, pour obtenir la grandeur à mesurer, les modifications ont pour base au moins un paramètre caractéristique de l'onde de Rayleigh (RW).

**42.** Procédé pour la mesure de grandeurs physiques ou techniques relatives à des liquides (3, 3a, 3b) y compris des milieux très visqueux ou pâteux en utilisant un système de propagation acoustique (5) avec au moins une section de mesure (100 - 106) comportant au moins une surface de solide constituée d'un matériau non piézoélectrique, laquelle section peut être mise au moins partiellement en contact avec l'élément à mesurer et à laquelle on transmet l'énergie acoustique grâce à un émetteur ($S_{RW}$, $S_{VW}$) et avec au moins un récepteur ($E_{RW}$, $E_{KW}$, $E_{VW}$) où

    a) la section de mesure (100 - 106) est adaptée pour transmettre les ondes de Rayleigh (RW) au moins sur une longueur qui correspond à un huitième de la longueur d'onde ($_{RW}$) des ondes de Rayleigh (RW) produites, de préférence à plus du double de cette longueur d'onde,

    b) dans un système de propagation acoustique (5) on transmet au récepteur ($E_{RW}$, $E_{KW}$, $E_{VW}$) une énergie découplée provenant de l'onde de Rayleigh (RW), ou bien le système de propagation acoustique (5) est formé au moins entre le début de la section de mesure (100 - 106) et le récepteur ($E_{RW}$, $E_{KW}$, $E_{VW}$) selon le principe d'un guide d'ondes - où un découplage de l'énergie, laquelle provient de l'onde de Rayleigh (RW) dans le milieu à mesurer et laquelle ne sert pas à la mesure, est atténué,

    c) à distance de la surface du solide de la section de mesure et vis-à-vis de celle-ci est disposé un élément qui présente une surface de solide, qui est fait en un matériau dont la vitesse d'onde de Rayleigh est différente et qui forme avec la surface du solide un angle tel que des ondes acoustiques de volume (SW, VW) sont générées dans le solide vis-à-vis par une onde de compression (KW) provenant de la surface du solide de la section de mesure,

    d) l'émetteur ($S_{RW}$, $S_{VW}$) et/ou le récepteur ($E_{RW}$, $E_{KW}$, $E_{VW}$) d'une part et la section de mesure (100 - 106) d'autre part sont des éléments séparés, et

    e) le dispositif est conçu de sorte que pour obtenir la grandeur à mesurer les modifications ont pour base au moins un paramètre caractéristique de l'onde de Rayleigh (RW).

**43.** Dispositif selon l'une des revendications 40 ou 42 **caractérisé en ce que** le solide situé vis-à-vis est en liaison avec un récepteur qui est adapté à être sensible aux ondes acoustiques de volume (SW, VW).

**44.** Dispositif selon l'une des revendications 40 ou 42 **caractérisé en ce que** le solide vis-à-vis est un récepteur destiné à capter les ondes acoustiques de volume (SW, VW).

**45.** Dispositif selon l'une des revendications 31 à 44 **caractérisé en ce que** la section de mesure est constituée d'un alliage, notamment d'un alliage fabriqué d'après le procédé de filage par fusion.

**46.** Dispositif selon l'une des revendications 31 à 45 **caractérisé en ce que** la section de mesure est un composant fonctionnel d'un dispositif, par ex. d'une machine-outil ou d'une paroi massive.

**47.** Dispositif selon l'une des revendications 31 à 46 **caractérisé en ce que** la section de mesure présente un moyen destiné à l'injection ou au découplage d'énergie, par ex. de chaleur, d'énergie électrique, magnétique ou optique ou d'énergie acoustique avec une fréquence distincte de l'onde de Rayleigh.

**48.** Dispositif selon l'une des revendications 41 à 47 **caractérisé en ce que**, dans la zone de la section de mesure, le milieu à mesurer est couplé avec un dispositif complémentaire destiné à l'entrée ou à la sortie de l'énergie.

**49.** Dispositif selon la revendication 48 **caractérisé en ce que** un solide formant ou portant la section de mesure est formé de façon à conduire l'électricité et qu'il est relié à une source de courant continu ou alternatif afin de produire un champ électrique dans un liquide électrorhéologique ou polaire qu'on doit mesurer ou dans un liquide avec des composants dissociés en ions.

**50.** Dispositif selon la revendication 48 **caractérisé en ce qu'**un solide formant ou portant la section de mesure est couplé avec une source de chaleur ou avec une autre source d'énergie produisant de la chaleur, par exemple avec une source de tension électrique, pour utiliser la section de mesure en tant que chauffage ohmique.

**51.** Dispositif selon la revendication 48 **caractérisé en ce que** un solide formant ou portant la section de mesure présente une perméabilité optique et éventuellement une conduction d'ondes optiques et est couplé avec une source d'énergie produisant un quantum de lumière par exemple une source laser.

**52.** Dispositif selon la revendication 48 **caractérisé en ce qu'**un solide formant ou portant la section de mesure est en liaison thermique avec un dispositif de refroidissement ou forme une partie de ce dispositif de refroidissement.

**53.** Dispositif selon la revendication 52 **caractérisé en ce qu'**un solide formant ou portant la section de mesure est une partie d'un élément à effet Peltier.

**54.** Dispositif selon l'une des revendications 31 à 53 **caractérisé en ce que** dans le système de transfert acoustique il est prévu sur la surface du solide au moins un convertisseur de mode qui convertit une onde acoustique de volume (VW) en une onde de Rayleigh (RW) ou inversement.

**55.** Dispositif selon l'une des revendications 31 à 54 **caractérisé en ce que** l'émetteur et le récepteur constituent un composant unique où le composant fonctionne alternativement en mode émetteur et en mode récepteur.

**56.** Dispositif selon l'une des revendications 31 à 55 **caractérisé en ce que** dans le système de transfert acoustique il est prévu sur la surface du solide au moins un réflecteur lequel est adapté à retourner le mode d'ondes qu'il reçoit.

**57.** Procédé pour la mesure de grandeurs physiques ou techniques relatives à des liquides (7) y compris des milieux très visqueux ou pâteux en utilisant un système de propagation acoustique (5) avec au moins une section de mesure (5', 5'a, 5'b) comportant au moins une surface de solide constituée d'un matériau non piézoélectrique, laquelle section peut être mise au moins partiellement en contact avec l'élément à mesurer (7) et est un composant fonctionnel d'un dispositif comme par ex. d'une machine-outil, d'un conteneur, d'un système de transport etc. et auquel on peut amener de l'énergie acoustique grâce à un émetteur (1, 1') et avec au moins un récepteur (2, 2') où

a) la section de mesure (5') est adaptée pour transmettre les ondes de Rayleigh (RW) au moins sur une longueur qui correspond à un huitième de la longueur d'onde ($\lambda_{RW}$) des ondes de Rayleigh (RW) produites, de préférence à plus du double de cette longueur d'onde,

b) au moins un convertisseur de mode (3, 4, 34, 34', 34''', 34''', 34'''') est placé en liaison active avec la section de mesure (5') ou avec une zone liée à la section de mesure (5'), lequel convertisseur de mode est disposé de telle sorte que

    - il convertit une onde acoustique de volume (VW) allant de l'émetteur (1, 1') vers la section de mesure (5') en une onde de Rayleigh (RW) et/ou

    - il convertit une onde de Rayleigh (RW) allant de la section de mesure (5') vers le récepteur en une onde acoustique de volume (VW) et

    c) le dispositif est installé de telle sorte que pour obtenir la grandeur à mesurer les modifications ont pour base au moins un paramètre caractéristique de l'onde de Rayleigh (RW).

**58.** Dispositif selon la revendication 57 **caractérisé en ce que** des émetteurs (1, 12) et des récepteurs (2, 12) sont placés sur la face arrière du solide formant ou portant la section de mesure (5') et sont en liaison avec à chaque fois un convertisseur de mode (3, 4, 34) qui conduit les ondes acoustiques de volume (VW) lequel est prévu au début ou à l'extrémité de la section de mesure (5').

**59.** Dispositif selon la revendication 57 **caractérisé en ce que** des émetteurs et des récepteurs forment un composant unique (12) et sont placés sur la face arrière du solide formant ou portant la section de mesure (5'a, 5'b) et sont en liaison avec un convertisseur de mode (34) qui conduit les ondes acoustiques de volume (VW) et qui est prévu au début de la section de mesure (5'a, 5'b) et qu'on a prévu à l'extrémité de la section de mesure (5'a, 5'b) un réflecteur (6a, 6b) qui réfléchit l'onde de Rayleigh (RW) en direction du convertisseur de mode (34).

**60.** Dispositif selon la revendication 57 **caractérisé en ce que** le convertisseur de mode (34', 34''', 34''', 34'''') est constitué de plusieurs éléments disposés périodiquement qui sont placés le long de la direction de propagation de l'onde de Rayleigh et qui présentent une répartition correspondant approximativement à la longueur d'onde ($_{RW}$) de l'onde de Rayleigh.

**61.** Dispositif selon la revendication 57 **caractérisé en ce que** le convertisseur de mode (34') est réalisé sous la forme d'une bande perforée à proximité de la surface de séparation du solide formant ou portant la section de mesure (5').

**62.** Dispositif selon la revendication 60 **caractérisé en ce que** le convertisseur de mode (34") est réalisé sous la forme de dents ou d'entailles placées périodiquement, symétriquement ou asymétriquement sur la surface du solide formant ou portant la section de mesure (5').

**63.** Dispositif selon la revendication 60 **caractérisé en ce que** le convertisseur de mode est formé de parties séparées supplémentaires qui sont placées sur la surface du solide formant ou portant la section de mesure (5').

**64.** Dispositif selon la revendication 63 **caractérisé en ce que** le convertisseur de mode (34''') est formé d'éléments uniques qui sont fixés à la surface d'un solide formant ou portant la section de mesure (5') dans un intervalle d'une longueur d'onde ($_{RW}$) des ondes de Rayleigh, la direction d'émission (10) de l'onde acoustique de volume vers la surface du solide formant un biais.

**65.** Dispositif selon la revendication 57 **caractérisé en ce que** l'épaisseur de couche d'une couche de liquide (7) à mesurer est limitée sur la section de mesure (5') à une zone qui est plus grande que l'épaisseur de la couche-limite visqueuse et plus petite que la couche de liquide nécessaire à la formation de la fréquence d'amplitude fondamentale d'une onde de compression (KW), de préférence dans une zone au-dessous du quart de la longueur d'onde ($_{KW}$) de l'onde de compression (KW).

**66.** Dispositif selon l'une des revendications 31 à 65 **caractérisé en ce que** l'émetteur et le récepteur forment un composant unique (12) où le composant se trouve alternativement en mode émetteur et en mode récepteur.

## Figur 1a

## Figur 1b

## Figur 1c

Figur 1d

Figur 1e

# Figur 1f

# Figur 1g

# Figur 1h

Figur 1i

Figur 1j

Figur 1k

Figur 1l

Figur 1m

# Figur 2a

**Figur 2b**

# Figur 2c

# Figur 2d

# Figur 2e

# Figur 2f

**Figur 2g**

# Figur 2h

**Figur 2i**

# Figur 3a

# Figur 3b

# Figur 3c

## Figur 3d

# Figur 3e

# Figur 3f

# Figur 4a

# Figur 4b

# Figur 4c

Flüssigkeit
mit Temperaturgradient

$T_U < T_{MS}$

S

$T_{MS}$

E

wärmeleitende
Platte

Widerstandsheizung

# Figur 4d

Flüssigkeit
mit Druckgradient

S

E

Schallverteilung
(Druck)

Ultraschallsender
(z.B. Dickenschwinger)

# Figur 4e

Flüssigkeit

$\lambda_{MS}$

S

E

Membran als
Meßstrecke

Quelle mechanischer
Energie (z.B. Kolben)

# Figur 4f

Flüssigkeit
mit temperaturabhängiger Viskosität

$T_U = T_{MS}$

S

$T_{MS}$

E

wärmeleitende
Platte

Widerstandsheizung

## Figur 4g

Flüssigkeit
mit temperaturabhängiger Viskosität

$T_U = T_{MS}$

S    $T_{MS}$    E

wärmeleitende
Platte

$\Delta T$

Peltier-
element

**Figur 4h**

EP 0 988 538 B1

# Figur 4i

Figur 5a

Figur 5b

Figur 5c

**Figur 5d**

**Figur 5e**

**Figur 5f**

**Figur 5g**

**Figur 5h**

**Figur 5i**

**Figur 5j**

Figur 6

Figur 7

Figur 8

Figur 9

Figur 10

Figur 11

Figur 12a

Figur 12b

Figur 12c

Figur 13

Figur 14a

Figur 14b

Figur 14c

Figur 14d

Figur 14e